(19) Europäisches Patentamt
European Patent Office
Office européen des brevets

(11) EP 4 503 814 A1

(12) EUROPEAN PATENT APPLICATION
published in accordance with Art. 153(4) EPC

(43) Date of publication:
**05.02.2025 Bulletin 2025/06**

(21) Application number: **23796714.6**

(22) Date of filing: **21.04.2023**

(51) International Patent Classification (IPC):
***H04W 72/12*** (2023.01) ***H04W 72/21*** (2023.01)
***H04W 72/23*** (2023.01) ***H04B 7/0404*** (2017.01)
***H04L 5/00*** (2006.01) ***H04L 1/08*** (2006.01)

(52) Cooperative Patent Classification (CPC):
**H04B 7/0404; H04L 1/08; H04L 5/00; H04W 72/04; H04W 72/12; H04W 72/21; H04W 72/23**

(86) International application number:
**PCT/KR2023/005473**

(87) International publication number:
**WO 2023/211067 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 KR 20220052042**

(71) Applicant: **Samsung Electronics Co., Ltd.**
**Suwon-si, Gyeonggi-do 16677 (KR)**

(72) Inventors:
- **LIM, Seongmok**
  **Suwon-si, Gyeonggi-do 16677 (KR)**
- **PARK, Kyoungmin**
  **Suwon-si, Gyeonggi-do 16677 (KR)**
- **ABEBE, Ameha Tsegaye**
  **Suwon-si, Gyeonggi-do 16677 (KR)**
- **JANG, Youngrok**
  **Suwon-si, Gyeonggi-do 16677 (KR)**
- **JI, Hyoungju**
  **Suwon-si, Gyeonggi-do 16677 (KR)**
- **CHOI, Kyungjun**
  **Suwon-si, Gyeonggi-do 16677 (KR)**

(74) Representative: **Nederlandsch Octrooibureau**
**P.O. Box 29720**
**2502 LS The Hague (NL)**

# (54) METHOD AND DEVICE FOR UPLINK SIMULTANEOUS TRANSMISSION WITH MULTI-PANEL IN WIRELESS COMMUNICATION SYSTEM

(57) The present disclosure relates to a 5G or 6G communication system for supporting a higher data transmission rate. The present disclosure relates to a method carried out by a terminal in a wireless communication system, the method comprising the steps of: transmitting, to a base station, terminal capability information including information related to simultaneous transmission with multi-panel (STxMP); receiving an upper layer signal from the base station; checking whether the upper layer signal includes a parameter for supporting the STxMP; if the upper layer signal includes the parameter for supporting the STxMP, checking support for the STxMP based on multi-downlink control information (DCI); receiving, from the base station, first DCI for scheduling a first physical uplink shared channel (PUSCH) from a first control resource set (CORESET) having a CORESET pool index set to 0, and second DCI for scheduling a second PUSCH from a second CORESET having the CORESET pool index set to 1; and, on the basis of the STxMP, carrying out first PUSCH transmission and second PUSCH transmission overlapping at least in a time domain.

EP 4 503 814 A1

FIG. 1

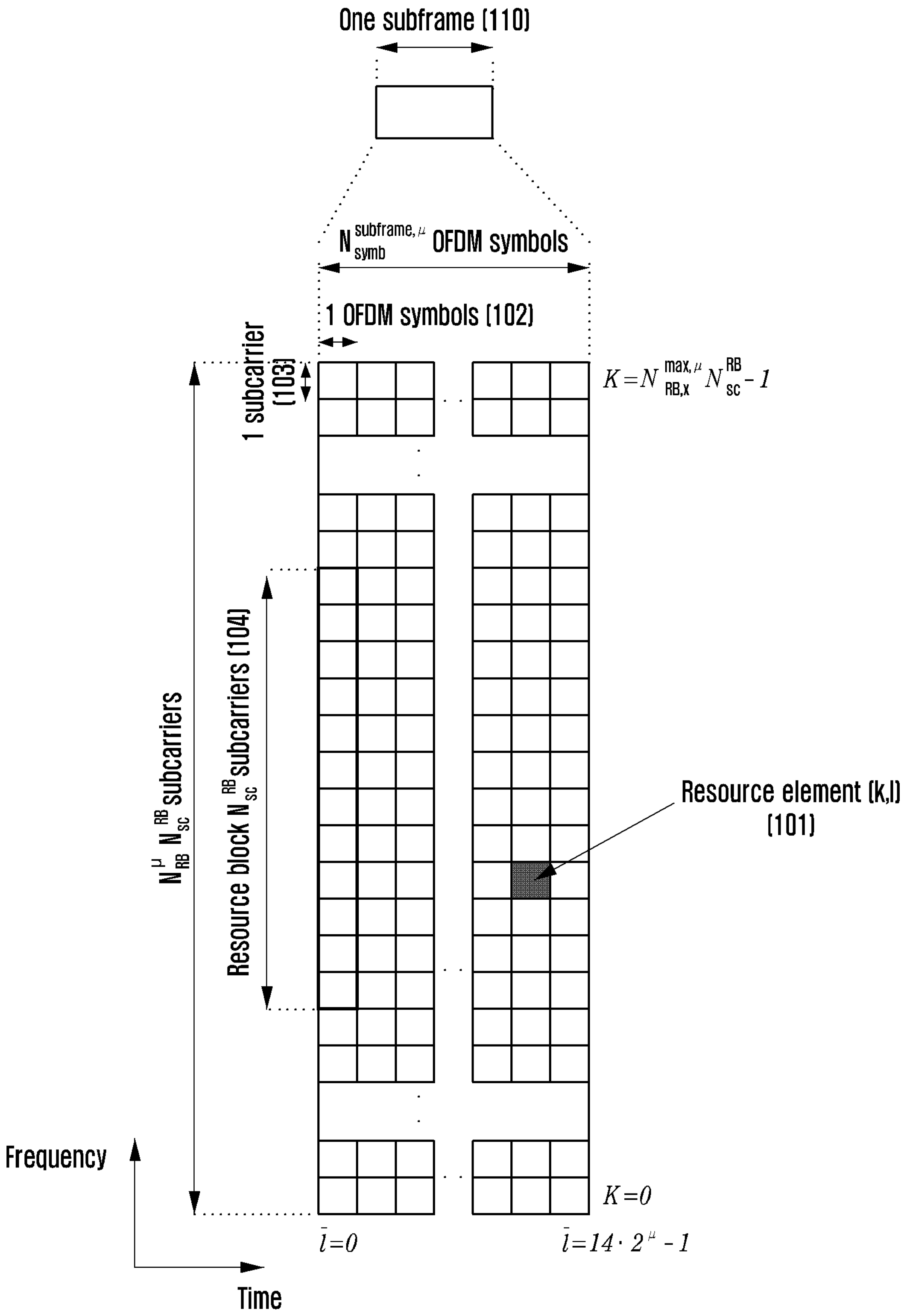
One subframe (110)
N subframe,μ symb OFDM symbols
1 OFDM symbols (102)
1 subcarrier (103)
K=N max,μ RB,x N RB sc - 1
Resource block N RB sc subcarriers (104)
N μ RB N RB sc subcarriers
Resource element (k,l) (101)
Frequency
K=0
l=0
l=14· 2μ - 1
Time

## Description

[Technical Field]

The disclosure relates to an operation of a terminal and a base station in a wireless communication system. Specifically, the disclosure relates to a method for performing simultaneous uplink transmission by using multiple panels in a wireless communication system, and a device capable of performing same.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR = AR + VR + MR) for efficiently supporting augmented reality, virtual reality, etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

Various embodiments of the disclosure are to provide a device and a method enabling effective provision of a service in a mobile communication system. Various embodiments of the disclosure are to provide a method of simultaneously transmitting multiple uplink channels by using multiple panels in a wireless communication system, and a device for performing same.

[Technical Solution]

In order to solve the problem described above, an embodiment of the disclosure provides a method performed by a terminal in a wireless communication system, the method including transmitting, to a base station, terminal capability information including information related to simultaneous transmission with multi-panel (STxMP), receiving a higher layer signal from the base station, identifying whether the higher layer signal includes a parameter for supporting the STxMP, in case that the higher layer signal includes the parameter for supporting the STxMP, identifying support of the STxMP based on multi-downlink control information (DCI), receiving, from the base station, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1, and performing a first PUSCH transmission and a second PUSCH transmission overlapping at least in a time domain, based on the STxMP.

In addition, an embodiment of the disclosure provides a method performed by a base station in a wireless communication system, the method including receiving, from a terminal, terminal capability information including information related to simultaneous transmission with multi-panel (STxMP), generating a higher layer signal including a parameter for supporting the STxMP, based on the terminal capability information, transmitting the higher layer signal to the terminal, determining support of the STxMP based on multi-downlink control information (DCI), transmitting, to the terminal, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1, and performing a first PUSCH transmission and a second PUSCH reception overlapping at least in a time domain, based on the STxMP.

In addition, an embodiment of the disclosure provides a terminal of a wireless communication system, the terminal including a transceiver and a controller, wherein the controller is configured to perform control to transmit, to a base station, terminal capability information including information related to simultaneous transmission with multi-panel (STxMP), receive a higher layer signal from the base station, identify whether the higher layer signal includes a parameter for supporting the STxMP, in case that the higher layer signal includes the parameter for supporting the STxMP, identify support of the STxMP based on multi-downlink control information (DCI), receive, from the base station, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1, and perform a first PUSCH transmission and a second PUSCH transmission overlapping at least in a time domain, based on the STxMP.

In addition, an embodiment of the disclosure provides a base station in a wireless communication system, the base station including a transceiver and a controller, wherein the controller is configured to perform control to receive, from a terminal, terminal capability information including information related to simultaneous transmission with multi-panel (STxMP), generate a higher layer signal including a parameter for supporting the STxMP, based on the terminal capability information, transmit the higher layer signal to the UE, determine support of the STxMP based on multi-downlink control information (DCI), transmit, to the terminal, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1, and perform a first PUSCH transmission and a second PUSCH reception overlapping at least in a time domain, based on the STxMP.

[Advantageous Effects]

According to various embodiments of the disclosure, a device and a method enabling effective provision of a service in a mobile communication system may be provided.

According to various embodiments of the disclosure, a method of simultaneously transmitting multiple uplink channels by using multiple panels in a wireless communication system, and a device for performing same may be provided.

[Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of bandwidth part configuration in a wireless communication system according to an embodiment of the disclosure.

FIG. 4 illustrates an example of control resource set configuration of a downlink control channel in a wireless communication system.

FIG. 5A illustrates a structure of a downlink control channel in a wireless communication system according to an embodiment of the disclosure.

FIG. 5B illustrates, in terms of spans, a case in which a UE may have multiple physical downlink control channel (PDCCH) monitoring occasions inside a slot in a wireless communication system according to an embodiment of the disclosure.

FIG. 6 illustrates an example of a discontinuous reception (DRX) operation in a wireless communication system according to an embodiment of the disclosure.

FIG. 7 illustrates an example of base station beam allocation according to transmission configuration indicator (TCI) state configuration in a wireless communication system according to an embodiment of the disclosure.

FIG. 8 illustrates an example of a method for allocating a TCI state to a PDCCH in a wireless communication system according to an embodiment of the disclosure.

FIG. 9 illustrates a TCI indication medium access control (MAC) control element (CE) signaling structure for a PDCCH demodulation reference signal (DMRS) in a wireless communication system according to an embodiment of the disclosure.

FIG. 10 illustrates an example of beam configuration with regard to a control resource set and a search space in a wireless communication system according to an embodiment of the disclosure.

FIG. 11 illustrates a method in which a base station and a UE transmit/receive data in consideration of a downlink data channel and a rate matching resource in a wireless communication system according to an embodiment of the disclosure.

FIG. 12 illustrates a method in which, upon receiving a downlink control channel, a UE selects a receivable control resource set in consideration of priority in a wireless communication system according to an embodiment of the disclosure.

FIG. 13 illustrates an example of frequency domain resource allocation with regard to a PDSCH in a wireless communication system according to an embodiment of the disclosure.

FIG. 14 illustrates an example of time domain resource allocation with regard to a PDSCH in a wireless communication system according to an embodiment of the disclosure.

FIG. 15 illustrates a process for beam configuration and activation with regard to a PDSCH.

FIG. 16 is a diagram illustrating an example of a MAC CE for activating a spatial relation, based on a physical uplink control channel (PUCCH) resource group in a wireless communication system according to an embodiment of the disclosure;

FIG. 17 illustrates an example of physical uplink shared channel (PUSCH) repeated transmission type B in a wireless communication system according to an embodiment of the disclosure.

FIG. 18 illustrates radio protocol structures of a base station and a UE in single cell, carrier aggregation, and dual connectivity situations in a wireless communication system according to an embodiment of the disclosure.

FIG. 19 is a diagram illustrating an example of an antenna port configuration and resource allocation for cooperative communication in a wireless communication system according to an embodiment of the disclosure;

FIG. 20 is a diagram illustrating a configuration example of downlink control information (DCI) for cooperative communication in a wireless communication system according to an embodiment of the disclosure;

FIG. 21 is a diagram illustrating an enhanced PDSCH TCI state activation/deactivation MAC-CE structure;

FIG. 22 is a diagram illustrating a radio link monitoring (RLM) reference signal (RS) selection process according to an embodiment of the disclosure;

FIG. 23 is a diagram illustrating a MAC-CE structure for joint TCI state activation and indication in a wireless communication system according to an embodiment of the disclosure;

FIG. 24 is a diagram illustrating another MAC-CE structure for joint TCI state activation and indication in a wireless communication system according to an embodiment of the disclosure;
FIG. 25 is a diagram illustrating another MAC-CE structure for joint TCI state activation and indication in a wireless communication system according to an embodiment of the disclosure;
FIG. 26 is a diagram illustrating a MAC-CE structure for separate TCI state activation and indication in a wireless communication system according to an embodiment of the disclosure;
FIG. 27 is a diagram illustrating another MAC-CE structure for separate TCI state activation and indication in a wireless communication system according to an embodiment of the disclosure;
FIG. 28 is a diagram illustrating another MAC-CE structure for separate TCI state activation and indication in a wireless communication system according to an embodiment of the disclosure;
FIG. 29 is a diagram illustrating another MAC-CE structure for separate TCI state activation and indication in a wireless communication system according to an embodiment of the disclosure;
FIG. 30 is a diagram illustrating a MAC-CE structure for joint and separate TCI state activation and indication in a wireless communication system according to an embodiment of the disclosure;
FIG. 31 is a diagram illustrating another MAC-CE structure for joint and separate TCI state activation and indication in a wireless communication system according to an embodiment of the disclosure;
FIG. 32 is a diagram illustrating a beam application time which may be considered when a unified TCI scheme is used in a wireless communication system according to an embodiment of the disclosure;
FIG. 33 is a diagram illustrating a MAC-CE structure for activation and indication of multiple joint TCI states in a wireless communication system according to an embodiment of the disclosure;
FIG. 34 is a diagram illustrating a MAC-CE structure for activation and indication of multiple separate TCI states in a wireless communication system according to an embodiment of the disclosure;
FIG. 35 is a diagram illustrating another MAC-CE structure for activation and indication of multiple separate TCI states in a wireless communication system according to an embodiment of the disclosure;
FIG. 36 illustrates an example of scheduling PUSCHs that are simultaneously transmitted in the uplink through respective panels by using multi-DCI;
FIG. 37 illustrates an operation flowchart of a terminal for supporting mDCI-based STxMP;
FIG. 38 illustrates an operation flowchart of a base station for supporting mDCI-based STxMP;
FIG. 39 illustrates a structure of a UE in a wireless communication system according to an embodiment of the disclosure.
FIG. 40 illustrates a structure of a base station in a wireless communication system according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/$km^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

[NR time-frequency resources]

Hereinafter, a frame structure of a 5G system will be described in more detail with reference to the accompanying drawings.

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1 ms.

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu$=0 (204), and a case in which $\mu$=1 (205). In the case of $\mu$=0 (204), one subframe 201 may include one slot 202, and in the case of $\mu$=1 (205), one subframe 201 may include two slots 203. That is, the number of slots per one subframe $N_{slot}^{sunframe,\mu}$ may differ depending on the subcarrier spacing configuration value $\mu$, and the number of slots per one frame $N_{slot}^{frame,\mu}$ may differ accordingly. $N_{slot}^{sunframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{sunframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, bandwidth part (BWP) configuration in a 5G communication system will be described in detail with reference to the accompanying drawings.

FIG. 3 illustrates an example of bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                         SEQUENCE {
    bwp-Id                          BWP-Id,
    (bandwidth part identifier)
    locationAndBandwidth            INTEGER (1..65536),
    (bandwidth part location)
    subcarrierSpacing               ENUMERATED {n0, n1, n2, n3, n4, n5},
    (subcarrier spacing)
    cyclicPrefix                    ENUMERATED { extended }
    (cyclic prefix)
}
```

Of course, the above example is not limiting, and in addition to the configuration information given above, various parameters related to the bandwidth part may be configured for the UE. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time (TBWP) required during a bandwidth part change are specified in standards, and may be defined given in Table 3 below, for example.

[Table 3]

| μ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |

(continued)

| μ | NR Slot length (ms) | BWP switch delay $T_{BWP}$ (slots) | |
|---|---|---|---|
| | | Type 1[Note 1] | Type 2[Note 1] |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides essential system information necessary for the UE's data channel and control channel transmission/reception. The essential system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through or on a physical downlink control channel (PDCCH). A cyclic redundancy check (CRC) may be attached to the DCI message payload, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information, for example.

[Table 4]

| |
|---|
| - Identifier for DCI formats - [1] bit |
| - Frequency domain resource assignment - $[\lceil \log_2(N_{RB}^{UL,BWP}(N_{RB}^{UL,BWP}+1)/2) \rceil]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information, for example.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| * For resource allocation type 0, $\lceil N_{RB}^{UL,BWP}/P \rceil$ bits |
| * For resource allocation type 1, $\lceil \log_2(N_{RB}^{UL,BWP}(N_{RB}^{UL,BWP}+1)/2) \rceil$ bits |
| - Time domain resource assignment -1, 2, 3, or 4 bits |

(continued)

| |
|---|
| - Virtual resource block (VRB)-to-physical resource block (PRB) mapping - 0 or 1 bit, only for resource allocation type 1.<br>* 0 bit if only resource allocation type 0 is configured;<br>* 1 bit otherwise.<br>- Frequency hopping flag - 0 or 1 bit, only for resource allocation type 1.<br>* 0 bit if only resource allocation type 0 is configured;<br>* 1 bit otherwise.<br>- Modulation and coding scheme - 5 bits<br>- New data indicator - 1 bit<br>- Redundancy version - 2 bits<br>- HARQ process number - 4 bits<br>- 1st downlink assignment index- 1 or 2 bits<br>* 1 bit for semi-static HARQ-ACK codebook;<br>* 2 bits for dynamic HARQ-ACK codebook with single HARQ-ACK codebook.<br>- 2nd downlink assignment index - 0 or 2 bits<br>* 2 bits for dynamic HARQ-ACK codebook with two HARQ-ACK sub-codebooks;<br>* 0 bit otherwise.<br>- TPC command for scheduled PUSCH - 2 bits<br>$\left\lceil \log_2\left(\sum_{k=1}^{L_{\max}}\binom{N_{\text{SRS}}}{k}\right)\right\rceil$<br>- SRS resource indicator - or $\lceil \log_2(N_{\text{SRS}}) \rceil$ bits<br>$\left\lceil \log_2\left(\sum_{k=1}^{L_{\max}}\binom{N_{\text{SRS}}}{k}\right)\right\rceil$<br>* bits for non-codebook based PUSCH transmission;<br>* $\lceil \log_2(N_{\text{SRS}}) \rceil$ bits for codebook based PUSCH transmission.<br>- Precoding information and number of layers - up to 6 bits<br>- Antenna ports - up to 5 bits<br>- SRS request - 2 bits<br>- Channel state information (CSI) request - 0, 1, 2, 3, 4, 5, or 6 bits<br>- Code block group (CBG) transmission information - 0, 2, 4, 6, or 8 bits<br>- Phase tracking reference signal (PTRS)-demodulation reference signal (DDMRS) association - 0 or 2 bits.<br>- beta_offset indicator - 0 or 2 bits<br>- DMRS sequence initialization - 0 or 1 bit |

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

[Table 6]

| |
|---|
| - Identifier for DCI formats - [1] bit<br>- Frequency domain resource assignment - $[\lceil \log_2(N_{\text{RB}}^{\text{DL, BWP}}(N_{\text{RB}}^{\text{DL, BWP}}+1)/2) \rceil]$ bits<br>- Time domain resource assignment - X bits<br>- VRB-to-PRB mapping - 1 bit.<br>- Modulation and coding scheme - 5 bits |

(continued)

| |
|---|
| - New data indicator - 1 bit |
| - Redundancy version - 2 bits |
| - HARQ process number - 4 bits |
| - Downlink assignment index - 2 bits |
| - TPC command for scheduled PUCCH - [2] bits |
| - Pysical uplink control channel (PUCCH) resource indicator - 3 bits |
| - PDSCH-to-HARQ feedback timing indicator - [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

[Table 7]

| |
|---|
| - Carrier indicator - 0 or 3 bits |
| - Identifier for DCI formats - [1] bits |
| - Bandwidth part indicator - 0, 1 or 2 bits |
| - Frequency domain resource assignment |
| * For resource allocation type 0, $\lceil N_{RB}^{DL,BWP} / P \rceil$ bits |
| * For resource allocation type 1, $\lceil \log_2 (N_{RB}^{DL,BWP} (N_{RB}^{DL,BWP} + 1) / 2) \rceil$ bits |
| - Time domain resource assignment -1, 2, 3, or 4 bits |
| - VRB-to-PRB mapping - 0 or 1 bit, only for resource allocation type 1. |
| * 0 bit if only resource allocation type 0 is configured; |
| * 1 bit otherwise. |
| - Physical resource block (PRB) bundling size indicator - 0 or 1 bit |
| - Rate matching indicator - 0, 1, or 2 bits |
| - Zero power (ZP) channel state information (CSI)-reference signal (RS) trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

[PDCCH: CORESET, REG, CCE, and Search Space]

Hereinafter, a downlink control channel in a 5G communication system will be described in more detail with reference to the accompanying drawings.

FIG. 4 illustrates an example of a control resource set (CORESET) used to transmit a downlink control channel in a 5G wireless communication system.

FIG. 4 illustrates an example in which a UE bandwidth part 410 is configured along the frequency axis, and two CORESETs (CORESET #1 401 and CORESET #2 402) are configured within one slot 420 along the time axis. The CORESETs 401 and 402 may be configured in a specific frequency resource 403 within the entire UE bandwidth part 410 along the frequency axis. One or multiple OFDM symbols may be configured along the time axis, and this may be defined as a control resource set duration 404. Referring to the example illustrated in FIG. 4, CORESET #1 401 is configured to have a control resource set duration corresponding to two symbols, and CORESET #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the information may include the following pieces of information: given below.

[Table 8]

```
ConControlResourceSet ::=                    SEQUENCE {
 -- Corresponds to L1 parameter 'CORESET-ID'

 controlResourceSetId                  ControlResourceSetId,
    (control resource set identity)
 frequencyDomainResources              BIT STRING (SIZE (45)),
    (frequency domain resource assignment information)
 duration                              INTEGER (1..maxCoReSetDuration),
    (time domain resource assignment information)
 cce-REG-MappingType                          CHOICE {
    (CCE-to-REG mapping type)
  interleaved                            SEQUENCE {

     reg-BundleSize                        ENUMERATED {n2, n3, n6},
        (REG bundle size)
```

```
        precoderGranularity                    ENUMERATED {sameAsREG-bundle, al
lContiguousRBs},

        interleaverSize                        ENUMERATED {n2, n3, n6}
        (interleaver size)

        shiftIndex                             INTEGER(0..maxNrofPhysicalResourceBl
ocks-1)                              OPTIONAL
       (interleaver shift)
          },
     nonInterleaved                          NULL
    },
    tci-StatesPDCCH                            SEQUENCE(SIZE (1..maxNrofTCI-States
PDCCH)) OF TCI-StateId                   OPTIONAL,
       (QCL configuration information)
    tci-PresentInDCI                     E N U M E R A T E D  { e n a b l e d }

    }
```

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding CORESET.

FIG. 5A illustrates an example of a basic unit of time and frequency resources constituting a downlink control channel available in a 5G system.

According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element (CCE) 504 as illustrated in FIG. 5A, one CCE 504 may include multiple REGs 503. To describe the REG 503 illustrated in FIG. 5A, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5A, that is, the REG 503, may include both REs to which DCI is mapped, and an area to which a reference signal (DMRS 505) for decoding the same is mapped. As in FIG. 5A, three DRMSs 505 may be transmitted inside one REG 503. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spacs. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the same may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set may include the following pieces of information: given in Table 8 below.

[Table 9]

```
SearchSpace ::=                        SEQUENCE {
    -- Identity of the search space. SearchSpaceId = 0 identifies the SearchSpace configured
  via PBCH (MIB) or ServingCellConfigCommon.
    searchSpaceId                          SearchSpaceId,
   (search space identity)
    controlResourceSetId               ControlResourceSetId,
   (control resource set identity)
    monitoringSlotPeriodicityAndOffset         CHOICE {
   (monitoring slot level periodicity)
        sl1                                    NULL,
        sl2                                    INTEGER (0..1),
        sl4                                    INTEGER (0..3),
        sl5                                INTEGER (0..4),
        sl8                                    INTEGER (0..7),
        sl10                                   INTEGER (0..9),
        sl16                                   INTEGER (0..15),
        sl20                                   INTEGER (0..19)
    }
                      OPTIONAL,
   duration (monitoring duration)                  INTEGER (2..2559)
    monitoringSymbolsWithinSlot                     BIT STRING (SIZE (14))
                                   OPTIONAL,
   (monitoring symbols within slot)
    nrofCandidates                         SEQUENCE {
   (number of PDCCH candidates for each aggregation level)
        aggregationLevel1                      ENUMERATED {n0, n1, n2, n3, n4, n5, n6, n8},
        aggregationLevel2                      ENUMERATED {n0, n1, n2, n3, n4, n5, n6, n8},
        aggregationLevel4                      ENUMERATED {n0, n1, n2, n3, n4, n5, n6, n8},
        aggregationLevel8                      ENUMERATED {n0, n1, n2, n3, n4, n5, n6, n8},
        aggregationLevel16                     ENUMERATED {n0, n1, n2, n3, n4, n5, n6, n8}
    },
```

```
searchSpaceType                                CHOICE {
(search space type)
    -- Configures this search space as common search space (CSS) and DCI formats to monitor.
    common                                     SEQUENCE {
(common search space)
    }
    ue-Specific                                SEQUENCE {
(UE-specific search space)
      -- Indicates whether the UE monitors in this USS for DCI formats 0-0 and 1-0 or for formats
0-1 and 1-1.
      formats                                  ENUMERATED {formats0-0-And-1-0, forma
ts0-1-And-1-1},
    ...
}
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space sets. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the example given below is not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the example given below is not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI (RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI (INT-RNTI): used to indicate whether a PDSCH is punctured
- Transmit power control for PUSCH RNTI (TPC-PUSCH-RNTI): used to indicate a power control command regarding a PUSCH

- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given below.

[Table 10]

| DCI format | Usage |
|---|---|
| 0 0 | Scheduling of PUSCH in one cell |
| 0 1 | Scheduling of PUSCH in one cell |
| 1_0 | Scheduling of PDSCH in one cell |
| 1_1 | Scheduling of PDSCH in one cell |
| 2 0 | Notifying a group of UEs of the slot format |
| 2_1 | Notifying a group of UEs of the PRB(s) and OFDM sym bol(s) where UE may assume no transmission is intended for the UE |
| 2 2 | Transmission of TPC commands for PUCCH and PUSCH |
| 2_3 | Transmission of a group of TPC commands for SRS trans missions by one or more UEs |

In 5G, the search space at aggregation level L in connection with CORESET p and search space set s may be expressed by Equation 1 below.

[Equation 1]

$$L \cdot \left\{ \left( Y_{p,n^{\mu}_{s,f}} + \left\lfloor \frac{m_{s,n_{CI}} \cdot N_{CCE,p}}{L \cdot M^{(L)}_{s,max}} \right\rfloor + n_{CI} \right) mod \left\lfloor \frac{N_{CCE,p}}{L} \right\rfloor \right\} + i$$

- $L$: aggregation level
- $n_{CI}$: carrier index
- $N_{CCE,p}$: total number of CCEs existing in control resource set $p$
- $n^{\mu}_{s,f}$ : slot index
- $M^{(L)}_{s,max}$ : number of PDCCH candidates at aggregation level L
- $m_{s,n_{CI}} = 0, \ldots, M^{(L)}_{s,max}$ -1 : PDCCH candidate index at aggregation level L
- $i = 0, ..., L - 1$
- $Y_{p,n^{\mu}_{s,f}} = \left( A_p \cdot Y_{p,n^{\mu}_{s,f}-1} \right) mod\ D$ , $Y_{p,-1} = n_{RNTI} \neq 0$ , $A_p = 39827$ *for pmod3* = 0 , $A_p = 39829$ *for pmod3* = 1 , $A_p = 39839$ *for pmod3* = 2 , $D = 65537$
- $n_{RNTI}$: UE identity

The $Y_{p,n^{\mu}_{s,f}}$ value may correspond to 0 in the case of a common search space.

The $Y_{p,n^{\mu}_{s,f}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ accordingly. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

[PDCCH: span]

The UE may perform UE capability reporting at each subcarrier spacing with regard to a case in which the same has multiple PDCCH monitoring occasions inside a slot, and the concept "span" may be used in this regard. A span refers to consecutive symbols configured such that the UE can monitor the PDCCH inside the slot, and each PDCCH monitoring occasion is inside one span. A span may be expressed by (X,Y) wherein X refers to the minimum number of symbols by which the first symbols of two consecutive spans are spaced apart from each other, and Y refers to the number of consecutive symbols in which a PDCCH can be monitored within one span. Here, a UE may monitor a PDCCH in a range of Y symbols from the first symbol of the span within the span.

FIG. 5B illustrates, in terms of spans, a case in which a UE may have multiple PDCCH monitoring occasions inside a slot in a wireless communication system.

Possible spans are (X,Y) = (7,3), (4,3), (2,2), and the three cases may be indicated by "5-1-00", "5-1-05", and "5-1-10" in FIG. 5B, respectively. As an example, "5-1-00" may describe a case in which there are two spans described by (7,4) inside a slot. The spacing between the first symbols of two spans is described as X=7, a PDCCH monitoring occasion may exist inside a total of Y=3 symbols from the first symbol of each span, and search spaces 1 and 2 may exist inside Y=3 symbols, respectively. As another example, "5-1-05" may describe a case in which there are a total of three spans described by (4,3) inside a slot, and the second and third spans are spaced apart by X'=5 symbols which are larger than X=4.

[PDCCH: UE capability report]

The slot location at which the above-described common search space and the UE-specific search space are positioned is indicated by parameter "monitoringSymbolsWitninSlot" in Table 11-1, and the symbol location inside the slot is indicated as a bitmap through parameter "monitoringSymbolsWithinSlot" in Table 9. Meanwhile, the symbol location inside a slot at which the UE can monitor search spaces may be reported to the base station through the following UE capabilities.

- UE capability 1 (hereinafter referred to as FG 3-1). UE capability 1 may have the following meaning: if there is one monitoring occasion (MO) regarding type 1 and type 3 common search spaces or UE-specific search spaces inside a slot, as in Table 11-1 below, the UE can monitor the corresponding MO when the corresponding MO is located inside the first three symbols inside the slot. This UE capability is a mandatory capability which is to be supported by all UEs that support NR, and whether or not this UE capability is supported is not explicitly reported to the base station.

[Table 11-1]

| Index | Feature group | Components | Field name in TS 38.331 [2] |
|---|---|---|---|
| 3-1 | Basic DL control channel | 1) One configured CORESET per BWP per cell in addition to CORESET0<br><br>- CORESET resource allocation of 6RB bit-map and duration of 1 - 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping | n/a |

(continued)

| Index | Feature group | Components | Field name in TS 38.331 [2] |
|---|---|---|---|
| | | - Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | |

- UE capability 2 (hereinafter referred to as FG 3-2). This UE capability has the following meaning: if there is one monitoring occasion (MO) regarding a common search space or a UE-specific search space inside a slot, as in Table 11-2 below, the UE can monitor the corresponding MO no matter what of the start symbol location of the corresponding MO may be. This UE capability is optionally supported by the UE, and whether or not this UE capability is supported is explicitly reported to the base station.

[Table 11-2]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter referred to as FG 3-5, 3-5a, or 3-5b). This UE capability has the following meaning: if there are multiple monitoring occasions (MO) regarding a common search space or a UE-specific search space inside a slot, as in Table 11-3 below, the pattern of the MO which the UE can monitor is indicated. The above-mentioned pattern includes the spacing X between start symbols of different MOs, and the maximum symbol length Y regarding one MO. The combination of (X,Y) supported by the UE may be one or multiple among {(2,2), (4,3), (7,3)}. This UE capability is optionally supported by the UE, and whether or not this UE capability is supported and the above-mentioned combination of (X,Y) are explicitly reported to the base station.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* 1<br>3-5. *withoutDCI-Gap*<br>3-5a. *withDCI-Gap*<br>} |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for 60kHz<br>with NCP<br>- 11OFDM symbols for 120kHz Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |

(continued)

| Index | Feature group | Components | Field name in TS 38.331 [2] |
|---|---|---|---|
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=l<=13 is generated, where b(l)=1 if symbol l of any slot is part of a monitoring occasion, b(l)=0 otherwise. The first span in the span pattern begins at the smallest l for which b(l)=1. The next span in the span pattern begins at the smallest l not included in the previous span(s) for which b(l)=1. The span duration is max {maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary.<br>For the set of monitoring occasions which are within the same span:<br>• Processing one unicast DCI scheduling DL and one unicast DCI scheduling UL per scheduled CC across this set of monitoring occasions for FDD<br>• Processing one unicast DCI scheduling DL and two unicast DCI scheduling UL per scheduled CC across this set of monitoring occasions for TDD<br>• Processing two unicast DCI scheduling DL and one unicast DCI scheduling UL per scheduled CC across this set of monitoring occasions for TDD<br>The number of different start symbol indices of spans for all PDCCH monitoring occasions per slot, including PDCCH monitoring occasions of FG-3-1, is no more than floor(14/X) (X is minimum among values reported by UE).<br>The number of different start symbol indices of PDCCH monitoring occasions per slot including PDCCH monitoring occasions of FG-3-1, is no more than 7. | |

(continued)

| Index | Feature group | Components | Field name in TS 38.331 [2] |
|---|---|---|---|
| | | The number of different start symbol indices of PDCCH monitoring occasions per half-slot including PDCCH monitoring occasions of FG-3-1 is no more than 4 in SCell. | |

The UE may report whether the above-described UE capability 2 and/or UE capability 3 are supported and relevant parameters to the base station. The base station may allocate time-domain resources to the common search space and the UE-specific search space, based on the UE capability report. During the resource allocation, the base station may ensure that the MO is not positioned not at a location at which the UE cannot monitor the same.

[PDCCH: BD/CCE limit]

If there are multiple search space sets configured for a UE, the following conditions may be considered in connection with a method for determining a search space set to be monitored by the UE.

If the value of "monitoringCapabilityConfig-r16" (upper layer signaling) has been configured to be "r15monitoringcapability" for the UE, the UE defines maximum values regarding the number of PDCCH candidates that can be monitored and the number of CCEs constituting the entire search space (as used herein, the entire search space refers to the entire CCE set corresponding to a union domain of multiple search space sets) with regard to each slot. If the value of "monitoringCapabilityConfig-r16" has been configured to be "r16monitoringcapability", the UE defines maximum values regarding the number of PDCCH candidates that can be monitored and the number of CCEs constituting the entire search space (as used herein, the entire search space refers to the entire CCE set corresponding to a union domain of multiple search space sets) with regard to each span.

[Condition 1: maximum number of PDCCH candidates limited]

According to the above-mentioned upper layer signaling configuration value, the maximum number $M^{\mu}$ of PDCCH candidates that the UE can monitor may follow Table 12-1 given below if the same is defined with reference to a slot in a cell configured to have a subcarrier spacing of $15.2^{\mu}$ kHz, and may follow Table 12-2 given below if the same is defined with reference to a span.

[Table 12-1]

| $\mu$ | **Maximum number of PDCCH candidates per slot and per serving cell ($M^{\mu}$)** |
|---|---|
| 0 | 44 |
| 1 | 36 |
| 2 | 22 |
| 3 | 20 |

[Table 12-2]

| | **Maximum number $M^{\mu}$ of monitored PDCCH candidates per span for combination (X,Y) and per serving cell** | | |
|---|---|---|---|
| $\mu$ | (2,2) | (4,3) | (7,3) |
| 0 | 14 | 28 | 44 |
| 1 | 12 | 24 | 36 |

[Condition 2: maximum number of CCEs limited]

According to the above-mentioned upper layer signaling configuration value, the maximum number $C^{\mu}$ of CCEs constituting the entire search space (as used herein, the entire search space refers to the entire CCE set corresponding to a union domain of multiple search space sets) may follow Table 12-3 given below if the same is defined with reference to a slot in a cell configured to have a subcarrier spacing of $15 \cdot 2^{\mu}$ kHz, and may follow Table 12-4 given below if the same is defined with reference to a span.

[Table 12-3]

| $\mu$ | **Maximum number of non-overlapped CCEs per slot and per serving cell ($C^{\mu}$)** |
|---|---|
| 0 | 56 |
| 1 | 56 |
| 2 | 48 |
| 3 | 32 |

[Table 12-4]

| | **Maximum number $C^{\mu}$ of non-overlapped CCEs per span for combination (X,Y) and per serving cell** | | |
|---|---|---|---|
| $\mu$ | (2,2) | (4,3) | (7,3) |
| 0 | 18 | 36 | 56 |
| 1 | 18 | 36 | 56 |

For the sake of descriptive convenience, a situation satisfying both conditions 1 and 2 above at a specific timepoint may be defined as "condition A". Therefore, the description that condition A is not satisfied may mean that at least one of conditions 1 and 2 above is not satisfied.

[PDCCH: Overbooking]

According to the configuration of search space sets of the base station, a case in which condition A is not satisfied may occur at a specific timepoint. If condition A is not satisfied at a specific timepoint, the UE may select and monitor only some of search space sets configured to satisfy condition A at the corresponding timepoint, and the base station may transmit a PDCCH to the selected search space set.

A method for selecting some search spaces from all configured search space sets may follow methods given below.

If condition A regarding a PDCCH fails to be satisfied at a specific timepoint (slot), the UE (or the base station) may preferentially select a search space set having a search space type configured as a common search space, among search space sets existing at the corresponding timepoint, over a search space set configured as a UE-specific search space.

If all search space sets configured as common search spaces have been selected (that is, if condition A is satisfied even after all search spaces configured as common search spaces have been selected), the UE (or the bae station) may select search space sets configured as UE-specific search spaces. If there are multiple search space sets configured as UE-specific search spaces, a search space set having a lower search space set index may have a higher priority. UE-specific search space sets may be selected as long as condition A is satisfied, in consideration of the priority.

[DRX]

FIG. 6 illustrates discontinuous reception (DRX).

DRX refers to an operation in which a UE currently using a service discontinuously receives data in an RRC-connected state in which a radio link is configured between the base station and the UE. If the DRX is applied, the UE may turn on a receiver at a specific timepoint so as to monitor a control channel, and may turn off the receiver if there is no data received for a predetermined period of time, thereby reducing power consumed by the UE. The DRX operation may be controlled by a MAC layer device, based on various parameters and timers.

Referring to FIG. 6, the active time 605 refers to a time during which the UE wakes up at each DRX cycle and monitors the PDCCH. The active timer 605 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, ra-ContentionResolutionTimer, and the like are timers having values configured by the base station, and have functions which cause the UE to monitor the PDCCH in a situation in which a predetermined condition is satisfied.

drx-onDurationTimer 615 is a parameter for configuring the minimum time during which the UE is awake at the DRX cycle. drx-InactivityTimer 620 is a parameter for configuring a time during which the UE is additionally awake upon receiving (630) a PDCCH indicating new uplink transmission or downlink transmission. drx-RetransmissionTimerDL is a parameter for configuring the maximum time during which the UE is awake in order to receive downlink retransmission in a downlink HARQ procedure. drx-RetransmissionTimerUL is a parameter for configuring the maximum time during which the UE is awake in order to receive an uplink retransmission grant in an uplink HARQ procedure. drx-onDurationTimer, drx-InactivityTimer, drx-RetransmissionTimerDL, and drx-RetransmissionTimerUL may be configured as, for example, time, the number of subframes, the number of slots, and the like. ra-ContentionResolutionTimer is a parameter for monitoring the PDCCH in a random access procedure.

inActive time 610 refers to a time configured such that the PDCCH is not monitored during the DRX operation or a time configured such that the PDCCH is not received, and the inActive time 610 may be obtained by subtracting the active timer 605 from the entire time during which the DRX operation is performed. If the UE does not monitor the PDCCH during the active time 605, the UE may enter a sleep or inActive state, thereby reducing power consumption.

The DRX cycle refers to the cycle at which the UE wakes up and monitors the PDCCH. That is, the DRX cycle refers to the time interval between when the UE monitors a PDCCH and when the next PDCCH is monitored, or the cycle at which on-duration occurs. There are two kinds of DRX cycles: a short DRX cycle and a long DRX cycle. The short DRX cycle may be optionally applied.

The long DRX cycle 625 is the longer cycle between two DRX cycles configured for the UE. While operating with long DRX, the UE restarts the drx-onDurationTimer 615 at a timepoint at which the long DRX cycle 625 has elapsed from the start point (for example, start symbol) of the drx-onDurationTimer 615. If operating at the long DRX cycle 625, the UE may start the drx-onDurationTimer 615 in a slot after drx-SlotOffset in a subframe satisfying Equation 2 below. Here, drx-SlotOffset refers to a delay before the drx-onDurationTimer 615 is started. The drx-SlotOffset may be configured, for example, as time, the number of slots, or the like.

[Equation 2]

$$[(\text{SFN X } 10) + \text{subframe number}]\ \text{modulo}(\text{drx-LongCycle}) = \text{drx-StartOffset}$$

wherein drx-LongCycleStartOffset may be used to define the long DRX cycle 625, and drx-StartOffset may be used to define a subframe to start the long DRX cycle 625. drx-LongCycleStartOffset may be configured as, for example, time, the number of subframes, the number of slots, or the like.

[QCL, TCI state]

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 13 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 10 below.

[Table 13]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 14 below. Referring to Table 14, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) that each TCI state may include the serving cell index and the BWP index of the reference RS indicated by the corresponding QCL information, the type and ID of the reference BS, and a QCL type as in Table 13 above.

[Table 14]

```
TCI-State ::=                          SEQUENCE {
    tci-StateId                            TCI-StateId,
    (ID of corresponding TCI state)
    qcl-Type1                              QCL-Info,
    (QCL information of first refernece RS of RS (target RS) referring to corresponding TCI
state ID)
    qcl-Type2                              QCL-Info                    OPTIONAL,    -
- Need R
    (QCL information of second refernece RS of RS (target RS) referring to corresponding
TCI state ID)
    ...
}

QCL-Info ::=                           SEQUENCE {
    cell                               ServCellIndex              OPTIONAL,    --
Need R
    (serving cell index of reference RS indicated by corresponding QCL information)
    bwp-Id                                 BWP-Id                      OPTIONAL,    --
Cond CSI-RS-Indicated
    (BWP index of reference RS indicated by corresponding QCL information)
    referenceSignal                        CHOICE {
        csi-rs                                 NZP-CSI-RS-ResourceId,
        ssb                                    SSB-Index
        (one of CSI-RS ID or SSB ID indicated by corresponding QCL information)
    },
    qcl-Type                               ENUMERATED {typeA, typeB, typeC, typeD},
    ...
}
```

FIG. 7 illustrates an example of base station beam allocation according to TCI state configuration.

Referring to FIG. 7, the base station may transfer information regarding N different beams to the UE through N different TCI states. For example, in the case of N=3 as in FIG. 7, the base station may configure qcl-Type2 parameters included in three TCI states 700, 705, and 710 in QCL type D while being associated with CSI-RSs or SSBs corresponding to different beams, thereby notifying that antenna ports referring to the different TCI states 700, 705, and 710 are associated with different spatial Rx parameters (that is, different beams).

Tables 15-1 to 15-5 below enumerate valid TCI state configurations according to the target antenna port type.

Table 15-1 enumerates valid TCI state configurations when the target antenna port is a CSI-RS for tracking (TRS). The TRS refers to an NZP CSI-RS which has no repetition parameter configured therefor, and trs-Info of which is configured as "true", among CRI-RSs. In Table 15-1, configuration no. 3 may be used for an aperiodic TRS.

[Table 15-1] Valid TCI state configurations when the target antenna port is a CSI-RS for tracking (TRS)

| Valid TCI state Configuration | DL RS 1 | qcl-Type1 | DL RS 2 (If configured) | qcl-Type2 (If configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 enumerates valid TCI state configurations when the target antenna port is a CSI-RS for CSI. The CSI-RS for CSI may refer to an NZP CSI-RS which has no parameter indicating repetition (for example, repetition parameter) configured therefor, and trs-Info of which is not configured as "true", among CRI-RSs.

[Table 15-2] Valid TCI state configurations when the target antenna port is a CSI-RS for CSI

| Valid TCI state Configuration | DL RS 1 | qcl-Type1 | DL RS 2 (If configured) | qcl-Type2 (If configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 15-3 enumerates valid TCI state configurations when the target antenna port is a CSI-RS for beam management (BM) (which has the same meaning as CSI-RS for L1 RSRP reporting). The CSI-RS for BM refers to an NZP CSI-RS which has a repetition parameter configured to have a value of "on" or "off", and trs-Info of which is not configured as "true", among CRI-RSs.

[Table 15-3] Valid TCI state configurations when the target antenna port is a CSI-RS for BM (for L1 RSRP reporting)

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 15-4 enumerates valid TCI state configurations when the target antenna port is a PDCCH DMRS.

[Table 15-4] Valid TCI state configurations when the target antenna port is a PDCCH DMRS

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 15-5 enumerates valid TCI state configurations when the target antenna port is a PDSCH DMRS.

[Table 15-5] Valid TCI state configurations when the target antenna port is a PDSCH DMRS

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS | QCL-TypeD |
| 2 | TRS | QCL-TypeA | CSI-RS (BM) | QCL-TypeD |

(continued)

| Valid TCI state Configuration | DL RS 1 | qcl-Type1 | DL RS 2 (If configured) | qcl-Type2 (If configured) |
|---|---|---|---|---|
| 3 | CSI-RS (CSI) | QCL-TypeA | CSI-RS (CSI) | QCL-TypeD |

According to a representative QCL configuration method based on Tables 15-1 to 15-5 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the UE’s receiving operation by associating statistical characteristics that can be measured from the SSB and TRS with respective antenna ports.

[PDCCH: regarding TCI state]

Specific TCI state combinations applicable to a PDCCH DMRS antenna port may be given in Table 16 below. The fourth row in Table 16 corresponds to a combination assumed by the UE before RRC configuration, and no configuration is possible after the RRC.

[Table 16]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

FIG. 8 illustrates an example of a method for allocating a TCI state to a PDCCH in a wireless communication system according to an embodiment of the disclosure

In NR, a hierarchical signaling method as illustrated in FIG. 8 is supported for dynamic allocation regarding a PDCCH beam. Referring to FIG. 8, the base station may configure N TCI states 805, 810, ..., 820 for the UE through RRC signaling 800, and may configure some of the states as TCI states for a CORESET (825). The base station may then indicate one of the TCI states 830, 835, and 840 for the CORESET to the UE through MAC control element (CE) signaling (845). The UE may then receive a PDCCH, based on beam information included in the TCI state indicated by the MAC CE signaling.

FIG. 9 illustrates a TCI indication MAC CE signaling structure for the PDCCH DMRS.

Referring to FIG. 9, the TCI indication MAC CE signaling for the PDCCH DMRS may be configured by 2 bytes (16 bits), and include a 5-bit serving cell ID 915, a 4-bit CORESET ID 920, and a 7-bit TCI state ID 925.

FIG. 10 illustrates an example of beam configuration with regard to a control resource set (CORESET) and a search space according to the above description.

Referring to FIG. 10, the base station may indicate one of TCI state lists included in CORESET 1000 configuration through MAC CE signaling (1005). Until a different TCI state is indicated for the corresponding CORESET through different MAC CE signaling, the UE may consider that identical QCL information (beam #1) 1005 is all applied to one or more search spaces 1010, 1015, and 1020 connected to the CORESET. The above-described PDCCH beam allocation method may have a problem in that it is difficult to indicate a beam change faster than MAC CE signaling delay, and the same beam is unilaterally applied to each CORESET regardless of search space characteristics, thereby making flexible PDCCH beam operation difficult. Following embodiments of the disclosure provide more flexible PDCCH beam configuration and operation methods. Although multiple distinctive examples will be provided for convenience of description of embodiments of the disclosure, they are not mutually exclusive, and can be combined and applied appropriately for each situation.

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. Based on the activation command regarding the TCI state received through the MAC CE, the UE may correctly receive the DMRS of the corresponding CORESET, based on QCL information in the activated TCI state.

With regard to a CORESET having a configured index of 0 (CORESET #0), if the UE has failed to receive a MAC CE activation command regarding the TCI state of CORESET #0, the UE may assume that the DMRS transmitted in CORESET #0 has been QCL-ed with a SS/PBCH block identified in the initial access process, or in a non-contention-based random access process not triggered by a PDCCH command.

With regard to a CORESET having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

[Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

## Rate matching operation

- The base station may transmit channel A after mapping the same only to remaining resource domains other than resource C (area overlapping resource B) among the entire resource A which is to be used to transmit symbol sequence A to the UE. For example, if symbol sequence A is configured as f symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource# 1, resource#2, resource#4} other than {resource#3 } (corresponding to resource C) among resource A. Consequently, the base station may transmit symbol sequence {symbol# 1, symbol#2, symbol#3} after mapping the same to {resource# 1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may receive symbol sequence A based on an assumption that the same has been successively mapped to remaining resources {resource# 1, resource#2, resource#4} other than {resource#3} (corresponding to resource C) among resource A. Consequently, the UE may perform a series of following receiving operations based on an assumption that symbol sequence {symbol# 1, symbol#2, symbol#3} has been transmitted after being mapped to {resource# 1, resource#2, resource#4}, respectively.

## Puncturing operation

If there is resource C (region overlapping resource B) among the entire resource A which is to be used to transmit symbol sequence A to the UE, the base station may map symbol sequence A to the entire resource A, but may not perform transmission in the resource area corresponding to resource C, and may perform transmission with regard to only the remaining resource area other than resource C among resource A. For example, if symbol sequence A is configured as {symbol#1, symbol#2, symbol#3, symbol4}, if resource A is {resource#1, resource#2, resource#3, resource#4}, and if resource B is {resource#3, resource#5}, the UE may assume that symbol sequence A {symbol#1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol# 1, symbol#2, symbol#4} corresponding to remaining resources {resource#!, resource#2, resource#4} other than {resource#3} (corresponding to resource C) among resource A has been mapped and transmitted, the UE may receive the same. Consequently, the base station may transmit symbol sequence {symbol#1, symbol#2, symbol#4} after mapping the same to {resource# 1, resource#2, resource#4}, respectively.

The UE may assess resource A and resource B from scheduling information regarding symbol sequence A from the base station, thereby assessing resource C (region in which resource A and resource B overlap). The UE may receive symbol sequence A, based on an assumption that symbol sequence A has been mapped to the entire resource A but transmitted only in the remaining area other than resource C among the resource area A. For example, if symbol sequence A is configured as f symbol#1, symbol#2, symbol#3, symbol4}, if resource A is {resourced#1, resource#2, resource#3, resource#4}, and if resource B is {resource#3, resource#5}, the UE may assume that symbol sequence A {symbol# 1, symbol#2, symbol#3, symbol4} is mapped to resource A {resource#1, resource#2, resource#3, resource#4}, respectively, but {symbol#3} mapped to {resource#3} (corresponding to resource C) is not transmitted, and based on the assumption that symbol sequence {symbol# 1, symbol#2, symbol#4} corresponding to remaining resources {resource# 1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol# 1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

FIG. 11 illustrates a method in which a base station and a UE transmit/receive data in consideration of a downlink data channel and a rate matching resource.

FIG. 11 illustrates a downlink data channel (PDSCH) 1101 and a rate matching resource 1102. The base station may configure one or multiple rate matching resources 1102 for the UE through upper layer signaling (for example, RRC signaling). Rate matching resource 1102 configuration information may include time-domain resource allocation information 1103, frequency-domain resource allocation information 1104, and periodicity information 1105. A bitmap corresponding to the frequency-domain resource allocation information 1104 will hereinafter be referred to as "first bitmap", a bitmap corresponding to the time-domain resource allocation information 1103 will be referred to as "second bitmap", and a bitmap corresponding to the periodicity information 1105 will be referred to as "third bitmap". If all or some of time and frequency resources of the scheduled PDSCH 1101 overlap a configured rate matching resource 602, the base station may rate-match and transmit the PDSCH 1102 in a rate matching resource 1101 part, and the UE may perform reception and decoding after assuming that the PDSCH 1102 has been rate-matched in a rate matching resource 1101 part.

The base station may dynamically notify the UE, through DCI, of whether the PDSCH will be rate-matched in the configured rate matching resource part through an additional configuration (for example, corresponding to "rate matching indicator" inside DCI format described above). Specifically, the base station may select some from the configured rate matching resources and group them into a rate matching resource group, and may indicate, to the UE, whether the PDSCH is rate-matched with regard to each rate matching resource group through DCI by using a bitmap type. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}, and may indicate, to the UE, whether rate matching occurs in RMG#1 and RMG#2, respectively, through a bitmap by using two bits inside the DCI field. For example, in a case where rate matching is to be conducted, the base station imay ndicate this case by "1", and in a case where rate matching is not to be conducted, the base station may indicate this case by "0".

5G supports granularity of "RB symbol level" and "RE level" as a method for configuring the above-described rate matching resources for a UE. More specifically, the following configuration method may be followed.

**RB symbol level**

The UE may have a maximum of four RateMatchPatterns configured per each bandwidth part through upper layer signaling, and one RateMatchPattern may include the following contents.

- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

RE level

The UE may have the following contents configured through upper layer signaling.

- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.

- may include configuration information regarding a resource set corresponding to one or multiple zero power (ZP) CSI-RSs inside a bandwidth part.

[Regarding LTE CRS rate match]

Next, a rate matching process regarding the above-mentioned LTE CRS will be described in detail. In NR, for coexistence between long term evolution (LTE) and new RAT (NR) (LTE-NR coexistence), the pattern of cell-specific reference signal (CRS) of LTE may be configured for an NR UE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16, crs-RateMatch-PerCORESETPoolIndex-r16, and the like.

Rel-15 NR provides a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. That is, the CRS pattern regarding TRP1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 17 shows a ServingCellConfig IE including the CRS patterns, and Table 18 shows a RateMatchPatternLTE-CRS IE including at least one parameter regarding CRS patterns.

[Table 17]

```
ServingCellConfig ::=                    SEQUENCE {
    tdd-UL-DL-ConfigurationDedicated                          TDD-UL-DL-ConfigDedicated
OPTIONAL,    -- Cond TDD
    initialDownlinkBWP                                        BWP-DownlinkDedicated
OPTIONAL,    -- Need M
    downlinkBWP-ToReleaseList           SEQUENCE (SIZE (1..maxNrofBWPs)) OF BWP-Id
OPTIONAL,    -- Need N
    downlinkBWP-ToAddModList            SEQUENCE (SIZE (1..maxNrofBWPs)) OF BWP-
Downlink                        OPTIONAL,    -- Need N
    firstActiveDownlinkBWP-Id                                 BWP-Id
OPTIONAL,    -- Cond SyncAndCellAdd
    bwp-InactivityTimer                 ENUMERATED {ms2, ms3, ms4, ms5, ms6,
ms8, ms10, ms20, ms30,

ms40,ms50, ms60, ms80,ms100, ms200,ms300, ms500,

ms750, ms1280, ms1920, ms2560, spare10, spare9, spare8,

spare7, spare6, spare5, spare4, spare3, spare2, spare1 }    OPTIONAL,    --Need R
    defaultDownlinkBWP-Id                                     BWP-Id
OPTIONAL,    -- Need S
    uplinkConfig                                              UplinkConfig
OPTIONAL,    -- Need M
    supplementaryUplink                                       UplinkConfig
OPTIONAL,    -- Need M
    pdcch-ServingCellConfig             SetupRelease { PDCCH-ServingCellConfig }
OPTIONAL,    -- Need M
    pdsch-ServingCellConfig             SetupRelease { PDSCH-ServingCellConfig }
OPTIONAL,    -- Need M
    csi-MeasConfig                      SetupRelease { CSI-MeasConfig }
OPTIONAL,    -- Need M
    sCellDeactivationTimer              ENUMERATED {ms20, ms40, ms80, ms160,
ms200, ms240,
                                                              ms320, ms400,
ms480, ms520, ms640, ms720,
                                                              ms840, ms1280,
spare2,spare1}                  OPTIONAL,    -- Cond ServingCellWithoutPUCCH
    crossCarrierSchedulingConfig                              CrossCarrierSchedulingConfig
OPTIONAL,    -- Need M
    tag-Id                                                TAG-Id,
    dummy                                                     ENUMERATED {enabled}
OPTIONAL,    -- Need R
    pathlossReferenceLinking            ENUMERATED {spCell, sCell}
OPTIONAL,    -- Cond SCellOnly
    servingCellMO                                             MeasObjectId
OPTIONAL,    -- Cond MeasObject
    ...,
    [[
```

```
    lte-CRS-ToMatchAround                    SetupRelease { RateMatchPatternLTE-CRS }
OPTIONAL,    -- Need M
    rateMatchPatternToAddModList                                       SEQUENCE (SIZE
(1..maxNrofRateMatchPatterns)) OF RateMatchPattern        OPTIONAL,    -- Need N
    rateMatchPatternToReleaseList                                      SEQUENCE (SIZE
(1..maxNrofRateMatchPatterns)) OF RateMatchPatternId      OPTIONAL,    -- Need N
    downlinkChannelBW-PerSCS-List            SEQUENCE (SIZE (1..maxSCSs)) OF SCS-
SpecificCarrier                      OPTIONAL      -- Need S
    ]],
    [[
    supplementaryUplinkRelease                                         ENUMERATED {true}
OPTIONAL,    -- Need N
    tdd-UL-DL-ConfigurationDedicated-IAB-MT-r16        TDD-UL-DL-ConfigDedicated-IAB-MT-r16
OPTIONAL,    -- Cond TDD_IAB
    dormantBWP-Config-r16                    SetupRelease { DormantBWP-Config-r16 }
OPTIONAL,    -- Need M
    ca-SlotOffset-r16                        CHOICE {
        refSCS15kHz                              INTEGER (-2..2),
        refSCS30KHz                              INTEGER (-5..5),
        refSCS60KHz                              INTEGER (-10..10),
        refSCS120KHz                             INTEGER (-20..20)
    }
OPTIONAL,    -- Cond AsyncCA
    channelAccessConfig-r16                  SetupRelease { ChannelAccessConfig-r16
}                                    OPTIONAL,    -- Need M
    intraCellGuardBandsDL-List-r16           SEQUENCE (SIZE (1..maxSCSs)) OF
IntraCellGuardBandsPerSCS-r16                OPTIONAL,    -- Need S
    intraCellGuardBandsUL-List-r16           SEQUENCE (SIZE (1..maxSCSs)) OF
IntraCellGuardBandsPerSCS-r16                OPTIONAL,    -- Need S
    csi-RS-ValidationWith-DCI-r16                                      ENUMERATED {enabled}
OPTIONAL,    -- Need R
    lte-CRS-PatternList1-r16                 SetupRelease { LTE-CRS-PatternList-r16
}                                    OPTIONAL,    -- Need M
    lte-CRS-PatternList2-r16                 SetupRelease { LTE-CRS-PatternList-
r16 }                                OPTIONAL,    -- Need M
    crs-RateMatch-PerCORESETPoolIndex-r16                              ENUMERATED {enabled}
OPTIONAL,    -- Need R
    enableTwoDefaultTCI-States-r16                                     ENUMERATED {enabled}
OPTIONAL,    -- Need R
    enableDefaultTCI-StatePerCoresetPoolIndex-r16                      ENUMERATED {enabled}
OPTIONAL,    -- Need R
    enableBeamSwitchTiming-r16                                         ENUMERATED {true}
OPTIONAL,    -- Need R
    cbg-TxDiffTBsProcessingType1-r16                                   ENUMERATED {enabled}
OPTIONAL,    -- Need R
    cbg-TxDiffTBsProcessingType2-r16                                   ENUMERATED {enabled}
OPTIONAL     -- Need R
    ]]
}
```

[Table 18]

– *RateMatchPatternLTE-CRS*

The IE *RateMatchPatternLTE-CRS* is used to configure a pattern to rate match around LTE CRS. See TS 38.214 [19], clause 5.1.4.2.

***RateMatchPatternLTE-CRS* information element**

```
-- ASN1START
-- TAG-RATEMATCHPATTERNLTE-CRS-START

RateMatchPatternLTE-CRS ::=                SEQUENCE {
    carrierFreqDL                                INTEGER (0..16383),
    carrierBandwidthDL                           ENUMERATED {n6, n15, n25, n50, n75, n100,
spare2, spare1},
    mbsfn-SubframeConfigList                     EUTRA-MBSFN-SubframeConfigList
OPTIONAL,    -- Need M
    nrofCRS-Ports                                ENUMERATED {n1, n2, n4},
    v-Shift                                      ENUMERATED {n0, n1, n2, n3, n4,
n5}
}

LTE-CRS-PatternList-r16 ::=                SEQUENCE (SIZE (1..maxLTE-CRS-Patterns-r16)) OF
RateMatchPatternLTE-CRS

-- TAG-RATEMATCHPATTERNLTE-CRS-STOP
-- ASN1STOP
```

| ***RateMatchPatternLTE-CRS* field descriptions** |
|---|
| ***carrierBandwidthDL***<br>BW of the LTE carrier in number of PRBs (see TS 38.214 [19], clause 5.1.4.2). |
| ***carrierFreqDL***<br>Center of the LTE carrier (see TS 38.214 [19], clause 5.1.4.2). |
| ***mbsfn-SubframeConfigList***<br>LTE MBSFN subframe configuration (see TS 38.214 [19], clause 5.1.4.2). |
| ***nrofCRS-Ports***<br>Number of LTE CRS antenna port to rate-match around (see TS 38.214 [19], clause 5.1.4.2). |
| ***v-Shift***<br>Shifting value v-shift in LTE to rate match around LTE CRS (see TS 38.214 [19], clause 5.1.4.2). |

[PDCCH: regarding QCL prioritization rule]

Hereinafter, operations for determining QCL priority regarding a PDCCH will be described in detail.

If multiple control resource sets which operate according to carrier aggregation inside a single cell or band and which exist inside a single or multiple in-cell activated bandwidth parts overlap temporally while having identical or different QCL-TypeD characteristics in a specific PDCCH monitoring occasion, the UE may select a specific control resource set according to a QCL priority determining operation and may monitor control resource sets having the same QCL-TypeD characteristics as the corresponding control resource set. That is, if multiple control resource sets overlap temporally, only one QCL-TypeD characteristic can be received. The QCL priority may be determined by the following criteria.

- Criterion 1: A control resource set connected to a common search space having the lowest index inside a cell corresponding to the lowest index among cells including a common search space
- Criterion 2: A control resource set connected to a UE-specific search space having the lowest index inside a cell corresponding to the lowest index among cells including a UE-specific search space

As described above, if one criterion among the criteria is not satisfied, the next criterion may be applied. For example, if control resource sets overlap temporally in a specific PDCCH monitoring occasion, and if all control resource sets are not connected to a common search space but connected to a UE-specific search space (for example, if criterion 1 is not satisfied), the UE may omit application of criterion 1 and apply criterion 2.

If selecting control resource set according to the above-mentioned criteria, the UE may additionally consider the two aspects with regard to QCL information configured for the control resource set. Firstly, if control resource set 1 has CSI-RS 1 as a reference signal having a relation of QCL-TypeD, if this CSI-RS 1 has a relation of QCL-TypeD with reference signal SSB 1, and if another control resource set 2 has a relation of QCL-TypeD with reference signal SSB 1, the UE may consider that the two control resource sets 1 and 2 have different QCL-TypeD characteristics. Secondly, if control resource set 1 has CSI-RS 1 configured for cell 1 as a reference signal having a relation of QCL-TypeD, if this CSI-RS 1 has a relation of QCL-TypeD with reference signal SSB 1, if control resource set 2 has a relation of QCL-TypeD with reference signal CSI-RS 2 configured for cell 2, and if this CSI-RS 2 has a relation of QCL-TypeD with the same reference signal SSB 1, the UE may consider that the two control resource sets have the same QCL-TypeD characteristics.

FIG. 12 illustrates a method in which, upon receiving a downlink control channel, a UE selects a receivable control resource set in consideration of priority in a wireless communication system according to an embodiment of the disclosure. As an example, the UE may be configured to receive multiple control resource sets overlapping temporally in a specific PDCCH monitoring occasion 1210, and such multiple control resource sets may be connected to a common search space or a UE-specific search space with regard to multiple cells. In the corresponding PDCCH monitoring occasion, control resource set no. 1 1215 connected to common search space no. 1 may exist in bandwidth part no. 1 1200 of cell no. 1, and control resource set no. 1 1220 connected to common search space no. 1 and control resource set no. 2 1225 connected to UE-specific search space no. 2 may exist in bandwidth part no. 1 1205 of cell no. 2. The control resource sets 1215 and 1220 may have a relation of QCL-TypeD with CSI-RS resource no. 1 configured in bandwidth part no. 1 of cell no. 1, and the control resource set 1225 may have a relation of QCL-TypeD with CSI-RS resource no. 1 configured in bandwidth part no. 1 of cell no. 2. If criterion 1 is applied to the corresponding PDCCH monitoring occasion 1210, all other control resource sets having the same reference signal of QCL-TypeD as control resource set no. 1 1215 may be received. Therefore, the UE may receive the control resource sets 1215 and 1220 in the corresponding PDCCH monitoring occasion 1210. As another example, the UE may be configured to receive multiple control resource sets overlapping temporally in a specific PDCCH monitoring occasion 1240, and such multiple control resource sets may be connected to a common search space or a UE-specific search space with regard to multiple cells. In the corresponding PDCCH monitoring occasion, control resource set no. 1 1245 connected to UE-specific search space no. 1 and control resource set no. 2 1250 connected to UE-specific search space no. 2 may exist in bandwidth part no. 1 1230 of cell no. 1, and control resource set no. 1 1255 connected to UE-specific search space no. 1 and control resource set no. 2 1260 connected to UE-specific search space no. 3 may exist in bandwidth part no. 1 1235of cell no. 2. The control resource sets 1245 and 1250 may have a relation of QCL-TypeD with CSI-RS resource no. 1 configured in bandwidth part no. 1 of cell no. 1, the control resource set 1255 may have a relation of QCL-TypeD with CSI-RS resource no. 1 configured in bandwidth part no. 1 of cell no. 2, and the control resource set 1260 may have a relation of QCL-TypeD with CSI-RS resource no. 2 configured in bandwidth part no. 1 of cell no. 2. If criterion 1 is applied to the corresponding PDCCH monitoring occasion 1240, there is no common search space, and the next criterion, that is, criterion 2, may thus be applied. If criterion 2 is applied to the corresponding PDCCH monitoring occasion 1240, all other control resource sets having the same reference signal of QCL-TypeD as control resource set no. 1 1245 may be received. Therefore, the UE may receive the control resource sets 1245 and 1250 in the corresponding PDCCH monitoring occasion 1240.

[PDSCH: regarding frequency resource allocation]

FIG. 13 illustrates an example of frequency domain resource allocation with regard to a pysical downlink shared channel (PDSCH) in a wireless communication system according to an embodiment of the disclosure.

FIG. 13 illustrates three frequency domain resource allocation methods of type 0 13-00, type 1 13-01, and dynamic switch 13-10 which can be configured through an upper layer in an NR wireless communication system.

Referring to FIG. 13, in the case in which a UE is configured to use only resource type 0 through upper layer signaling (13-00), partial downlink control information (DCI) for allocating a PDSCH to the UE include a bitmap including NRBG bits. The conditions for this will be described again later. As used herein, NRBG refers to the number of resource block groups (RBGs) determined according to the BWP size allocated by a BWP indicator and upper layer parameter rbg-Size, as in Table 19 below, and data is transmitted in RBGs indicated as "1" by the bitmap.

[Table 19]

| Bandwidth Part Size | Configuration 1 | Configuration 2 |
|---|---|---|
| 1 - 36 | 3 | 4 |
| 37 - 72 | 4 | 8 |

(continued)

| Bandwidth Part Size | Configuration 1 | Configuration 2 |
|---|---|---|
| 73 - 144 | 8 | 16 |
| 145 - 275 | 16 | 16 |

In the case in which the UE is configured to use only resource type 1 through upper layer signaling (13-05), partial DCI includes frequency domain resource allocation information including $[log_2(N_{RB}^{DL,BWP}(N_{RB}^{DL,BWP}+1)/2]$ bits. The conditions for this will be described again later. The base station may thereby configure a starting VRB 13-20 and the length 13-25 of a frequency domain resource allocated continuously therefrom.

In the case in which the UE is configured to use both resource type 0 and resource type 1 through upper layer signaling (13-10), partial DCI for allocating a PDSCH to the corresponding UE includes frequency domain resource allocation information including as many bits as the larger value 13-35 between the payload 13-15 for configuring resource type 0 and the payload 13-20 and 13-25 for configuring resource type 1. The conditions for this will be described again later. One bit may be added to the foremost part (MSB) of the frequency domain resource allocation information inside the DCI. If the bit has the value of "0", use of resource type 0 may be indicated, and if the bit has the value of "1", use of resource type 1 may be indicated.

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter labeled K2), information regarding the location and length of the start symbol by which a PDSCH or PUSCH is scheduled inside a slot, the mapping type of a PDSCH or PUSCH, and the like. For example, information such as in Table 20 or Table 21 below may be transmitted from the base station to the UE.

[Table 20]

```
PDSCH-TimeDomainResourceAllocationList information element

PDSCH-TimeDomainResourceAllocationList ::=    SEQUENCE (SIZE(1..maxNrofDL-Allocations)) OF
PDSCH-TimeDomainResourceAllocation

PDSCH-TimeDomainResourceAllocation ::=        SEQUENCE {
        k0
INTEGER(0..32)
  OPTIONAL,     -- Need S
        (PDCCH-to-PDSCH timing, slot unit)
    mappingType                                                ENUMERATED {typeA, typeB},
        (PDSCH mapping type)
    startSymbolAndLength                                   INTEGER (0..127)
    (start symbol and length of PDSCH)
}
```

[Table 21]

```
PUSCH-TimeDomainResourceAllocationList information element

PUSCH-TimeDomainResourceAllocationList ::=    SEQUENCE (SIZE(1..maxNrofUL-Allocations)) OF
PUSCH-TimeDomainResourceAllocation

PUSCH-TimeDomainResourceAllocation ::=        SEQUENCE {
        k2                                                          INTEGER(0..32)
OPTIONAL,     -- Need S
      (PDCCH-to-PUSCH timing, slot unit)
          mappingType                                          ENUMERATED {typeA,
typeB},
            (PUSCH mapping type)
        startSymbolAndLength                               INTEGER (0..127)
            (start symbol and length of PUSCH)
}
```

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

FIG. 14 illustrates an example of time domain resource allocation with regard to a PDSCH in a wireless communication system according to an embodiment of the disclosure.

Referring to FIG. 14, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 14-00 and length 14-05 within one slot dynamically indicated through DCI.

[PDSCH: TCI state activation MAC-CE]

FIG. 15 illustrates a process for beam configuration and activation with regard to a PDSCH; A list of TCI states regarding a PDSCH may be indicated through an upper layer list such as RRC (15-00). The list of TCI states may be indicated by tci-StatesToAddModList and/or tci-StatesToReleaseList inside a BWP-specific PDSCH-Config IE, for example. Next, a part of the list of TCI states may be activated through a MAC-CE (15-20). Among the TCI states activated through the MAC-CE, a TCI state for the PDSCH may be indicated by DCI (15-40). The maximum number of activated TCI states may be determined by the capability reported by the UE. "15-50" illustrates an example of an MAC-CE structure for PDSCH TCI state activation/deactivation.

The meaning of respective fields inside the MAC CE and values configurable for respective fields are as follows.

- Serving Cell ID (serving cell identity): This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;
- BWP ID (bandwidth part identity): This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;
- Ti (TCI state identity): If there is a TCI state with TCI-StateId i as specified in TS 38.331 [5], this field indicates the activation/deactivation status of the TCI state with TCI-StateId i, otherwise MAC entity shall ignore the Ti field. Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with Ti field set to 1 shall be mapped to the codepoint value 0, second TCI State with Ti field set to 1 shall be mapped to the codepoint value 1 and so on. The maximum number of activated TCI states is 8;
- CORESET Pool ID (CORESET pool identity): This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[PUCCH: Related to transmission]

In an NR system, a UE may transmit control information (uplink control information, UCI) to a base station through a physical uplink control channel (PUCCH). The control information may include at least one of a HARQ-ACK indicating whether the UE has succeeded in demodulating/decoding a transport block (TB) having been received through a PDSCH, a scheduling request (SR) through which the UE requests a PUSCH base station to allocate resources for uplink data transmission, and channel state information (CSI) that is information for reporting a channel state of the UE.

PUCCH resources may be generally classified as for a long PUCCH and a short PUCCH according to the length of allocated symbols. In an NR system, a long PUCCH has a length of 4 or more symbols in a slot, and a short PUCCH has a length of 2 or less symbols in a slot.

In a more detailed description of a long PUCCH, a long PUCCH may be used for the purpose of increasing uplink cell coverage, and thus may be transmitted in a DFT-S-OFDM scheme relating to single carrier transmission rather than OFDM transmission. A long PUCCH supports transmission formats, such as PUCCH format 1, PUCCH format 3, and PUCCH format 4, according to the number of supportable control information bits, and support or nonsupport of UE multiplexing through pre-DFT OCC support at an IFFT front end.

First, PUCCH format 1 is a DFT-S-OFDM-based long PUCCH format capable of supporting control information up to 2 bits, and uses frequency resources corresponding to 1 RB. The control information may be configured by a HARQ-ACK, an SR, or a combination thereof. PUCCH format 1 repeatedly includes an OFDM symbol including a demodulation reference signal (DMRS) that is a demodulation reference signal (or reference signal), and an OFDM symbol including UCI.

For example, if the number of transmission symbols of PUCCH format 1 is 8, the 8 symbols may be configured by a DMRS symbol, a UCI symbol, a DMRS symbol, a UCI symbol, a DMRS symbol, a UCI symbol, a DMRS symbol, and a UCI symbol sequentially starting from the first starting symbol. DMRS symbols are spread using an orthogonal code (or orthogonal sequence or spreading code, $w_i(m)$ ) on the time axis for a sequence corresponding to the length of 1 RB on the frequency axis in one OFDM symbol, and may be subject to IFFT and then be transmitted.

In relation to UCI symbols, the UE may perform BPSK modulation of 1-bit control information or QPSK modulation of 2-bit control information to generate d(0), multiply the generated d(0) by a sequence corresponding to the length of 1 RB on the frequency axis to scramble same, spread the scrambled sequence by using an orthogonal code (or orthogonal sequence or spreading code, $w_i(m)$) on the time axis, perform IFFT of the spread sequence, and transmit same.

The UE generates a sequence, based on a group hopping or sequence hopping configuration and a configured ID configured by the base station through higher layer signaling, and performs a cyclic shift of the generated sequence by using an initial cyclic shift (CS) value configured through a higher signal to generate a sequence corresponding to the length of 1 RB.

$w_i(m)$ is determined such as $w_i(m) = e^{\frac{j2\pi\varphi(m)}{N_{SF}}}$ when the length ($N_{SF}$) of a spreading code is given and, specifically, is given as shown in [Table 22] below. i means the index of the spreading code itself, and m denotes the index of each element of the spreading code. Herein, the numbers in the square brackets [ ] in [Table 22] indicate , and if the length of a spreading code is 2 and the configured index i of the spreading code is 0 (i=0), the spreading code $w_i(m)$ becomes $w_i(0) = e^{j2\pi E0/N_{SF}} = 1$ and $w_i(1) = e^{j2\pi E0/N_{SF}} = 1$ and thus is equal to [1 1].

[Table 22]

| $N_{SF}$ | $\varphi(m)$ | | | | | | |
|---|---|---|---|---|---|---|---|
| | $i = 0$ | $i = 1$ | $i = 2$ | $i = 3$ | $i = 4$ | $i = 5$ | $i = 6$ |
| 1 | [0] | - | - | - | - | - | - |
| 2 | [0 0] | [0 1] | - | - | - | - | - |
| 3 | [0 0 0] | [0 1 2] | [0 2 1] | - | - | - | - |
| 4 | [0 0 0 0] | [0 2 0 2] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [01 2 3 4 5] | [0 2 4 0 2 4] | [0 3 0 3 0 3] | [0 4 2 0 4 2] | [0 5 4 3 2 1] | - |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

Next, PUCCH format 3 is a DFT-S-OFDM-based long PUCCH format capable of supporting control information greater than 2 bits, and the number of used RBs is configurable through a higher layer. The control information may be configured by a HARQ-ACK, an SR, CSI, or a combination thereof. DMRS symbol positions in PUCCH format 3 are present in [Table 23] below according to whether there is frequency hopping in a slot, and whether an additional DMRS symbol is configured.

[Table 23]

| Transmission length of PUSCH format 3/4 | DMRS position in transmission of PUSCH format 3/4 | | | |
|---|---|---|---|---|
| | Additional DMRS not configured | | Additional DMRS configured | |
| | Frequency hopping not configured | Frequency hopping configured | Frequency hopping not configured | Frequency hopping configured |
| 4 | 1 | 0, 2 | 1 | 0, 2 |
| 5 | 0, 3 | | 0, 3 | |
| 6 | 1, 4 | | 1, 4 | |
| 7 | 1, 4 | | 1, 4 | |
| 8 | 1, 5 | | 1, 5 | |
| 9 | 1, 6 | | 1, 6 | |

(continued)

| | DMRS position in transmission of PUSCH format 3/4 | | | |
|---|---|---|---|---|
| Transmission length of PUSCH format 3/4 | Additional DMRS not configured | | Additional DMRS configured | |
| | Frequency hopping not configured | Frequency hopping configured | Frequency hopping not configured | Frequency hopping configured |
| 10 | 2, 7 | | 1, 3, 6, 8 | |
| 11 | 2, 7 | | 1, 3, 6, 9 | |
| 12 | 2, 8 | | 1, 4, 7, 10 | |
| 13 | 2, 9 | | 1, 4, 7, 11 | |
| 14 | 3, 10 | | 1, 5, 8, 12 | |

If the number of transmission symbols of PUCCH format 3 is 8, a DMRS is transmitted on a first symbol and a fifth symbol when the 0-th symbol is used as the first starting symbol of the 8 symbols. [Table 23] is applied even to DMRS symbol positions of PUCCH format 4 in the same way.

Next, PUCCH format 4 is a DFT-S-OFDM-based long PUCCH format capable of supporting control information greater than 2 bits, and uses frequency resources corresponding to 1 RB. The control information may be configured by a HARQ-ACK, an SR, CSI, or a combination thereof. The difference between PUCCH format 4 and PUCCH format 3, in a case of PUCCH format 4, PUCCH formats 4 of several UEs are multiplexable in one RB. It is possible to multiplex PUCCH formats 4 of multiple UEs through pre-DFT orthogonal cover code (OCC) application to control information at an IFFT front end. However, the number of control information symbols transmittable by one UE is reduced according to the number of multiplexed UEs. The number of multiplexable UEs, that is, the number of available different OCCs may be 2 or 4, and the number of OCCs and OCC indexes to be applied may be configured through a higher layer.

Next, short PUCCHs are described. A short PUCCH may be transmitted on both a downlink-centric slot and an uplink-centric slot, and in general, may be transmitted on the last symbol of a slot or an OFDM symbol positioned in a back part (e.g., the last OFDM symbol, the second last OFDM symbol, or the last two OFDM symbols). It is also possible for a short PUCCH to be transmitted on a random position in a slot. A short PUCCH may be transmitted using one OFDM symbol or two OFDM symbols. A short PUCCH may be used to shorten a delay time compared to a long PUCCH in a situation where uplink cell coverage is good, and may be transmitted in a CP-OFDM scheme.

A short PUCCH may support transmission formats, such as PUCCH format 0 and PUCCH format 2, according to the number of supportable control information bits. First, PUCCH format 0 is a short PUCCH format capable of supporting control information up to 2 bits, and uses frequency resources corresponding to 1 RB. The control information may be configured by a HARQ-ACK, an SR, or a combination thereof. PUCCH format 0 does not transmit a DMRS, and has a structure of transmitting only a sequence mapped to 12 subcarriers on the frequency axis in one OFDM symbol. The UE may generate a sequence, based on a group hopping or sequence hopping configuration and a configured ID configured by the base station through a higher signal, performs a cyclic shift (CS) of the generated sequence by using a final CS value obtained after adding, to an indicated initial CS value, a CS value varying according to an ACK or NACK, map the sequence to 12 subcarriers, and transmit the mapped sequence.

For example, in a case where an HARQ-ACK has 1 bit, as shown in [Table 24] below, if the HARQ-ACK is an ACK, the UE may generate the final CS by adding 6 to the initial CS value, and if the HARQ-ACK is a NACK, the UE may generate the final CS by adding 0 to the initial CS. The value of 0 that is a CS value for NACK and the value of 6 that is a CS value for ACK are defined in a specification, and the UE may generate PUCCH format 0 according to the values defined in the specification to transmit a 1-bit HARQ-ACK.

[Table 24]

| 1-bit HARQ-ACK | NACK | ACK |
|---|---|---|
| Final CS | (initial CS + 0) mod 12 = initial CS | (initial CS + 6) mod 12 |

For example, in a case where an HARQ-ACK has 2 bits, as shown in [Table 25] below, the UE may add 0 to the initial CS value if the HARQ-ACK is (NACK, NACK), add 3 to the initial CS value if the HARQ-ACK is (NACK, ACK), add 6 to the initial CS value if the HARQ-ACK is (ACK, ACK), and add 9 to the initial CS value if the HARQ-ACK is (ACK, NACK). The value of 0 that is a CS value for (NACK, NACK), the value of 3 that is a CS value for (NACK, ACK), the value of 6 that is a CS value for (ACK, ACK), and the value of 9 that is a CS value for (ACK, NACK) are defined in a specification, and the UE may generate PUCCH format 0 according to the values defined in the specification to transmit a 2-bit HARQ-ACK. If the final CS value exceeds 12 due to the CS value added to the initial CS value according to an ACK or NACK, since length of the sequence is 12, modulo 12 may be applied to the final CS value.

[Table 25]

| 2 bit HARQ-ACK | NACK, NACK | NACK, ACK | ACK, ACK | ACK, NACK |
|---|---|---|---|---|
| Final CS | (initial CS + 0) mod 12 = initial CS | (initial CS + 3) mod 12 | (initial CS + 6) mod 12 | (initial CS + 9) mod 12 |

Next, PUCCH format 2 is a short PUCCH format supporting control information greater than 2 bits, and the number of used RBs may be configured through a higher layer. The control information may be configured by a HARQ-ACK, an SR, CSI, or a combination thereof. If the index of a first subcarrier is #0, PUCCH format 2 may be fixed to subcarriers having indexes of #1, #4, #7, and #10 as the positions of subcarriers on which a DMRS is transmitted in one OFDM symbol. The control information may undergo channel coding and then a modulation process to be mapped to the remaining subcarriers except the subcarriers on which the DMRS is positioned.

In summary, configurable values for each PUCCH format and the ranges thereof may be organized as shown in [Table 26] below. Values not required to be configured are represented by N.A. in [Table 26] below.

[Table 26]

| | | PUCCH Format 0 | PUCCH Format 1 | PUCCH Format 2 | PUCCH Format 3 | PUCCH Format 4 |
|---|---|---|---|---|---|---|
| Starting symbol | Configurability | √ | √ | √ | √ | √ |
| | Value range | 0-13 | 0 – 10 | 0-13 | 0 – 10 | 0 – 10 |
| Number of symbols in a slot | Configurability | √ | √ | √ | √ | √ |
| | Value range | 1, 2 | 4 – 14 | 1, 2 | 4 – 14 | 4 – 14 |
| Index for identifying starting PRB | Configurability | √ | √ | √ | √ | √ |
| | Value range | 0 - 274 | 0 - 274 | 0 - 274 | 0 - 274 | 0 - 274 |
| Number of PRBs | Configurability | N.A. | N.A. | √ | √ | N.A. |
| | Value range | N.A.(Default is 1) | N.A.(Default is 1) | 1 – 16 | 1 - 6, 8 - 10, 12, 15, 16 | N.A. (Default is 1) |
| Enabling frequency hopping (intra-slot) | Configurability | √ | √ | √ | √ | √ |
| | Value range | On/Off (only for 2 symbol) | On/Off | On/Off (only for 2 symbol) | On/Off | On/Off |
| Freq.cy resource of 2nd hop if intra-slot frequency hopping is enabled | Configurability | √ | √ | √ | √ | √ |
| | Value range | 0 – 274 | 0 - 274 | 0 - 274 | 0 - 274 | 0 - 274 |
| Index of initial cyclic shift | Configurability | √ | √ | N.A. | N.A. | N.A. |
| | Value range | 0 – 11 | 0 – 11 | N.A. | N.A. | N.A. |
| Index of time-domain OCC | Configurability | N.A. | √ | N.A. | N.A. | N.A. |
| | Value range | N.A. | 0 - 6 | N.A. | N.A. | N.A. |
| Length of Pre-DFT OCC | Configurability | N.A. | N.A. | N.A. | N.A. | √ |
| | Value range | N.A. | N.A. | N.A. | N.A. | 2, 4 |
| Index of Pre-DFT OCC | Configurability | N.A. | N.A. | N.A. | N.A. | √ |
| | Value range | N.A. | N.A. | N.A. | N.A. | 0, 1, 2, 3 |

For uplink coverage improvement, multi-slot repetition may be supported for PUCCH formats 1, 3, and 4, and PUCCH repetition may be configured for each PUCCH format. The UE may perform repetition of a PUCCH including UCI as many times as the number of slots configured through the higher layer signaling nrofSlots. For PUCCH repetition, a PUCCH transmission on each slot is performed using the same number of consecutive symbols, and the number of consecutive symbols may be configured through nrofSymbols in the higher layer signaling PUCCH-format1, PUCCH-format3, or PUCCH-format4. For PUCCH repetition, a PUCCH transmission on each slot is performed using the same starting symbol, and the starting symbol may be configured through startingSymbolIndex in the higher layer signaling PUCCH-format1, PUCCH-format3, or PUCCH-format4. For PUCCH repetition, single PUCCH-spatialRelationInfo may be configured for a single PUCCH resource. For PUCCH repetition, if the UE is configured to perform frequency hopping between PUCCH transmissions on different slots, the UE may perform frequency hopping in a unit of a slot. In addition, if the UE is configured to perform frequency hopping between PUCCH transmissions on different slots, the UE may start a PUCCH transmission on an even-numbered slot at a first PRB index configured through the higher layer signaling startingPRB, and start a PUCCH transmission on an odd-numbered slot at a second PRB index configured through the higher layer signaling secondHopPRB. Additionally, if the UE is configured to perform frequency hopping between PUCCH transmissions on different slots, the index of a slot indicated for the UE to perform a first PUCCH transmission thereon is 0, and until a configured entire PUCCH repetition count is reached, a PUCCH repetition count value may be increased independently of whether PUCCH transmission is performed on each slot. If the UE is configured to perform frequency hopping between PUCCH transmissions on different slots, the UE does not expect that frequency hopping in a slot at the time of PUCCH transmission is configured. If performing frequency hopping between PUCCH transmissions on different slots is not configured for the UE and frequency hopping in a slot is configured, the first and second PRB indexes may also be identically applied in the slot. If the number of uplink symbols on which PUCCH transmission is possible is smaller than a number indicated by nrofSymbols configured through higher layer signaling, the UE may not transmit a PUCCH. Even if the UE has failed PUCCH transmission on a slot for a reason during PUCCH repetition, the UE may increase the PUCCH repetition count.

[PUCCH: PUCCH resource configuration]

Next, a PUCCH resource configuration of a base station or a UE is described. The base station may be able to configure a PUCCH resource for each BWP for a particular UE through a higher layer. A PUCCH resource configuration may be as shown in [Table 27] below.

[Table 27]

```
PUCCH-Config ::=                    SEQUENCE {
    resourceSetToAddModList             SEQUENCE (SIZE (1..maxNrofPUCCH-ResourceSets)) OF
PUCCH-ResourceSet    OPTIONAL, -- Need N
    resourceSetToReleaseList            SEQUENCE (SIZE (1..maxNrofPUCCH-ResourceSets)) OF
PUCCH-ResourceSetId OPTIONAL, -- Need N
    resourceToAddModList                SEQUENCE (SIZE (1..maxNrofPUCCH-Resources)) OF
PUCCH-Resource          OPTIONAL, -- Need N
    resourceToReleaseList               SEQUENCE (SIZE (1..maxNrofPUCCH-Resources)) OF PUCCH-ResourceId
OPTIONAL, -- Need N
    format1                             SetupRelease { PUCCH-FormatConfig }
OPTIONAL, -- Need M
    format2                             SetupRelease { PUCCH-FormatConfig }
OPTIONAL, -- Need M
    format3                             SetupRelease { PUCCH-FormatConfig }
OPTIONAL, -- Need M
    format4                             SetupRelease { PUCCH-FormatConfig }
OPTIONAL, -- Need M
    schedulingRequestResourceToAddModList   SEQUENCE (SIZE (1..maxNrofSR-Resources)) OF
SchedulingRequestResourceConfig

OPTIONAL, -- Need N
    schedulingRequestResourceToReleaseList  SEQUENCE (SIZE (1..maxNrofSR-Resources)) OF
SchedulingRequestResourceId

OPTIONAL, -- Need N
    multi-CSI-PUCCH-ResourceList        SEQUENCE (SIZE (1..2)) OF PUCCH-ResourceId
OPTIONAL, -- Need M
    dl-DataToUL-ACK                     SEQUENCE (SIZE (1..8)) OF INTEGER (0..15)
OPTIONAL, -- Need M
    spatialRelationInfoToAddModList     SEQUENCE (SIZE (1..maxNrofSpatialRelationInfos)) OF
PUCCH-SpatialRelationInfo

OPTIONAL, -- Need N
    spatialRelationInfoToReleaseList    SEQUENCE (SIZE (1..maxNrofSpatialRelationInfos)) OF
PUCCH-SpatialRelationInfoId

OPTIONAL, -- Need N
    pucch-PowerControl                  PUCCH-PowerControl
OPTIONAL, -- Need M
    ...,
```

```
    [[
    resourceToAddModListExt-r16              SEQUENCE (SIZE (1..maxNrofPUCCH-Resources)) OF
PUCCH-ResourceExt-r16   OPTIONAL, -- Need N
    dl-DataToUL-ACK-r16                      SetupRelease { DL-DataToUL-ACK-r16 }
OPTIONAL, -- Need M
    ul-AccessConfigListDCI-1-1-r16           SetupRelease { UL-AccessConfigListDCI-1-1-r16 }
OPTIONAL, -- Need M
    subslotLengthForPUCCH-r16                CHOICE {
        normalCP-r16                             ENUMERATED {n2,n7},
        extendedCP-r16                           ENUMERATED {n2,n6}
    }
OPTIONAL, -- Need R
    dl-DataToUL-ACK-DCI-1-2-r16              SetupRelease { DL-DataToUL-ACK-DCI-1-2-r16}
OPTIONAL, -- Need M
    numberOfBitsForPUCCH-ResourceIndicatorDCI-1-2-r16   INTEGER (0..3)
OPTIONAL, -- Need R
    dmrs-UplinkTransformPrecodingPUCCH-r16   ENUMERATED {enabled}
OPTIONAL,   -- Cond PI2-BPSK
    spatialRelationInfoToAddModListSizeExt-v1610     SEQUENCE (SIZE (1..maxNrofSpatialRelationInfosDiff-r16)) OF
PUCCH-SpatialRelationInfo

OPTIONAL, -- Need N
    spatialRelationInfoToReleaseListSizeExt-v1610    SEQUENCE (SIZE (1..maxNrofSpatialRelationInfosDiff-r16)) OF
PUCCH-SpatialRelationInfoId

OPTIONAL, -- Need N
    spatialRelationInfoToAddModListExt-v1610   SEQUENCE (SIZE (1..maxNrofSpatialRelationInfos-r16)) OF
PUCCH-SpatialRelationInfoExt-r16

OPTIONAL, -- Need N
    spatialRelationInfoToReleaseListExt-v1610      SEQUENCE (SIZE (1..maxNrofSpatialRelationInfos-r16)) OF
                                                                        PUCCH-SpatialRelationInfoId-r16
OPTIONAL, -- Need N
    resourceGroupToAddModList-r16            SEQUENCE (SIZE (1..maxNrofPUCCH-ResourceGroups-r16)) OF
PUCCH-ResourceGroup-r16

OPTIONAL, -- Need N
    resourceGroupToReleaseList-r16           SEQUENCE (SIZE (1..maxNrofPUCCH-ResourceGroups-r16)) OF
PUCCH-ResourceGroupId-r16

OPTIONAL, -- Need N
    sps-PUCCH-AN-List-r16                    SetupRelease { SPS-PUCCH-AN-List-r16 }
OPTIONAL,   -- Need M
    schedulingRequestResourceToAddModListExt-v1610   SEQUENCE (SIZE (1..maxNrofSR-Resources)) OF
SchedulingRequestResourceConfigExt-v1610

OPTIONAL -- Need N
    ]]
}
```

According to [Table 27], one or multiple PUCCH resource sets may be configured in a PUCCH resource configuration for a particular BWP, and a maximum payload value for UCI transmission may be configured for some of the PUCCH resource sets. One or multiple PUCCH resources may belong to each PUCCH resource set, and each PUCCH resource may belong to one of the PUCCH formats described above.

With respect to the PUCCH resource sets, a maximum payload value of the first PUCCH resource set may be fixed to 2 bits. Accordingly, the value may not be separately configured through a higher layer. If the remaining PUCCH resource sets are configured, the index of a corresponding PUCCH resource set may be configured in an ascending order according to the maximum payload value, and no maximum payload value may be configured for the last PUCCH resource set. A higher layer configuration for a PUCCH resource set may be as shown in [Table 28] below.

[Table 28]

```
PUCCH-ResourceSet ::=              SEQUENCE {
    pucch-ResourceSetId                PUCCH-ResourceSetId,
    resourceList                       SEQUENCE (SIZE (1..maxNrofPUCCH-ResourcesPerSet)) OF
PUCCH-ResourceId,
    maxPayloadSize                       INTEGER (4..256)
OPTIONAL    -- Need R
}
```

The parameter resourceList in [Table 28] may include IDs of PUCCH resources belonging to a PUCCH resource set.

At the time of initial access, or if a PUCCH resource set is not configured, a PUCCH resource set, as shown in [Table 29] below, configured by multiple PUCCH resources which are cell-specific in an initial BWP, may be used. A PUCCH resource to be used for initial access in the PUCCH resource set may be indicated through SIB1.

[Table 29]

| Index | PUCCH format | First symbol | Number of symbols | PRB offset $RB_{BWP}^{offset}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{BWP}^{size}/4 \rfloor$ | {0, 3, 6, 9} |

A maximum payload of each of PUCCH resources included in the PUCCH resource set may be 2 bits in a case of PUCCH formats 0 or 1, and may be determined according to a symbol length, the number of PRBs, and a maximum code rate in a case of the remaining formats. The symbol length and the number of PRBs may be configured for each PUCCH resource, and the maximum code rate may be configured for each PUCCH format.

Next, PUCCH resource selection for UCI transmission is described. In a case of SR transmission, a PUCCH resource for an SR corresponding to schedulingRequestID as shown in [Table 30] below may be configured through a higher layer. The PUCCH resource may be a resource belonging to PUCCH format 0 or PUCCH format 1.

[Table 30]

```
SchedulingRequestResourceConfig ::=    SEQUENCE {
    schedulingRequestResourceId            SchedulingRequestResourceId,
    schedulingRequestID                    SchedulingRequestId,
    periodicityAndOffset                   CHOICE {
        sym2                                   NULL,
        sym6or7                                NULL,
        sl1                                    NULL,                  -- Recurs in every slot
        sl2                                    INTEGER (0..1),
        sl4                                    INTEGER (0..3),
        sl5                                    INTEGER (0..4),
        sl8                                    INTEGER (0..7),
        sl10                                   INTEGER (0..9),
        sl16                                   INTEGER (0..15),
        sl20                                   INTEGER (0..19),
        sl40                                   INTEGER (0..39),
        sl80                                   INTEGER (0..79),
        sl160                                  INTEGER (0..159),
        sl320                                  INTEGER (0..319),
        sl640                                  INTEGER (0..639)
    }
OPTIONAL,   -- Need M
    resource                               PUCCH-ResourceId
OPTIONAL    -- Need M
}
```

A transmission period and an offset of the configured PUCCH resource may be configured through the parameter periodicityAndOffset in [Table 30]. If there is an uplink data to be transmitted by the UE at a time point corresponding to the configured period and offset, the PUCCH resource is transmitted, and otherwise, the PUCCH resource may not be transmitted.

In a case of CSI transmission, a PUCCH resource on which a periodic CSI report or a semi-persistent CSI report through a PUCCH is to be transmitted may be configured in the parameter pucch-CSI-ResourceList as shown in [Table 31] below. The parameter pucch-CSI-ResourceList may include a list of PUCCH resources for each BWP for a cell or CC on which the CSI report is to be transmitted. The PUCCH resource may be a resource belonging to PUCCH format 2, PUCCH format 3, or PUCCH format 4. A transmission period and an offset of the PUCCH resource may be configured through reportSlotConfig in [Table 31].

[Table 31]

```
CSI-ReportConfig ::=                SEQUENCE {
    reportConfigId                      CSI-ReportConfigId,
    carrier                             ServCellIndex                OPTIONAL,  -- Need S
    ...
    reportConfigType                    CHOICE {
        periodic                            SEQUENCE {
            reportSlotConfig                    CSI-ReportPeriodicityAndOffset,
            pucch-CSI-ResourceList              SEQUENCE (SIZE (1..maxNrofBWPs)) OF PUCCH-CSI-Resource
        },
        semiPersistentOnPUCCH               SEQUENCE {
            reportSlotConfig                    CSI-ReportPeriodicityAndOffset,
            pucch-CSI-ResourceList              SEQUENCE (SIZE (1..maxNrofBWPs)) OF PUCCH-CSI-Resource
        },
        semiPersistentOnPUSCH               SEQUENCE {
            reportSlotConfig                    ENUMERATED {sl5, sl10, sl20, sl40, sl80, sl160, sl320},
            reportSlotOffsetList            SEQUENCE (SIZE (1.. maxNrofUL-Allocations)) OF INTEGER(0..32),
            p0alpha                                 P0-PUSCH-AlphaSetId
        },
        aperiodic                           SEQUENCE {
            reportSlotOffsetList            SEQUENCE (SIZE (1..maxNrofUL-Allocations)) OF INTEGER(0..32)
        }
    },
    ...
}
```

In a case of HARQ-ACK transmission, a resource set of PUCCH resources to be transmitted may be first selected according to a payload of UCI including the HARQ-ACK. That is, a PUCCH resource set having a minimum payload not smaller than that of the UCI payload may be selected. Next, a PUCCH resource in the PUCCH resource set may be selected through a PUCCH resource indicator (PRI) in DCI for scheduling a TB corresponding to the HARQ-ACK, and the PRI may be a PUCCH resource indicator specified in [Table 6] or [Table 7]. A relation between a PRI and a PUCCH resource selected in the PUCCH resource set may be as shown in [Table 32] below.

[Table 32]

| PUCCH resource indicator | PUCCH resource |
| --- | --- |
| '000' | $1^{st}$ PUCCH resource provided by *pucch-ResourceId* obtained from the $1^{st}$ value of *resourceList* |
| '001' | $2^{nd}$ PUCCH resource provided by *pucch-ResourceId* obtained from the $2^{nd}$ value of *resourceList* |
| '010' | $3^{rd}$ PUCCH resource provided by *pucch-ResourceId* obtained from the $3^{1d}$ value of *resourceList* |
| '011' | $4^{th}$ PUCCH resource provided by *pucch-ResourceId* obtained from the $4^{th}$ value of *resourceList* |
| '100' | $5^{th}$ PUCCH resource provided by *pucch-ResourceId* obtained from the $5^{th}$ value of *resourceList* |
| '101' | $6^{th}$ PUCCH resource provided by *pucch-ResourceId* obtained from the $6^{th}$ value of *resourceList* |
| '110' | $7^{th}$ PUCCH resource provided by *pucch-ResourceId* obtained from the $7^{th}$ value of *resourceList* |
| '111' | $8^{th}$ PUCCH resource provided by *pucch-ResourceId* obtained from the $8^{th}$ value of *resourceList* |

If the number of PUCCH resources in a selected PUCCH resource set is greater than 8, a PUCCH resource may be selected by Equation 3 below.

[Equation 3]

$$r_{PUCCH} = \begin{cases} \left\lfloor \frac{n_{CCE,p} \cdot \lceil R_{PUCCH}/8 \rceil}{N_{CCE,p}} \right\rfloor + \Delta_{PRI} \cdot \left\lceil \frac{R_{PUCCH}}{8} \right\rceil & \text{if} \quad \Delta_{PRI} < R_{PUCCH} \bmod 8 \\ \left\lfloor \frac{n_{CCE,p} \cdot \lfloor R_{PUCCH}/8 \rfloor}{N_{CCE,p}} \right\rfloor + \Delta_{PRI} \cdot \left\lfloor \frac{R_{PUCCH}}{8} \right\rfloor + R_{PUCCH} \bmod 8 & \text{if} \quad \Delta_{PRI} \geq R_{PUCCH} \bmod 8 \end{cases}$$

In [Equation 3], $r_{PUCCH}$ denotes the index of the selected PUCCH resource in the PUCCH resource set, $R_{PUCCH}$ denotes the number of the PUCCH resources belonging to the PUCCH resource set, $\Delta PRI$ denotes a PRI value, $N_{CCE,p}$ denotes a total number of CCEs of CORESET p to which reception DCI belongs, and $n_{CCE,p}$ denotes the index of a first CCE for the reception DCI.

A time point at which the PUCCH resource is transmitted is a time point after $K_1$ slots after transmission of a TB corresponding to the HARQ-ACK. A candidate of the $K_1$ value is configured through a higher layer and, more specifically, may be configured in the parameter dl-DataToUL-ACK in PUCCH-Config specified in [Table 27]. One $K_1$ value among these candidates may be selected by a PDSCH-to-HARQ feedback timing indicator in DCI for scheduling a TB, and the value may be a value specified in [Table 5] or [Table 6]. The unit of the $K_1$ value may be a unit of a slot or a unit of a subslot. Here, a subslot is a length unit smaller than a slot, and one subslot may be configured by one or multiple symbols.

Next, a case where two or more PUCCH resources are positioned in one slot is described. A UE may transmit UCI through one or two PUCCH resources in one slot or subslot, and when UCI is transmitted through two PUCCH resources in one slot/subslot, i) each PUCCH resource does not overlap in a unit of a symbol, and ii) at least one PUCCH resource may be a short PUCCH. The UE may not expect to transmit multiple PUCCH resources for HARQ-ACK transmission in one slot.

[PUCCH: Related to transmission beam]

Next, an uplink transmission beam configuration to be used in PUCCH transmission is described. If a UE does not have a UE-specific configuration (dedicated PUCCH resource configuration) for a PUCCH resource configuration, a PUCCH resource set is provided through the higher layer signaling pucch-ResourceCommon, and a beam configuration for PUCCH transmission follows a beam configuration used in PUCCH transmission scheduled through a random access response (RAR) UL grant. If the UE has a UE-specific configuration (dedicated PUCCH resource configuration) for a PUCCH resource configuration, a beam configuration for PUCCH transmission may be provided through the higher signaling pucch-spatialRelationInfoId included in [Table 27]. If one value of pucch-spatialRelationInfoId is configured for the UE, a beam configuration for PUCCH transmission of the UE may be provided through the one value of pucch-spatialRelationInfoId. If multiple values of pucch-spatialRelationInfoID are configured for the UE, activation of one value of pucch-spatialRelationInfoID among the multiple values may be indicated to the UE through a MAC control element (CE). A maximum of 8 values of pucch-spatialRelationInfoID may be configured for the UE through higher signaling, and only one value of pucch-spatialRelationInfoID among the 8 values being activated may be indicated thereto. If activation of a random value of pucch-spatialRelationInfoID is indicated to the UE through a MAC CE, the UE may apply pucch-spatialRelationInfoID activation through the MAC CE starting from a slot first appearing after $3N_{slot}^{subframe,\mu}$ slots after a slot transmitting a HARQ-ACK for a PDSCH transmitting the MAC CE containing activation information on pucch-spatialRelationInfoID. $\mu$ is a numerology applied to PUCCH transmission, and $N_{slot}^{subframe,\mu}$ indicates the number of slots per subframe at the given numerology. A higher layer configuration for pucch-spatialRelationInfo may be as shown in [Table 33] below.

[Table 33]

```
PUCCH-SpatialRelationInfo ::=          SEQUENCE {
    pucch-SpatialRelationInfoId        PUCCH-SpatialRelationInfoId,
    servingCellId                          ServCellIndex
OPTIONAL,   -- Need S
    referenceSignal                        CHOICE {
        ssb-Index                              SSB-Index,
        csi-RS-Index                           NZP-CSI-RS-ResourceId,
        srs                                    PUCCH-SRS
    },
    pucch-PathlossReferenceRS-Id           PUCCH-PathlossReferenceRS-Id,
    p0-PUCCH-Id                                P0-PUCCH-Id,
    closedLoopIndex                            ENUMERATED { i0, i1 }
}

PUCCH-SpatialRelationInfoId ::=        INTEGER (1..maxNrofSpatialRelationInfos)
```

According to [Table 33], one referenceSignal configuration may exist in a particular pucch-spatialRelationInfo configuration, the reference Signal may be ssb-Index indicating a particular SS/PBCH, csi-RS-Index indicating a particular CSI-RS, or srs indicating a particular SRS. If reference Signal is configured to be ssb-Index, the UE may configure, as a beam for PUCCH transmission, a beam used when an SS/PBCH corresponding to the ssb-Index is received among SS/PBCHs in the same serving cell, or when servingCellId is provided, configure, as a beam for PUCCH transmission, a beam used when an SS/PBCH corresponding to the ssb-Index is received among SS/PBCHs in a cell indicated by the servingCellId. If referenceSignal is configured to be csi-RS-Index, the UE may configure, as a beam for PUCCH transmission, a beam used when a CSI-RS corresponding to the csi-RS-Index is received among CSI-RSs in the same serving cell, or when servingCellId is provided, configure, as a beam for PUCCH transmission, a beam used when a CSI-RS corresponding to the csi-RS-Index is received among CSI-RSs in a cell indicated by the servingCellId. If reference-Signal is configured to be srs, the UE may configure, as a beam for PUCCH transmission, a transmission beam used when an SRS corresponding to a resource index provided through a higher signaling resource is transmitted in the same serving cell and/or in an activated uplink BWP, or when servingCellID and/or uplinkBWP is provided, configure, as a beam for PUCCH transmission, a transmission beam used when an SRS corresponding to a resource index provided through a higher signaling resource is transmitted in a cell and/or in an uplink BWP indicated by the servingCellID and/or uplinkBWP. There may be one pucch-PathlossReferenceRS-Id configuration in a particular pucch-spatialRelationInfo configuration. PUCCH-PathlossReferenceRS in [Table 34] may be mapped to pucch-PathlossReferenceRS-Id in [Table 33], and a maximum of four values are configurable through pathlossReferenceRSs in the higher signaling PUCCH-PowerControl in [Table 34]. If PUCCH-PathlossReferenceRS is connected to an SS/PBCH through the higher signaling referenceSignal, ssb-Index may be configured, and if same is connected to a CSI-RS, csi-RS-Index may be configured.

[Table 34]

```
PUCCH-PowerControl ::=                SEQUENCE {
    deltaF-PUCCH-f0                       INTEGER (-16..15)
OPTIONAL, -- Need R
    deltaF-PUCCH-f1                       INTEGER (-16..15)
OPTIONAL, -- Need R
    deltaF-PUCCH-f2                       INTEGER (-16..15)
OPTIONAL, -- Need R
    deltaF-PUCCH-f3                       INTEGER (-16..15)
OPTIONAL, -- Need R
    deltaF-PUCCH-f4                       INTEGER (-16..15)
OPTIONAL, -- Need R
    p0-Set                                SEQUENCE (SIZE (1..maxNrofPUCCH-P0-PerSet)) OF P0-PUCCH
OPTIONAL, -- Need M
    pathlossReferenceRSs                  SEQUENCE (SIZE (1..maxNrofPUCCH-PathlossReferenceRSs)) OF
PUCCH-PathlossReferenceRS

OPTIONAL, -- Need M
    twoPUCCH-PC-AdjustmentStates          ENUMERATED {twoStates}
OPTIONAL, -- Need S
    ...,
    [[
    pathlossReferenceRSs-v1610            SetupRelease { PathlossReferenceRSs-v1610 }
OPTIONAL -- Need M
    ]]
}

P0-PUCCH ::=                              SEQUENCE {
    p0-PUCCH-Id                               P0-PUCCH-Id,
    p0-PUCCH-Value                            INTEGER (-16..15)
}

P0-PUCCH-Id ::=                           INTEGER (1..8)

PathlossReferenceRSs-v1610 ::=          SEQUENCE (SIZE (1..maxNrofPUCCH-PathlossReferenceRSsDiff-r16)) OF
PUCCH-PathlossReferenceRS-r16

PUCCH-PathlossReferenceRS ::=               SEQUENCE {
    pucch-PathlossReferenceRS-Id            PUCCH-PathlossReferenceRS-Id,
    referenceSignal                         CHOICE {
        ssb-Index                               SSB-Index,
        csi-RS-Index                            NZP-CSI-RS-ResourceId
    }
}

PUCCH-PathlossReferenceRS-r16 ::=               SEQUENCE {
    pucch-PathlossReferenceRS-Id-r16                PUCCH-PathlossReferenceRS-Id-v1610,
    referenceSignal-r16                             CHOICE {
        ssb-Index-r16                                   SSB-Index,
        csi-RS-Index-r16                                NZP-CSI-RS-ResourceId
    }
}
```

[PUCCH: Group-based spatial relation activation]

In Rel-15, if multiple values of pucch-spatialRelationInfoID are configured for a UE, the UE may receive a MAC CE for activating a spatial relation for each PUCCH resource, to determine the spatial relation of the PUCCH resource. However, this method has a shortcoming in that large signaling overhead is required to activate the spatial relations of multiple PUCCH resources. Therefore, in Rel-16, a PUCCH resource group is added, and a new MAC CE for activating a spatial relation in a unit of a PUCCH resource group is introduced. A maximum of four PUCCH resource groups may be configured through resourceGroupToAddModList in [Table 27], and each PUCCH resource group may configure, as a list, multiple PUCCH resource IDs in one PUCCH resource group as shown in [Table 35] below.

[Table 35]

```
PUCCH-ResourceGroup-r16 ::=              SEQUENCE {
    pucch-ResourceGroupId-r16                PUCCH-ResourceGroupId-r16,
    resourcePerGroupList-r16                 SEQUENCE (SIZE (1..maxNrofPUCCH-ResourcesPerGroup-r16)) OF
PUCCH-ResourceId
}

PUCCH-ResourceGroupId-r16 ::=            INTEGER (0..maxNrofPUCCH-ResourceGroups-1-r16)
```

In Rel-16, a base station may configure, for the UE, each PUCCH resource group through resourceGroup-ToAddModList in [Table 27] and a higher layer configuration in [Table 35], and may configure a MAC CE for simultaneously activating the spatial relations of all PUCCH resources in one PUCCH resource group.

FIG. 16 is a diagram illustrating an example of a MAC CE for activating a spatial relation, based on a PUCCH resource group in a wireless communication system according to an embodiment of the disclosure.

Referring to an example of FIG. 16, a support cell ID 1610 and a bandwidth part ID 1620 for which a PUCCH resource to which a corresponding MAC CE is to be applied is configured are indicated by Oct 1 1600. A PUCCH resource ID 1631 or 1641 indicate the ID of a PUCCH resource, and if the indicated PUCCH resource is included in a PUCCH resource group according to resourceGroupToAddModList, other PUCCH resource IDs in the same PUCCH resource group are not indicated in the same MAC CE, and all PUCCH resources in the same PUCCH resource group are activated by the same spatial relation info ID 1636 or 1646. The spatial relation info ID 1636 or 1646 includes a value corresponding to the expression (PUCCH-SpatialRelationInfoId - 1) to be applied to the PUCCH resource group in [Table 33].

[Regarding SRS]

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of "beamManagement", "codebook", "nonCodebook",and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. The individual configuration information regarding SRS resources may include time domain transmission configuration of SRS resources, and may be configured as one of "periodic", "semi-persistent", and "aperiodic" The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through upper layer signaling including RRC signaling or MAC CE signaling, or L1 signaling (for example, DCI). For example, the base station may activate or deactivate periodic SRS transmission for the UE through upper layer signaling. The base station may indicate activation of an SRS resource set having resource Type configured as "periodic" through upper layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through upper layer signaling.

For example, the base station may activate or deactivate semi-persistent SRS transmission for the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resource Type configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through upper layer signaling.

For example, the base station may trigger aperiodic SRS transmission by the UE through DCI. The base station may indicate one of aperiodic SRS triggers (aperiodicSRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. The spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. The minimum time interval may have a different value depending on the place of use of the SRS resource set including the transmitted SRS resource. For example, the minimum time interval may be determined as N2 symbols defined in view of UE processing capability that follows the UE's capability with reference to the UE's PUSCH preparation procedure time. In addition, if the place of use of the SRS resource set is configured as "codebook" or "antennaSwitching" in view of the place of use of the SRS resource set including the transmitted SRS resource, the minimum time interval may be determined as N2 symbols, and if the place of use of the SRS resource set is configured as "nonCodebook" or "'beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 36]

```
SRS-Resource ::=                        SEQUENCE {
    srs-ResourceId                          SRS-ResourceId,
    nrofSRS-Ports                           ENUMERATED {port1, ports2, ports4},
    ptrs-PortIndex                          ENUMERATED {n0, n1 }
 OPTIONAL,     -- Need R
    transmissionComb                        CHOICE {
        n2                                      SEQUENCE {
            combOffset-n2                           INTEGER (0..1),
            cyclicShift-n2                          INTEGER (0..7)
        },
        n4                                      SEQUENCE {
            combOffset-n4                           INTEGER (0..3),
            cyclicShift-n4                          INTEGER (0..11)
        }
    },
    resourceMapping                         SEQUENCE {
        startPosition                           INTEGER (0..5),
        nrofSymbols                             ENUMERATED {n1, n2, n4},
        repetitionFactor                        ENUMERATED {n1, n2, n4}
    },
    freqDomainPosition                      INTEGER (0..67),
    freqDomainShift                         INTEGER (0..268),
    freqHopping                             SEQUENCE {
        c-SRS                                   INTEGER (0..63),
        b-SRS                                   INTEGER (0..3),
        b-hop                                   INTEGER (0..3)
    },
    groupOrSequenceHopping                  ENUMERATED { neither, groupHopping,
quenceHopping },
    resourceType                            CHOICE {
        aperiodic                               SEQUENCE {
            ...
        },
        semi-persistent                         SEQUENCE {
            periodicityAndOffset-sp                 SRS-PeriodicityAndOffset,
            ...
        },
        periodic                                SEQUENCE {
            periodicityAndOffset-p                  SRS-PeriodicityAndOffset,
            ...
        }
    },
    sequenceId                              INTEGER (0..1023),
    spatialRelationInfo                     SRS-SpatialRelationInfo
 OPTIONAL,     -- Need R
    ...
}
```

Configuration information spatialRelationInfo in Table 36 above may be applied, with reference to one reference signal, to a beam used for SRS transmission corresponding to beam information of the corresponding reference signal. For example, configuration of spatialRelationInfo may include information as in Table 37 below.

[Table 37]

```
SRS-SpatialRelationInfo ::=          SEQUENCE {
      servingCellId                                                  ServCellIndex
OPTIONAL,      -- Need S
      referenceSignal                                              CHOICE {
                ssb-Index                                                              SSB-Index,
                csi-RS-Index                                                       NZP-CSI-RS-
ResourceId,
                srs
SEQUENCE {
                              resourceId                                                           SRS-
ResourceId,
                              uplinkBWP
BWP-Id
                }
          }
}
```

Referring to the above-described spatialRelationInfo configuration, an SS/PBCH block index, CSI-RS index, or SRS index may be configured as the index of a reference signal to be referred to in order to use beam information of a specific reference signal. Upper signaling reference Signal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If upper signaling reference Signal has a configured value of "ssb-Index", the UE may apply the reception beam which was used to receive the SS/PBCH block corresponding to ssb-Index as the transmission beam for the corresponding SRS transmission. If upper signaling reference Signal has a configured value of "'csi-RS-Index", the UE may apply the reception beam which was used to receive the CSI-RS corresponding to csi-RS-Index as the transmission beam for the corresponding SRS transmission. If upper signaling referenceSignal has a configured value of "'srs", the UE may apply the reception beam which was used to transmit the SRS corresponding to srs as the transmission beam for the corresponding SRS transmission.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 16 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 16 through upper signaling. If PUSCH transmission is operated by a configured grant, parameters applied to the PUSCH transmission are applied through configuredGrantConfig (upper signaling) in Table 38 except for dataScramblingIdentityPUSCH, txConfig, codebookSubset, maxRank, and scaling of UCI-OnPUSCH, which are provided by pusch-Config (upper signaling) in Table 39. If provided with transformPrecoder inside configuredGrantConfig (upper signaling) in Table 38, the UE applies tp-pi2BPSK inside pusch-Config in Table 39 to PUSCH transmission operated by a configured grant.

[Table 38]

```
ConfiguredGrantConfig ::=                    SEQUENCE {
     frequencyHopping                              ENUMERATED {intraSlot, interSlot}
OPTIONAL,      -- Need S,
     cg-DMRS-Configuration                    DMRS-UplinkConfig,
     mcs-Table                                     ENUMERATED {qam256,
qam64LowSE}                                             OPTIONAL,      -- Need S
     mcs-TableTransformPrecoder              ENUMERATED {qam256, qam64LowSE}
OPTIONAL,      -- Need S
     uci-OnPUSCH                                   SetupRelease { CG-UCI-
OnPUSCH }                                            OPTIONAL,      -- Need M
     resourceAllocation                        ENUMERATED { resourceAllocationType0,
resourceAllocationType1, dynamicSwitch },
     rbg-Size                                            ENUMERATED
{config2}                                                        OPTIONAL,
-- Need S
     powerControlLoopToUse                       ENUMERATED {n0, n1},
     p0-PUSCH-Alpha                                   P0-PUSCH-AlphaSetId,
     transformPrecoder                                 ENUMERATED {enabled,
disabled}                                          OPTIONAL,      -- Need S
     nrofHARQ-Processes                          INTEGER(1..16),
     repK                                                    ENUMERATED
{n1, n2, n4, n8},
```

```
    repK-RV                                                  ENUMERATED {s1-
0231, s2-0303, s3-0000}                                     OPTIONAL,    -- Need R
    periodicity                                              ENUMERATED {
                                                                    sym2, sym7,
sym1x14, sym2x14, sym4x14, sym5x14, sym8x14, sym10x14, sym16x14, sym20x14,
                                                                    sym32x14,
sym40x14, sym64x14, sym80x14, sym128x14, sym160x14, sym256x14, sym320x14,
sym512x14,
                                                                    sym640x14,
sym1024x14, sym1280x14, sym2560x14, sym5120x14,
                                                                    sym6, sym1x12,
sym2x12, sym4x12, sym5x12, sym8x12, sym10x12, sym16x12, sym20x12, sym32x12,
                                                                    sym40x12,
sym64x12, sym80x12, sym128x12, sym160x12, sym256x12, sym320x12, sym512x12,
sym640x12,
                                                                    sym1280x12,
sym2560x12
    },
    configuredGrantTimer                                     INTEGER (1..64)
OPTIONAL,    -- Need R
    rrc-ConfiguredUplinkGrant                                SEQUENCE {
        timeDomainOffset                                     INTEGER (0..5119),
        timeDomainAllocation                                 INTEGER   (0..15),
        frequencyDomainAllocation                            BIT STRING (SIZE(18)),
        antennaPort                                          INTEGER
(0..31),
        dmrs-SeqInitialization                               INTEGER (0..1)
OPTIONAL,    -- Need R
        precodingAndNumberOfLayers                           INTEGER (0..63),
        srs-ResourceIndicator                                INTEGER (0..15)
OPTIONAL,    -- Need R
        mcsAndTBS
INTEGER (0..31),
        frequencyHoppingOffset                               INTEGER (1..
maxNrofPhysicalResourceBlocks-1)                OPTIONAL,    -- Need R
        pathlossReferenceIndex                               INTEGER
(0..maxNrofPUSCH-PathlossReferenceRSs-1),
        ...
    }
OPTIONAL,    -- Need R
    ...
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 39, which is upper signaling, is "codebook" or "nonCodebook".

The codebook-based PUSCH transmission may be dynamically scheduled through DCI format 0_0 or 0_1, and may be configured semi-statically by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 39, the UE does not expect scheduling through DCI format 0_1.

[Table 39]

```
PUSCH-Config ::=                                    SEQUENCE {
      dataScramblingIdentityPUSCH                       INTEGER (0..1023)
OPTIONAL,      -- Need S
      txConfig
ENUMERATED {codebook, nonCodebook}
OPTIONAL,      -- Need S
      dmrs-UplinkForPUSCH-MappingTypeA             SetupRelease { DMRS-
UplinkConfig }                                       OPTIONAL,      -- Need M
      dmrs-UplinkForPUSCH-MappingTypeB             SetupRelease { DMRS-
UplinkConfig }                                       OPTIONAL,      -- Need M

      pusch-PowerControl                                    PUSCH-PowerControl
OPTIONAL,      -- Need M
      frequencyHopping                                        ENUMERATED
{intraSlot, interSlot}                                  OPTIONAL,      -- Need
S
      frequencyHoppingOffsetLists                   SEQUENCE (SIZE (1..4)) OF
INTEGER (1.. maxNrofPhysicalResourceBlocks-1)
OPTIONAL,      -- Need M
      resourceAllocation                          ENUMERATED
{ resourceAllocationType0, resourceAllocationType1, dynamicSwitch},
      pusch-TimeDomainAllocationList           SetupRelease { PUSCH-
TimeDomainResourceAllocationList }               OPTIONAL,      -- Need M
      pusch-AggregationFactor                      ENUMERATED { n2, n4, n8 }
OPTIONAL,      -- Need S
      mcs-Table                                                ENUMERATED
{qam256, qam64LowSE}                                         OPTIONAL,      -
- Need S
      mcs-TableTransformPrecoder                 ENUMERATED {qam256,
qam64LowSE}                                        OPTIONAL,      -- Need S
      transformPrecoder                                     ENUMERATED
{enabled, disabled}                                      OPTIONAL,      --
Need S
```

```
    codebookSubset                                          ENUMERATED
{fullyAndPartialAndNonCoherent, partialAndNonCoherent,nonCoherent}
OPTIONAL, -- Cond codebookBased
    maxRank                                                      INTEGER
(1..4)
OPTIONAL, -- Cond codebookBased
    rbg-Size
ENUMERATED { config2}
OPTIONAL, -- Need S
    uci-OnPUSCH                                          SetupRelease { UCI-
OnPUSCH}                                        OPTIONAL, -- Need M
    tp-pi2BPSK                                              ENUMERATED
{enabled}                                                  OPTIONAL, -- Need
S
    ...
}
```

Hereinafter, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent"' as UE capability, the UE does not expect that the value of codebookSubset (upper signaling) will be configured as "fullyAndPartialAndNonCoherent". In addition, if the UE reported "noncoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to upper signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resource Type inside SRS-ResourceSet (upper signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI may indicate an index that may express one SRS resource or a combination of multiple SRS resources. The number of SRS resources indicated by the SRI transmitted by the base station may be the number of transmission layers of the PUSCH, and the UE transmits the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in an NR system in consideration thereof. The PUSCH preparation procedure time of the UE may follow Equation 4 given below.

[Equation 4]

$$T_{proc,2} = \max((N_2 + d_{2,1} + d_2)(2048 + 144)\kappa 2^{-\mu} T_c + T_{ext} + T_{switch}, d_{2,2})$$

Each parameter in $T_{proc,2}$ described above in Equation 4 may have the following meaning.

**[0224]** - $N_2$: the number of symbols determined according to UE processing capability 1 or 2, based on the UE's capability, and numerology $\mu$. $N_2$ may have a value in Table 40 if UE processing capability 1 is reported according to the UE's capability report, and may have a value in Table 41 if UE processing capability 2 is reported, and if availability of UE processing capability 2 is configured through upper layer signaling.

[Table 40]

| $\mu$ | PUSCH preparation time $N_2$ [symbols] |
|---|---|
| 0 | 10 |
| 1 | 12 |
| 2 | 23 |
| 3 | 36 |

[Table 41]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DM-RSs, and to be 1 otherwise.
- $\kappa$: 64
- $\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.
- $T_c$: has $1/(\Delta f_{max} \cdot N_f)$, $\Delta f_{max} = 480 \cdot 10^3 Hz$, $N_f = 4096$..
- $d_{2,2}$: follows a BWP switching time if DCI that schedules a PUSCH indicates BWP switching, and has 0 otherwise.
- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

The base station and the UE determine that the PUSCH preparation procedure time is insufficient if the first symbol of a PUSCH starts earlier than the first uplink symbol in which a CP starts after Tproc,2 from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[PUSCH: regarding repeated transmission]

Hereinafter, repeated transmission of an uplink data channel in a 5G system will be described in detail. A 5G system supports two types of methods for repeatedly transmitting an uplink data channel, PUSCH repeated transmission type A and PUSCH repeated transmission type B. One of PUSCH repeated transmission type A and type B may be configured for a UE through upper layer signaling.

<u>**PUSCH repeated transmission type A**</u>

- As described above, the symbol length of an uplink data channel and the location of the start symbol may be determined by a time domain resource allocation method in one slot, and a base station may notify a UE of the number of repeated transmissions through upper layer signaling (for example, RRC signaling) or L1 signaling (for example, DCI).
- Based on the number of repeated transmissions received from the base station, the UE may repeatedly transmit an uplink data channel having the same length and start symbol as the configured uplink data channel, in a continuous slot. If the base station configured a slot as a downlink for the UE, or if at least one of symbols of the uplink data channel configured for the UE is configured as a downlink, the UE omits uplink data channel transmission, but counts the number of repeated transmissions of the uplink data channel.

**PUSCH repeated transmission type B**

- As described above, the symbol length of an uplink data channel and the location of the start symbol may be determined by a time domain resource allocation method in one slot, and a base station may notify a UE of the number of repeated transmissions (numberofrepetitions) through upper layer signaling (for example, RRC signaling) or L1 signaling (for example, DCI).
- The nominal repetition of the uplink data channel is determined as follows, based on the previously configured start symbol and length of the uplink data channel. The slot in which the n$^{th}$ nominal repetition starts is given by $K_s + \left\lfloor \frac{S+n\cdot L}{N_{symb}^{slot}} \right\rfloor$, and the symbol starting in that slot is given by $mod\left(S + n \cdot L, N_{symb}^{slot}\right)$. The slot in which the n$^{th}$ nominal repetition ends is given by $K_s + \left\lfloor \frac{S+(n+1)\cdot L-1}{N_{symb}^{slot}} \right\rfloor$, and the symbol ending in that slot is given by *mod* ($S$ + ($n$ + 1). $L - 1, N_{symb}^{slot}\big)$. In this regard, n=0,..., numberofrepetitions-1, S refers to the start symbol of the configured uplink data channel, and L refers to the symbol length of the configured uplink data channel. $K_s$ refers to the slot in which PUSCH transmission starts, and $N_{symb}^{slot}$ refers to the number of symbols per slot.
- The UE determines an invalid symbol for PUSCH repeated transmission type B. A symbol configured as a downlink by tdd-UL-DL-ConfigurationCommon or tdd-UL-DL-ConfigurationDedicated is determined as the invalid symbol for PUSCH repeated transmission type B. Additionally, the invalid symbol may be configured in an upper layer parameter (for example, InvalidSymbolPattern). The upper layer parameter (for example, InvalidSymbolPattern) may provide a symbol level bitmap across one or two slots, thereby configuring the invalid symbol. In the bitmap, 1 represents the invalid symbol. Additionally, the cycle and pattern of the bitmap may be configured through the upper layer parameter (for example, InvalidSymbolPattern). If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 indicates 1, the UE applies an invalid symbol pattern, and if the above parameter indicates 0, the UE does not apply the invalid symbol pattern. If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 is not configured, the UE applies the invalid symbol pattern.

After an invalid symbol is determined, the UE may consider, with regard to each nominal repetition, that symbols other than the invalid symbol are valid symbols. If one or more valid symbols are included in each nominal repetition, the nominal repetition may include one or more actual repetitions. Each actual repetition includes a set of consecutive valid symbols available for PUSCH repeated transmission type B in one slot.

FIG. 17 illustrates an example of PUSCH repeated transmission type B in a wireless communication system according to an embodiment of the disclosure.

The UE may receive the following configurations: the start symbol S of an uplink data channel is 0, the length L of the uplink data channel is 14, and the number of repeated transmissions is 16. In this case, nominal repetitions may appear in 16 consecutive slots (%n). Thereafter, the UE may determine that the symbol configured as a downlink symbol in each nominal repetition 1701 is an invalid symbol. The UE determines that symbols configured as 1 in the invalid symbol pattern 1702 are invalid symbols. If valid symbols other than invalid symbols in respective nominal repetitions constitute one or more consecutive symbols in one slot, they are configured and transmitted as actual repetitions (1703).

With regard to PUSCH repeated transmission, additional methods may be defined in NR Release 16 with regard to UL grant-based PUSCH transmission and configured grant-based PUSCH transmission, across slot boundaries, as follows:

- Method 1 (mini-slot level repetition): through one UL grant, two or more PUSCH repeated transmissions are scheduled inside one slot or across the boundary of consecutive slots. connection with method 1, time domain resource allocation information inside DCI indicates resources of the first repeated transmission. In addition, time domain resource information of remaining repeated transmissions may be determined according to time domain resource information of the first repeated transmission, and the uplink or downlink direction determined with regard to each symbol of each slot. Each repeated transmission occupies consecutive symbols.
- Method 2 (multi-segment transmission): through one UL grant, two or more PUSCH repeated transmissions are scheduled in consecutive slots. Transmission no. 1 may be designated with regard to each slot, and the start point or repetition length may differ between respective transmission. In method 2, time domain resource allocation information inside DCI indicates the start point and repetition length of all repeated transmissions. In the case of performing repeated transmissions inside a single slot through method 2, if there are multiple bundles of consecutive uplink symbols in the corresponding slot, respective repeated transmissions may be performed with regard to respective uplink symbol bundles. If there is a single bundle of consecutive uplink symbols in the corresponding slot, PUSCH repeated transmission is performed once according to the method of NR Release 15.
- Method 3: two or more PUSCH repeated transmissions are scheduled in consecutive slots through two or more UL grants. Transmission no. 1 is designated for each slot, and the nth UL grant may be received before PUSCH transmission scheduled by the (n-1)th UL grant is over.
- Method 4: through one UL grant or one configured grant, one or multiple PUSCH repeated transmissions inside a single slot, or two or more PUSCH repeated transmissions across the boundary of consecutive slots may be supported. The number of repetitions indicated to the UE by the base station is only a nominal value, and the UE may actually perform a larger number of PUSCH repeated transmissions than the nominal number of repetitions. Time domain resource allocation information inside DCI or configured grant refers to resources of the first repeated transmission indicated by the base station. Time domain resource information of remaining repeated transmissions may be determined with reference to resource information of the first repeated transmission and the uplink or downlink direction of symbols. If time domain resource information of a repeated transmission indicated by the base station spans a slot boundary or includes an uplink/downlink switching point, the corresponding repeated transmission may be divided into multiple repeated transmissions. One repeated transmission may be included in one slot with regard to each uplink period.

[PUSCH: frequency hopping process]

Hereinafter, frequency hopping of a physical uplink shared channel (PUSCH) in a 5G system will be described in detail.

5G supports two kinds of PUSCH frequency hopping methods with regard to each PUSCH repeated transmission type. First of all, in PUSCH repeated transmission type A, intra-slot frequency hopping and inter-slot frequency hopping are supported, and in PUSCH repeated transmission type B, inter-repetition frequency hopping and inter-slot frequency hopping are supported.

The intra-slot frequency hopping method supported in PUSCH repeated transmission type A is a method in which a UE transmits allocated resources in the frequency domain, after changing the same by a configured frequency offset, by two hops in one slot. The start RB of each hop in connection with intra-slot frequency hopping may be expressed by Equation 5 below:

[Equation 5]

$$RB_{start} = \begin{cases} RB_{start} & i = 0 \\ \left(RB_{start} + RB_{offset}\right) mod N_{BWP}^{size} & i = 1 \end{cases}$$

In Equation 5, i=0 and i=1 may denote the first and second hops, respectively, and $RB_{start}$ may denote the start RB in a UL BWP and may be calculated from a frequency resource allocation method. $RB_{offset}$ denotes a frequency offset between two hops through an upper layer parameter. The number of symbols of the first hop may be represented by $\lfloor N_{symb}^{PUSCH,s}/2 \rfloor$, and number of symbols of the second hop may be represented by $N_{symb}^{PUSCH,s} - \lfloor N_{symb}^{PUSCH,s}/2 \rfloor$.

$N_{symb}^{PUSCH,s}$ is the length of PUSCH transmission in one slot and is expressed by the number of OFDM symbols.

Next, the inter-slot frequency hopping method supported in PUSCH repeated transmission types A and B is a method in which the UE transmits allocated resources in the frequency domain, after changing the same by a configured frequency offset, in each slot. The start RB during a slot in connection with inter-slot frequency hopping may be expressed by Equation 6 below.

[Equation 6]

$$RB_{start}(n_s^\mu) = \begin{cases} RB_{start} & n_s^\mu mod2 = 0 \\ (RB_{start} + RB_{offset})modN_{BWP}^{size} & n_s^\mu mod2 = 1 \end{cases}$$

In Equation 6, $n_s^\mu$ denotes the current slot number during multi-slot PUSCH transmission, and $RB_{start}$ denotes the start RB inside a UL BWP and is calculated from a frequency resource allocation method. $RB_{offset}$ denotes a frequency offset between two hops through an upper layer parameter.

The inter-repetition frequency hopping method supported in PUSCH repeated transmission type B may be a method in which resources allocated in the frequency domain regarding one or multiple actual repetitions in each nominal repetition are moved by a configured frequency offset and then transmitted. The index RBstart(n) of the start RB in the frequency domain regarding one or multiple actual repetitions in the nth nominal repetition may follow Equation 7 given below:

[Equation 7]

$$RB_{start}(n) = \begin{cases} RB_{start} & nmod2 = 0 \\ (RB_{start} + RB_{offset})modN_{BWP}^{size} & nmod2 = 1 \end{cases}$$

In Equation 7, n denotes the index of nominal repetition, and $RB_{offset}$ denotes an RB offset between two hops through an upper layer parameter.

[Regarding UE capability report]

In LTE and NR, a UE may perform a procedure in which, while being connected to a serving base station, the UE reports capability supported by the UE to the corresponding base station. In the following description, the above-described procedure will be referred to as a UE capability report.

The base station may transfer a UE capability enquiry message to the UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone (SA). That is, the UE configures a candidate list of BCs regarding EN-DC and NR SA, based on bands received from the base station at a request through FreqBandList. Bands have priority in the order described in FreqBandList.
2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE selects BCs appropriate for the requested RAT type from the final "candidate BC list" and configures BCs to report. In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

[Regarding CA/DC]

FIG. 18 illustrates radio protocol structures of a base station and a UE in single cell, carrier aggregation, and dual connectivity situations according to an embodiment of the disclosure.

Referring to FIG. 18, a radio protocol of a mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the upper layer in sequence. The in-sequence delivery of the NR RLC device may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The above-mentioned out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

[Related to NC-JT]

According to an embodiment of the disclosure, non-coherent joint transmission (NC-JT) may be used to enable a UE to receive a PDSCH from multiple TRPs.

Unlike conventional systems, a 5G wireless communication system may not only support a service requiring high data rate, but also a service having very short transmission latency and a service requiring high connection density. In a wireless communication network including multiple cells, transmission and reception points (TRPs), or beams, cooperative communication (coordinated transmission) between cells, TRPs, and/or beams may increase the strength of a signal received by a UE or efficiently perform interference control between cells, TRPs, and/or beams so as to satisfy various service requirements.

Joint transmission (JT) is a representative transmission technology for cooperative communication described above, and, in the technology, a signal is transmitted to one UE through multiple different cells, TRPs, and/or beams so as to increase the processing rate or the strength of the signal received by the UE. Channels between cells, TRPs, and/or beams and the UE may have large difference in the characteristic thereof. Particularly, in a case of non-coherent joint transmission (NC-JT) supporting non-coherent precoding between cells, TRPs, and/or beams, individual precoding, an MCS, resource allocation, and TCI indication may be required according to a channel characteristic for each of links between the UE and the cells, TRPs, and/or beams.

NC-JT described above may be applied to at least one channel among a downlink data channel (physical downlink shared channel, PDSCH), a downlink control channel (physical downlink control channel, PDCCH), an uplink data channel (physical uplink shared channel, PUSCH), and an uplink control channel (physical uplink control channel, PUCCH). At the time of PDSCH transmission, transmission information, such as precoding, an MCS, resource allocation, and a TCI, is indicated through DL DCI, and the transmission information is required to be independently indicated for each cell, TRP, and/or beam for NC-JT. This is a main reason of increasing a payload required for DL DCI transmission and may adversely affect the reception performance of a PDCCH transmitting DCI. Therefore, in order to support JT of a PDSCH, careful design of the tradeoff between the amount of DCI information and the reception performance of control information is necessary.

FIG. 19 is a diagram illustrating an example of an antenna port configuration and resource allocation for transmitting a PDSCH by using cooperative communication in a wireless communication system according to an embodiment of the disclosure.

Referring to FIG. 19, an example for PDSCH transmission is described for each joint transmission (JT) technique, and embodiments for allocating a wireless resource for each TRP are illustrated.

Referring to FIG. 19, an example N000 for coherent joint transmission (C-JT) supporting coherent precoding between cells, TRPs, and/or beams is illustrated.

In a case of C-JT, TRP A N005 and TRP B N010 transmit single data (PDSCH) to a UE N015, and multiple TRPs may perform joint precoding. This may imply that a DMRS is transmitted through the same DMRS ports to allow TRP A N005 and TRP B N010 to transmit the same PDSCH. For example, each of TRP A N 005 and TRP B N010 may transmit a DMRS to the UE through DMRS port A and DMRS B. In this case, the UE may receive one piece of DCI information for receiving one PDSCH demodulated based on the DMRS transmitted through DMRS port A and DMRS B.

FIG. 19 illustrates an example N020 of non-coherent joint transmission (NC-JT) supporting non-coherent precoding between cells, TRPs, and/or beams for PDSCH transmission.

In a case of NC-JT, respective cells, TRPs, and/or beams transmit PDSCHs to a UE N035, and individual precoding may be applied to each PDSCH. Respective cells, TRPs, and/or beams may transmit different PDSCHs or different PDSCH layers to the UE so as to improve a processing rate compared to single cell, TRP, and/or beam transmission. In addition, respective cells, TRPs, and/or beams may repeat transmission of the same PDSCH to the UE so as to improve reliability compared to single cell, TRP, and/or beam transmission. For convenience of explanation, hereinafter, a cell, TRP, and/or beam are collectively called a TRP.

Various wireless resource allocations may be considered as in a case N040 where frequency and time resources used in multiple TRPs for PDSCH transmission are all the same, a case N045 where frequency and time resources used in multiple TRPs do not overlap at all, and a case N050 where some of frequency and time resources used in multiple TRPs overlap.

For NC-JT support, pieces of DCI having various types, structures, and relations may be considered to simultaneously allocate multiple PDSCHs to one UE.

FIG. 20 is a diagram illustrating a configuration example of downlink control information (DCI) for NC-JT wherein respective TRPs transmit different PDSCHs or different PDSCH layers to a UE in a wireless communication system according to an embodiment of the disclosure.

Referring to FIG. 20, case #1 N100 is an example in which, in a situation where different (N-1) number of PDSCHs are transmitted from additional (N-1) number of TRPs (TRP #1 to TRP #(N-1)) other than a serving TRP (TRP #0) used at the time of single PDSCH transmission, control information for the PDSCHs transmitted from the additional (N-1) number of TRPs is transmitted independently of control information for a PDSCH transmitted from the serving TRP. That is, a UE may obtain control information for PDSCHs transmitted from different TRPs (TRP #0 to TRP #(N-1)) through independent pieces of DCI (DCI #0 to DCI #(N-1)). The formats of the independent pieces of DCI may be identical to or different from each other, and the payloads of the pieces of DCI may also be identical to or different from each other. In case #1 described above, free control or allocation of each PDSCH may be completely ensured, but when pieces of DCI are transmitted from different TRPs, there occurs a difference in coverage between the pieces of DCI and thus reception performance may be degraded.

Case #2 N105 shows an example where, in a situation where different (N-1) number of PDSCHs are transmitted from additional (N-1) number of TRPs (TRP #1 to TRP #(N-1)) other than a serving TRP (TRP #0) used at the time of single PDSCH transmission, pieces of control information (DCI) for the PDSCHs of the additional (N-1) number of TRPs are transmitted respectively, and each of the pieces of DCI is dependent on control information for a PDSCH transmitted from the serving TRP.

For example, DCI #0 that is the control information for the PDSCH transmitted from the serving TRP (TRP #0) includes all information elements of DCI format 1_0, DCI format 1_1, or DCI format 1_2, but shortened DCI (hereinafter, sDCI) (sDCI #0 to sDCI #(N-2)) that is control information for each of PDSCHs transmitted from cooperative TRPs (TRP #1 to TRP #(N-1)) may include only some of information elements of DCI format 1_0, DCI format 1_1, or DCI format 1_2. Therefore, sDCI transmitting control information for PDSCHs transmitted from the cooperative TRPs has a payload smaller than that of normal DCI (nDCI) transmitting control information related to a PDSCH transmitted from the serving TRP, and thus is able to include reserved bits compared to nDCI.

In case #2 described above, free control or allocation of each PDSCH may be limited according to the contents of information elements included in sDCI, but the reception performance of sDCI is superior to nDCI, and thus a probability that a difference in coverage between pieces of DCI may occur may be lowered.

Case #3 N110 shows an example in which, in a situation where different (N-1) number of PDSCHs are transmitted from additional (N-1) number of TRPs (TRP #1 to TRP #(N-1)) other than a serving TRP (TRP #0) used at the time of single PDSCH transmission, one piece of control information for the PDSCHs of the additional (N-1) number of TRPs is transmitted, and the piece of DCI is dependent on control information for a PDSCH transmitted from the serving TRP.

For example, DCI #0 that is the control information for the PDSCH transmitted from the serving TRP (TRP #0) includes all information elements of DCI format 1_0, DCI format 1_1, or DCI format 1_2 and, in a case of control information for PDSCHs transmitted from cooperative TRPs (TRP #1 to TRP #(N-1)), it may be possible to collect only some of information elements of DCI format 1_0, DCI format 1_1, or DCI format 1_2 in one piece of "secondary" DCI (sDCI) and transmit same. For example, the sDCI may include at least one piece of information among pieces of HARQ-related information, such as frequency domain resource assignment, time domain resource assignment, or an MCS of cooperative TRPs. In addition, other information not included in sDCI, such as a bandwidth part (BWP) indicator or a carrier indicator, may follow DCI (DCI #0, normal DCI, or nDCI) of the serving TRP.

Case #3 N110, free control or allocation of each PDSCH may be limited according to the contents of information elements included in sDCI, but the reception performance of sDCI is controllable and the complexity of DCI blind decoding of a UE may be reduced compared to case #1 N100 or case #2 N105.

Case #4 N115 is an example in which, in a situation where different (N-1) number of PDSCHs are transmitted from additional (N-1) number of TRPs (TRP #1-TRP #(N-1)) other than a serving TRP (TRP #0) used at the time of single PDSCH transmission, control information for the PDSCHs transmitted from the additional (N-1) number of TRPs is transmitted through the same DCI (long DCI) as that of control information for a PDSCH transmitted from the serving TRP. That is, a UE may obtain control information for PDSCHs transmitted from different TRPs (TRP #0-TRP #(N-1)) through single DCI. In case of case #4 N115, the complexity of DCI blind decoding of the UE may not be increased, but a PDSCH may not be freely controlled or allocated like the number of cooperative TRPs being limited due to the limitation of a long DCI payload.

In the following description and embodiments, sDCI may be referred to as various pieces of auxiliary DCI, such as shortened DCI, secondary DCI, or normal DCI (DCI format 1_0 or 1_1 described above) including PDSCH control information transmitted from a cooperative TRP, and if there is no special explicit limitation, the corresponding description is similarly applicable to the various pieces of auxiliary DCI.

In the following description and embodiments, case #1 N100, case #2 N105, and case #3 N110 described above in which one or more pieces of DCI (PDCCHs) are used for NC-JT support are classified as NC-JT based on multiple PDCCHs, and case #4 N115 described above in which single DCI (PDCCH) is used for NC-JT support may be classified as NC-JT based on a single PDCCH. In PDSCH transmission based on multiple PDCCHs, a CORESET in which DCI of a serving TRP (TRP #0) is scheduled may be distinguished from a CORESET in which DCI of cooperative TRPs (TRP #1 to TRP #(N-1)) is scheduled. As a method for distinguishing CORESETs, there may be a method of distinguishment using a higher layer indicator for each CORESET or a method of distinguishment using beam configuration for each CORESET. In addition, in NC-JT based on a single PDCCH, single DCI schedules a single PDSCH having multiple layers rather than scheduling multiple PDSCHs, and the multiple layers may be transmitted from multiple TRPs. The connection relation between a layer and a TRP transmitting the layer may be indicated through a transmission configuration indicator (TCI) indication for the layer.

In embodiments of the disclosure, a "cooperative TRP" may be replaced with various terms including a "cooperative panel" or a "cooperative beam", when actually applied.

In embodiments of the disclosure, "a case where NC-JT is applied" is variously interpretable in accordance with a situation as "a case where a UE simultaneously receives one or more PDSCHs in one BWP", "a case where a UE receives a PDSCH, based on two or more transmission configuration indicator (TCI) indications simultaneously, in one BWP", and "a case where a PDSCH received by a UE is associated with one or more DMRS port groups". However, for convenience of explanation, one expression is used.

In the disclosure, a wireless protocol structure for NC-JT may be variously used according to a TRP-based scenario. For example, if there is no or a small backhaul delay between cooperative TRPs, a method (CA-like method) using a structure based on MAC layer multiplexing similarly to the structure S10 in FIG. 18 is possible. On the contrary, if a backhaul delay between cooperative TRPs is large enough not to be ignorable (e.g., a time of 2 ms or longer is required for exchange of information, such as CSI, scheduling, or HARQ-ACK, between cooperative TRPs), a method (DC-like method) of using a TRP-specific independent structure from an RLC layer, similarly to the structure S20 in FIG. 18, so as to ensure a characteristic resistant to delays is possible.

A UE supporting C-JT/NC-JT may receive a parameter or setting value related to C-JT/NC-JT from a higher layer configuration, and set an RRC parameter of the UE, based on the same parameter or setting value. The UE may use a UE capability parameter, for example, tci-StatePDSCH for the higher layer configuration. The UE capability parameter, for example, tci-StatePDSCH may define TCI states for the purpose of PDSCH transmission, and the number of TCI states may be configured to be 4, 8, 16, 32, 64, or 128 in FR 1 and 64 and 128 in FR 2, and a maximum of 8 states indicatable by 3 bits of a TCI field of DCI among the configured number of TCI states may be configured through a MAC CE message. The maximum value 128 means a value indicated by maxNumberConfiguredTCIstatesPerCC in a tci-StatePDSCH parameter included in capability signaling of the UE. As described above, a series of configuration processes from a higher layer configuration to a MAC CE configuration may be applied to a beamforming indication or beamforming change command for at least one PDSCH from one TRP.

[Multi-DCI-based multi-TRP]

As an embodiment of the disclosure, a multi-DCI-based multi-TRP transmission method is described. In the multi-DCI-based multi-TRP transmission method, a downlink control channel for NC-JT may be configured based on multiple PDCCHs.

In NC-JT based on multiple PDCCHs, at the time of DCI transmission for PDSCH scheduling of each TRP, a CORESET or a search space distinguished by each TRP may be provided. The CORESET or search space for each TRP may be configurable as at least one of the following cases.

* Configuration of higher layer index for each CORESET: CORESET configuration information configured through a higher layer may include an index value, and the configured index value for each CORESET may be used to distinguish a TRP transmitting a PDCCH in a corresponding CORESET. That is, in a set of CORESETs having the same higher layer index value, it may be considered that the same TRP transmits a PDCCH or a PDCCH scheduling a PDSCH of the same TRP is transmitted. The index for each CORESET may be called CORESETPoolIndex, and it may be considered that a PDCCH is transmitted from the same TRP in CORESETs configured to have the same value of CORESETPoolIndex. For a CORESET for which a value of CORESETPoolIndex is not configured, it may be considered that a default value of CORESETPoolIndex is configured, and the default value may be 0.

- In the disclosure, if the number of CORESETPoolIndex types of multiple CORESETs included in the higher layer signaling PDCCH-Config exceeds 1, that is, if each CORESET has a different value of CORESETPoolIndex, a UE may consider that a base station is able to use a multi-DCI-based multi-TRP transmission method.

- On the contrary, in the disclosure, if the number of CORESETPoolIndex types of multiple CORESETs included in the higher layer signaling PDCCH-Config is 1, that is, if all the CORESETs have the same value of CORESETPoolIndex, such as 0 or 1, a UE may consider that a base station performs transmission by using a single TRP without using a multi-DCI-based multi-TRP transmission method.

* Configuration of multiple values of PDCCH-Config: Multiple values of PDCCH-Config are configured in one BWP, each value of PDCCH-Config may include a TRP-specific PDCCH configuration. That is, a CORESET list for each TRP and/or a search space list for each TRP may be configured in one value of PDCCH-Config, and one or more CORESETs and one or more search spaces included in one value of PDCCH-Config may be considered to correspond to a particular TRP.
* CORESET beam/beam group configuration: Through a beam or beam group configured for each CORESET, a TRP corresponding to a corresponding CORESET may be distinguished. For example, if the same TCI state is configured for multiple CORESETs, it may be assumed that the CORESETs are transmitted through the same TRP or a PDCCH scheduling a PDSCH of the same TRP is transmitted in the CORESETs.
* Search space beam/beam group configuration: A beam or beam group is configured for each search space, and a TRP for each search space may be distinguished therethrough. For example, if the same beam/beam group or TCI state is configured for multiple search spaces, it may be assumed that the same TRP transmits a PDCCH in the search spaces or a PDCCH scheduling a PDSCH of the same TRP is transmitted in the search spaces.

A CORESET or search space is distinguished by each TRP as described above, whereby classification of a PDSCH and HARQ-ACK information for each TRP is possible and thus independent generation of a HARQ-ACK codebook and independent usage of PUCCH resources for each TRP are possible.

This configuration may be independent for each cell or each BWP. For example, two different values of CORESETPoolIndex may be configured in a PCell, and on the contrary, a value of CORESETPoolIndex may not be configured in a particular SCell. In this case, it may be assumed that NC-JT is configured in the PCell, but NC-JT is not configured in the SCell in which a value of CORESETPoolIndex is not configured.

A PDSCH TCI state activation/deactivation MAC-CE which is applicable to a multi-DCI-based multi-TRP transmission method may follow FIG. 15 described above. If CORESETPoolIndex for all CORESETs in the higher layer signaling PDCCH-Config is not configured for the UE, the UE may disregard a CORESET pool ID field 15-55 in a MAC-CE 15-50. If the UE is able to support a multi-DCI-based multi-TRP transmission method, that is, if respective CORESETs in the higher layer signaling PDCCH-Config have different values of CORESETPoolIndex, the UE may activate a TCI state in DCI included in PDCCHs transmitted in CORESETs having the same CORESETPoolIndex value as that of the CORESET pool ID field 15-55 in the MAC-CE 15-50. For example, if the value of the CORESET pool ID field 15-55 in the MAC-CE 15-50 is 0, a TCI state in DCI included in PDCCHs transmitted from CORESETs having CORESETPoolIndex of 0 may follow activation information of the MAC-CE.

In a case where the UE is configured by the base station to be able to use a multi-DCI-based multi-TRP transmission method, that is, in a case where the number of CORESETPoolIndex types of multiple CORESETs included in the higher layer signaling PDCCH-Config exceeds 1, or in a case where the respective CORESETs have different values of CORESETPoolIndex, the UE may recognize that PDSCHs scheduled by PDCCHs in the respective CORESETs having two different values of CORESETPoolIndex have the following restrictions.

1) If PDSCHs indicated by PDCCHs in respective CORESETs having two different values of CORESETPoolIndex fully or partially overlap with each other, the UE may apply TCI states indicated by the PDCCHs to different CDM groups, respectively. That is, two or more TCI states may not be applied to one CDM group.
2) If PDSCHs indicated by PDCCHs in respective CORESETs having two different values of CORESETPoolIndex fully or partially overlap with each other, the UE may expect that the PDSCHs have the same number of actual front loaded DMRS symbols, the same number of actual additional DMRS symbols, the same position of an actual DMRS symbol, and the same DMRS type.
3) The UE may expect that bandwidth parts indicated by PDCCHs in respective CORESETs having two different values of CORESETPoolIndex are the same and subcarrier spacings indicated thereby are also the same.
4) The UE may expect that information on a PDSCH scheduled by a PDCCH in each of CORESETs having two different values of CORESETPoolIndex is fully included in the PDCCH.

[Single-DCI-based multi-TRP]

As an embodiment of the disclosure, a single-DCI-based multi-TRP transmission method is described. In the single-DCI-based multi-TRP transmission method, a downlink control channel for NC-JT may be configured based on a single PDCCH.

In the single-DCI-based multi-TRP transmission method, a PDSCH transmitted by multiple TRPs may be scheduled by one DCI. As a method of indicating the number of TRPs transmitting the PDSCH, the number of TCI states may be used. That is, if the number of TCI states indicated in DCI for scheduling a PDSCH is 2, transmission may be considered to be single PDCCH-based NC-JT, and if the number of TCI states is 1, transmission may be considered to be single-TRP transmission. The TCI states indicated in the DCI may correspond to one or two TCI states among TCI states activated by a MAC-CE. If TCI states of DCI correspond to two TCI states activated by a MAC-CE, a TCI codepoint indicated in the DCI and the TCI states activated by the MAC-CE may have a correspondence relation, and this may correspond to a case where the number of the TCI states activated by the MAC-CE and corresponding to the TCI codepoint is 2.

As another example, if at least one codepoint among all codepoints of a TCI state field in DCI indicates two TCI states, a UE may consider that a base station is able to perform transmission based on a single-DCI-based multi-TRP method. The at least one codepoint indicating two TCI states in the TCI state field may be activated through an enhanced PDSCH TCI state activation/deactivation MAC-CE.

FIG. 21 is a diagram illustrating an enhanced PDSCH TCI state activation/deactivation MAC-CE structure. The meaning of each field in the MAC CE and a value configurable in each field are as follows.

- Serving Cell ID: This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2,* respectively;
- BWP ID: This field indicates a DL BWP for which the MAC CE applies as the codepoint of the DCI bandwidth part indicator field as specified in TS 38.212 [9]. The length of the BWP ID field is 2 bits;
- $C_i$: This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present;
- TCI state $ID_{i,j}$: This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e., the first TCI codepoint with TCI state $ID_{0,1}$ and TCI state $ID_{0,2}$ shall be mapped to the codepoint value 0, the second TCI codepoint with TCI state $ID_{1,1}$ and TCI state $ID_{1,2}$ shall be mapped to the codepoint value 1 and so on. The TCI state $ID_{i,2}$ is optional based on the indication of the Ci field. The maximum number of activated TCI codepoint is 8 and the maximum number of TCI states mapped to a TCI codepoint is 2.
- **R:** Reserved bit, set to "0".

In FIG. 21, if the value of a $C_0$ field 21-05 is 1, the MAC-CE may include a TCI state $ID_{0,2}$ field 21-15 in addition to a TCI state $ID_{0,1}$ field 21-10. This implies that TCI state $ID_{0,1}$ and TCI state $ID_{0,2}$ are activated for the 0-th codepoint of a TCI state field included in DCI, and if the base station indicates the codepoint to the UE, two TCI states may be indicated to the UE. If the value of the $C_0$ field 21-05 is 0, the MAC-CE is unable to include the TCI state $ID_{0,2}$ field 21-15, and this implies that one TCI state corresponding to TCI state $ID_{0,1}$ is activated for the 0-th codepoint of a TCI state field included in DCI.

This configuration may be independent for each cell or each BWP. For example, the number of activated TCI states corresponding to one TCI codepoint is a maximum of 2 in a PCell, but the number of activated TCI states corresponding to one TCI codepoint may be a maximum of 1 in a particular SCell. In this case, it may be considered that NC-JT is configured in the PCell, but NC-JT is not configured in the SCell.

[Single-DCI-based multi-TRP PDSCH repetition technique (TDM/FDM/SDM) distinguishment method]

Next, a method of distinguishing a single-DCI-based multi-TRP PDSCH repetition technique is described. Different single-DCI-based multi-TRP PDSCH repetition techniques (e.g., TDM, FDM, and SDM) may be indicated to a UE by a base station according to a value indicated by a DCI field and a higher layer signaling configuration. Table 42 below shows a method of distinguishing between single or multi-TRP-based techniques indicated to a UE according to a particular DCI field value and a higher layer signaling configuration.

[Table 42]

| Combination | Number of TCI state | Number of CDM group | Repetition Number configuration and indication condition | Related to repetition Scheme configuration | Transmission technique indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |

(continued)

| Combination | Number of TCI state | Number of CDM group | Repetition Number configuration and indication condition | Related to repetition Scheme configuration | Transmission technique indicated to UE |
|---|---|---|---|---|---|
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 2 | Condition 3 | Configured | Multi-TRP FDM scheme A/FDM scheme B/TDM scheme A |
| 9 | 2 | 2 | Condition 1 | Not configured | Multi-TRP TDM scheme B |

In Table 42 above, each column may be described as follows.

- Number of TCI states (second column): This indicates the number of TCI states indicated by a TCI state field in DCI, and for example, may be 1 or 2.
- Number of CDM groups (third column): This indicates the number of different CDM groups of DMRS ports indicated by an antenna port field in DCI. For example, same may be 1, 2, or 3.
- repetitionNumber configuration and indication condition (fourth column): There may be three conditions according to whether repetitionNumber is configured for all TDRA entries indicatable by a time domain resource allocation field in DCI, and whether an actually indicated TDRA entry has a repetitionNumber configuration.

  ■ Condition 1: At least one of all TDRA entries indicatable by a time domain resource allocation field includes a configuration on repetitionNumber, and a TDRA entry indicated by a time domain resource allocation field in DCI includes a configuration on repetitionNumber greater than 1
  ■ Condition 2: At least one of all TDRA entries indicatable by a time domain resource allocation field includes a configuration on repetitionNumber, and a TDRA entry indicated by a time domain resource allocation field in DCI does not include a configuration on repetitionNumber
  ■ Condition 3: All TDRA entries indicatable by a time domain resource allocation field do not include a configuration on repetitionNumber

- Related to repetitionScheme configuration (fifth column): This indicates whether the higher layer signaling repetitionScheme is configured. As the higher layer signaling repetitionScheme, one of "tdmSchemeA", "fdmSchemeA", and "fdmSchemeB" may be configured.
- Transmission technique indicated to UE (sixth column): This indicates single or multi-TRP techniques indicated by combinations (first column) represented in [Table 42] above.

  ■ Single-TRP: This indicates single-TRP-based PDSCH transmission. If pdsch-AggegationFactor in the higher layer signaling PDSCH-config is configured for a UE, as many times of single-TRP-based PDSCH repetition as a configured number of times may be scheduled for the UE. Otherwise, single-TRP-based PDSCH single transmission may be scheduled for the UE.
  ■ Single-TRP TDM scheme B: This indicates single-TRP-based inter-slot time resource division-based PDSCH repetition. According to condition 1 related to repetitionNumber described above, a UE repeats PDSCH transmission on the time domain in a number of slots equal to the count of repetitionNumber greater than 1 configured in a TDRA entry indicated by a time domain resource allocation field. The UE applies the same start symbol and the same symbol length of a PDSCH indicated by the TDRA entry for each of the slots, the number of which is equal to the count of repetitionNumber, and applies the same TCI state to every PDSCH repetitive transmission. This technique is similar to a slot aggregation scheme in that inter-slot PDSCH repetitive transmission is performed in the time resources, but differs from slot aggregation in that whether repetitive transmission is indicated may be dynamically determined based on a time domain resource allocation field in DCI.

■ Multi-TRP SDM: This means a multi-TRP-based spatial resource division PDSCH transmission scheme. This is a method of receiving distributed layers from TRPs, and is not a repetition scheme, but may increase the reliability of PDSCH transmission in that the number of layers is increased to enable transmission at a lowered code rate. A UE may apply two TCI states indicated through a TCI state field in DCI to two CDM groups indicated by a base station, respectively, so as to receive a PDSCH.

■ Multi-TRP FDM scheme A: This means a multi-TRP-based frequency resource division PDSCH transmission scheme. This technique provides one PDSCH transmission occasion and thus is not repetition like multi-TRP SDM. However, the amount of frequency resources is increased to lower a code rate and thus enable transmission with high reliability. Multi-TRP FDM scheme A may apply two TCI states indicated through a TCI state field in DCI to frequency resources not overlapping each other, respectively. In a case where a PRB bundling size is determined to be a wideband, if the number of RBs indicated by a frequency domain resource allocation field is N, a UE applies a first TCI state to a first ceil(N/2) number of RBs, and applies a second TCI state to the remaining floor(N/2) number of RBs so as to perform reception. Here, ceil(.) and floor(.) are operators indicating rounding up and down for one decimal place. If a PRB bundling size is determined to be 2 or 4, the UE applies the first TCI state to even-numbered PRGs, and applies the second TCI state to odd-numbered PRGs to perform reception.

■ Multi-TRP FDM scheme B: This means a multi-TRP-based frequency resource division PDSCH repetition scheme, and provides two PDSCH transmission occasions to repeat PDSCH transmission at the respective occasions. In the same way as multi-TRP FDM scheme A, multi-TRP FDM scheme B may also apply two TCI states indicated through a TCI state field in DCI to frequency resources not overlapping each other, respectively. In a case where a PRB bundling size is determined to be a wideband, if the number of RBs indicated by a frequency domain resource allocation field is N, a UE applies a first TCI state to a first ceil(N/2) number of RBs, and applies a second TCI state to the remaining floor(N/2) number of RBs so as to perform reception. Here, ceil(.) and floor(.) are operators indicating rounding up and down for one decimal place. If a PRB bundling size is determined to be 2 or 4, the UE applies the first TCI state to even-numbered PRGs, and applies the second TCI state to odd-numbered PRGs to perform reception.

■ Multi-TRP TDM scheme A: This means a multi-TRP-based time resource division intra-slot PDSCH repetitive transmission scheme. A UE may have two PDSCH transmission occasions in one slot, and a first reception occasion may be determined based on the start symbol and the symbol length of a PDSCH indicated through a time domain resource allocation field in DCI. A start symbol of a second reception occasion of the PDSCH may be a position obtained by applying a symbol offset of the higher layer signaling StartingSymbolOffsetK to a last symbol of the first transmission occasion, and the transmission occasion may be determined to be as long as the indicated symbol length from the position. If the higher layer signaling StartingSymbolOffsetK is not configured, the symbol offset may be considered as 0.

■ Multi-TRP TDM scheme B: This means a multi-TRP-based time resource division inter-slot PDSCH repetition scheme. A UE may have one PDSCH transmission occasion in one slot, and receive repetition, based on the same start symbol and the same symbol length of a PDSCH during a number of slots corresponding to the count of repetitionNumber indicated through a time domain resource allocation field in DCI. If repetitionNumber is 2, the UE may receive PDSCH repetition in first and second slots by applying first and second TCI states thereto, respectively. If repetitionNumber is greater than 2, the UE may use different TCI state application schemes according to which the higher layer signaling tciMapping is configured to be. If tciMapping is configured to be cyclicMapping, the UE applies first and second TCI states to first and second PDSCH transmission occasions, respectively, and also applies this TCI state application method to the remaining PDSCH transmission occasions in the same way. If tciMapping is configured to be sequenticalMapping, the UE applies a first TCI state to first and second PDSCH transmission occasions, applies a second TCI state to third and fourth PDSCH transmission occasions, respectively, and also applies this TCI state application method to the remaining PDSCH transmission occasions in the same way.

[Related to RLM RS]

Next, a method of selecting or determining a radio link monitoring reference signal (RLM RS) when the RLM RS is configured or not configured is described. A set of RLM RSs may be configured for each downlink bandwidth part of an SpCell by a base station for a UE through RadioLinkMonitoringRS in the higher layer signaling RadioLinkMonitoring-Config, and a detailed higher layer signaling structure may follow [Table 43] below.

[Table 43]

```
RadioLinkMonitoringConfig ::= SEQUENCE {
    failureDetectionResourcesToAddModList  SEQUENCE (SIZE(1..maxNrofFailureDetectionResources)) OF
RadioLinkMonitoringRS      OPTIONAL, -- Need N
    failureDetectionResourcesToReleaseList SEQUENCE (SIZE(1..maxNrofFailureDetectionResources)) OF
RadioLinkMonitoringRS-Id OPTIONAL, -- Need N
    beamFailureInstanceMaxCount ENUMERATED {n1, n2, n3, n4, n5, n6, n8, n10}
OPTIONAL, -- Need R
    beamFailureDetectionTimer ENUMERATED {pbfd1, pbfd2, pbfd3, pbfd4, pbfd5, pbfd6, pbfd8, pbfd10}
OPTIONAL, -- Need R
...
}

RadioLinkMonitoringRS ::= SEQUENCE {
    radioLinkMonitoringRS-Id   RadioLinkMonitoringRS-Id,
    purpose              ENUMERATED {beamFailure, rlf, both},
    detectionResource   CHOICE {
        ssb-Index            SSB-Index,
        csi-RS-Index        NZP-CSI-RS-ResourceId
    },
...
}
```

Table 44 below may represent configuration of an RLM RS for a particular usage or the number of selectable RLM RSs according to a maximum number ($L_{max}$) of SSBs per half frame. As shown in Table 44 below, $N_{LR\text{-}RLM}$ number of RSs may be used for link recovery or radio link monitoring according to an $L_{max}$ value, and $N_{RLM}$ number of RSs among the $N_{LR\text{-}RLM}$ number of RSs may be used for radio link monitoring.

[Table 44]

**Table 5-1: $N_{LR-RLM}$ and $N_{RLM}$ as a function of maximum number $L_{max}$ of SS/PBCH blocks per half frame**

| $L_{max}$ | $N_{LR-RLM}$ | $N_{RLM}$ |
|---|---|---|
| 4 | 2 | 2 |
| 8 | 6 | 4 |
| 64 | 8 | 8 |

If the higher layer signaling RadioLinkMonitoringRS has not been configured for the UE, a TCI state for receiving a PDCCH is configured for a control resource set for the UE, and the TCI state includes at least one CSI-RS, the UE may select an RLM RS according to the following RLM RS selection methods.

- RLM RS selection method 1) If an activated TCI state to be used for PDCCH reception has one reference RS (i.e., one activated TCI state has only one of QCL-TypeA, B, and C), the UE may select, as an RLM RS, the reference RS of the activated TCI state to be used for PDCCH reception.
- RLM RS selection method 2) If an activated TCI state to be used for PDCCH reception has two reference RSs (i.e., one activated TCI state has one of QCL-TypeA, B, and C and additionally has QCL-TypeD), the UE may select, as an RLM RS, a reference RS of QCL-TypeD. The UE may not expect that 2 QCL-TypeDs are configured for the one activated TCI state.
- RLM RS selection method 3) The UE does not expect that an aperiodic or semi-persistent RS is selected as an RLM RS.
- RLM RS selection method 4) If $L_{max}$ = 4, the UE may select $N_{RLM}$ number of RSs ($L_{max}$ is 4 and thus 2 RSs may be selected). Selection of an RLM RS is performed for among reference RSs of a TCI state configured for a control resource set for PDCCH reception, based on the RLM RS selection methods 1 to 3, is determined by giving high priority on a search space having a short period and connected to a control resource set, and is performed for reference RSs starting from a reference RS of a TCI state configured for a control resource set connected to a search space having the shortest period. If there are multiple control resource sets connected to multiple search spaces having the same period, RLM RS selection is performed for reference RS starting from a reference RS of a TCI state configured for the highest control resource set index.

FIG. 22 is a diagram illustrating an RLM RS selection process according to an embodiment of the disclosure. This diagram illustrates control resource set #1 to control resource set #3 22-05 to 22-07 connected to search space #1 to search space #4 22-01 to 22-04 having different periods in an activated downlink bandwidth part, and a reference RS of a TCI state configured for each control resource set. Based on RLM RS selection method 4 described above, RLM RS selection uses a TCI state configured for a control resource set connected to a search space having the shorted period.

However, search space #1 22-01 and search space #3 22-03 have the same period, and thus a reference RS of a TCI state configured for control resource set #2 having a higher index among control resource set #1 22-05 and control resource set #2 22-06 connected to the respective search spaces may be used as the highest priority in RLM RS selection. In addition, the TCI state configured for control resource set #2 only has QCL-TypeA and the reference RS is a periodic RS, and thus P CSI-RS#2 22-10 may be firstly selected as an RLM RS by RLM RS selection methods 1 and 3 described above. A reference RS of QCL-TypeD among reference RSs of a TCI state configured for control resource set #1 having the next priority may be a selection candidate according to RLM RS selection method 2 described above. However, the RS is a semi-persistent RS (22-09) and thus is not selected as an RLM RS according to RLM RS selection method 3 described above. Therefore, reference RSs of a TCI state configured for control resource set #3 may be considered as the next priority, a reference RS of QCL-TypeD may be a selection candidate according to RLM RS selection method 2 described above, and the reference RS is a periodic RS, and thus P CSI-RS#4 22-12 may be secondly selected as an RLM RS by RLM RS selection method 3 described above. Therefore, finally selected RLM RSs may be P CSI-RS#2 and P CSI-RS#4 (22-13).

Hereinafter, for the sake of descriptive convenience, a cell, a transmission point, a panel, a beam, and/or a transmission direction which can be distinguished through an upper layer/L1 parameter such as a TCI state or spatial relation information, a cell ID, a TRP ID, or a panel ID may be described as a TRP, a beam, or a TCI state as a whole. Therefore, when actually applied, a TRP, a beam, or a TCI state may be appropriately replaced with one of the above terms.

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, embodiments of the disclosure will be described in detail in conjunction with the accompanying drawings. Hereinafter, a base station refers to an entity that allocates resources to a terminal, and may be at least one of a gNode B, a gNB, an eNode B, a node B, a base station (BS), a radio access unit, a base station controller, or a node on a network. A terminal may include a user equipment (UE), a mobile station (MS), a cellular phone, a smartphone, a computer, or a multimedia system capable of performing a communication function. In the following description of embodiments of the disclosure, a 5G system will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may be applied to other communication systems through some modifications without significantly departing from the scope of the disclosure. The contents of the disclosure may be applied to FDD and TDD systems. As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "MAC control element (MAC CE)".

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI

- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

Hereinafter, the above examples may be described through several embodiments, but they are not independent of each other, and one or more embodiments may be applied simultaneously or in combination.

<First embodiment: Single TCI state activation and indication method based on unified TCI scheme>

As an embodiment of the disclosure, a single TCI state indication and activation method based on a unified TCI scheme is described. The unified TCI scheme may mean a scheme of integral management through a TCI state instead of transmission/reception beam management schemes having been classified as a TCI state scheme used in downlink reception of a UE and a spatial relation info scheme used in uplink transmission in conventional Rel-15 and 16. Therefore, in a case where a TCI state is indicated to a UE by a base station, based on the unified TCI scheme, the UE may perform beam management even for uplink transmission by using the TCI state. If the higher layer signaling TCI-State having the higher layer signaling tci-stateId-r17 is configured for a UE by a base station, the UE may perform an operation based on the unified TCI scheme by using the TCI-State. TCI-State may exist in two types including a joint TCI state and a separate TCI state.

The first type is a joint TCI state, and all TCI states to be applied to uplink transmission and downlink reception may be indicated to a UE by a base station through one value of TCI-State. If joint TCI state-based TCI-state is indicated to the UE, a parameter to be used in downlink channel estimation may be indicated to the UE by using an RS corresponding to qcl-Type1 in the joint TCI state-based TCI-state, and a parameter to be used as a downlink reception beam or reception filter may be indicated thereto by using an RS corresponding to qcl-Type2. If joint TCI state-based TCI-state is indicated to the UE, a parameter to be used as an uplink transmission beam or transmission filter may be indicated to the UE by using an RS corresponding to qcl-Type2 in a corresponding joint DL/UL TCI state-based TCI-state. If TCI-state based on a joint TCI state is indicated to the UE, the UE may apply the same beam to uplink transmission and downlink reception.

The second type is a separate TCI state, and a UL TCI state to be applied to uplink transmission and a DL TCI state to be applied to downlink reception may be individually indicated to a UE by a base station. If a UL TCI state is indicated to the UE, a parameter to be used as an uplink transmission beam or transmission filter may be indicated to the UE by using a reference RS or a source RS configured in the UL TCI state. If a DL TCI state is indicated to the UE, a parameter to be used in downlink channel estimation may be indicated to the UE by using an RS corresponding to qcl-Type1 configured in the DL TCI state, and a parameter to be used as a downlink reception beam or reception filter may be indicated thereto by using an RS corresponding to qcl-Type2.

If a DL TCI state and a UL TCI state are indicated to the UE together, a parameter to be used as an uplink transmission beam or transmission filter may be indicated to the UE by using a reference RS or a source RS configured in the UL TCI state, a parameter to be used in downlink channel estimation may be indicated to the UE by using an RS corresponding to qcl-Type1 configured in the DL TCI state, and a parameter to be used as a downlink reception beam or reception filter may be indicated thereto using an RS corresponding to qcl-Type2. If the respective reference RSs or source RSs configured in the DL TCI state and UL TCI state indicated to the UE are different from each other, the UE may apply an uplink transmission beam, based on the indicated UL TCI state, and apply a downlink reception beam, based on the DL TCI state.

A maximum of 128 joint TCI states may be configured for a particular bandwidth part (BWP) in a particular cell for the UE by the base station through higher layer signaling, a maximum of 64 or 128 DL TCI states, which are separate TCI states, may be configured for a particular bandwidth part in a particular cell through higher layer signaling, based on a UE capability report, and a DL TCI state among separate TCI states and a joint TCI state may use the same higher layer signaling structure. For example, if 128 joint TCI states are configured and 64 DL TCI states of separate TCI states are configured, the 64 DL TCI states may be included in the 128 joint TCI states.

A maximum of 32 or 64 UL TCI states, which are separate TCI states, may be configured for a particular bandwidth part in a particular cell through higher layer signaling, based on a UE capability report, and a UL TCI state among separate TCI states and a joint TCI state may also use the same higher layer signaling structure like the relation between a DL TCI state among separate TCI states and a joint TCI state, or a UL TCI state among separate TCI states may also use a higher layer signaling structure different from that of a joint TCI state and a DL TCI state among separate TCI states. As described above, using different or identical higher layer signaling structures may be defined in a specification, or may be distinguished through another higher layer signaling configured by a base station, based on a UE capability report including information on a usage scheme which a UE is able to support among two types of usage schemes.

A transmission/reception beam-related indication may be received by a UE in a unified TCI scheme by using one scheme among a joint TCI state and a separate TCI state configured by a base station. Whether to use one of a joint TCI state and a separate TCI state may be configured for a UE by a base station through higher layer signaling.

A UE may receive a transmission/reception beam-related indication through higher layer signaling by using one scheme selected from among a joint TCI state and a separate TCI state, and a method of transmission/reception beam indication by a base station may be classified as two types of methods including a MAC-CE-based indication method and a MAC-CE-based activation and DCI-based indication method.

In a case where a UE is configured to receive a transmission/reception beam-related indication through higher layer signaling by using a joint TCI state scheme, the UE may receive a MAC-CE indicating a joint TCI state from a base station to perform a transmission/reception beam application operation, and the base station may schedule reception of a PDSCH including the MAC-CE to the UE through a PDCCH. If a MAC-CE includes one joint TCI state, the UE may transmit, to the base station, a PUCCH including HARQ-ACK information indicating whether reception of a PDSCH including the MAC-CE is successful, and determine an uplink transmission beam or transmission filter and a downlink reception beam or reception filter by using the indicated joint TCI state after 3 ms after the transmission of the PUCCH. If a MAC-CE includes two or more joint TCI states, the UE may transmit, to the base station, a PUCCH including HARQ-ACK information indicating whether reception of a PDSCH including the MAC-CE is successful, identify that the multiple joint TCI states indicated by the MAC-CE correspond to respective codepoints of a TCI state field of DCI format 1_1 or 1_2 after 3 ms after the transmission of the PUCCH, and activate the joint TCI states activated by the MAC-CE. Thereafter, the UE may receive DCI format 1_1 or 1_2 to apply one joint TCI state indicated by a TCI state field in the DCI to uplink transmission and downlink reception beams. DCI format 1_1 or 1_2 may include downlink data channel scheduling information (with DL assignment) or not include same (without DL assignment).

In a case where a UE is configured to receive a transmission/reception beam-related indication through higher layer signaling by using a separate TCI state scheme, the UE may receive a MAC-CE indicating a separate TCI state from a base station to perform a transmission/reception beam application operation, and the base station may schedule a PDSCH including the MAC-CE for the UE through a PDCCH. If a MAC-CE includes one separate TCI state set, the UE may transmit, to the base station, a PUCCH including HARQ-ACK information meaning whether reception of a corresponding PDSCH is successful, and determine an uplink transmission beam or transmission filter and a downlink reception beam or reception filter by using separate TCI states included in the indicated separate TCI state set after 3 ms after the transmission of the PUCCH. A separate TCI state set may indicate a single or multiple separate TCI states which one codepoint of a TCI state field in DCI format 1_1 or 1_2 may have, and one separate TCI state set may include one DL TCI state, include one UL TCI state, or include one DL TCI state and one UL TCI state. If a MAC-CE includes two or more separate TCI state sets, the UE may transmit, to the base station, a PUCCH including HARQ-ACK information meaning whether reception of a corresponding PDSCH is successful, identify that multiple separate TCI state sets indicated by the MAC-CE correspond to respective codepoints of a TCI state field of DCI format 1_1 or 1_2 after 3 ms after the transmission of the PUCCH, and activate the indicated separate TCI state sets. Each codepoint of the TCI state field of DCI format 1_1 or 1_2 may indicate one DL TCI state, indicate one UL TCI state, or indicate one DL TCI state and one UL TCI state. The UE may receive DCI format 1_1 or 1_2 to apply a separate TCI state set indicated by a TCI state field in the DCI to uplink transmission and downlink reception beams. DCI format 1_1 or 1_2 may include downlink data channel scheduling information (with DL assignment) or not include same (without DL assignment).

A MAC-CE used to activate or indicate a single joint TCI state and a separate TCI state described above may exist for each of joint and separate TCI state schemes, or one MAC-CE may be used to activate or indicate a TCI state, based on one of joint and separate TCI state schemes. Through the following drawings to be described, various MAC-CE structures for activation and indication of a joint or separate TCI state may be considered.

FIG. 23 is a diagram illustrating a MAC-CE structure for joint TCI state activation and indication in a wireless communication system according to an embodiment of the disclosure.

Referring to FIG. 23, an S field 23-00 may indicate the number of pieces of joint TCI state information included in a MAC-CE. If the value of the S field 23-00 is 1, the MAC-CE may indicate one joint TCI state and may have a length only up to the second octet. If the value of the S field 23-00 is 0, the MAC-CE may include information on two or more joint TCI states and activate respective joint TCI states on respective codepoints of a TCI state field of DCI format 1_1 or 1_2, and a maximum of 8 joint TCI states may be activated. Configuration of 0 or 1 as the value of the S field 23-00 is not limited to the above configuration method, when the value is 0, this may indicate that one joint TCI state is included, and when the value is 1, this may indicate that information on two or more joint TCI state is included. The interpretation of the S field described above may also be applied to other embodiments of the disclosure. TCI states indicated through a TCI state $ID_0$ field 23-15

to a TCI state $ID_{N-1}$ field 23-25 may correspond to 0th to (N-1)th codepoints of a TCI state field of DCI format 1_1 or 1_2, respectively. A serving cell ID field 23-05 may indicate an identifier (serving cell ID) of a serving cell, and a BWP ID field 23-10 may indicate a bandwidth part ID. An R field may be a 1-bit reserve field not including indication information.

FIG. 24 is a diagram illustrating another MAC-CE structure for joint TCI state activation and indication in a wireless communication system according to an embodiment of the disclosure.

In FIG. 24, a serving cell ID field 24-05 may indicate an identifier (serving cell ID) of a serving cell, and a BWP ID field 24-10 may indicate a bandwidth part ID. An R field 24-00 may be a 1-bit reserve field not including indication information. Respective fields existing in the second to Nth octets are a bitmap indicating joint TCI states configured through higher layer signaling. For example, $T_7$ 24-15 may be a field indicating whether an 8th joint TCI state configured through higher layer signaling is indicated. If a $T_N$ value is 1, a corresponding joint TCI state is interpreted as being indicated or activated, and if the same value is 0, a corresponding joint TCI state is interpreted as not being indicated or activated. Configuration of the values 0 and 1 is not limited to the above configuration method. If the number of joint TCI states transferred through the MAC-CE structure of FIG. 24 is 1, the UE may apply the joint TCI state indicated by the MAC-CE to uplink transmission and downlink reception beams. If the number of joint TCI states transferred through a MAC-CE structure is 2 or greater, the UE may identify that respective joint TCI states indicated by the MAC-CE correspond to respective codepoints of a TCI state field of DCI format 1_1 or 1_2 and activate each joint TCI state, and the indicated joint TCI states may be activated starting from the joint TCI state having the lowest index by sequentially corresponding to codepoints of the TCI state field of DCI format 1_1 or 1_2 starting from a codepoint having the lowest index.

FIG. 25 is a diagram illustrating another MAC-CE structure for joint TCI state activation and indication in a wireless communication system according to an embodiment of the disclosure.

In FIG. 25, a serving cell ID field 25-05 may indicate an identifier (serving cell ID) of a serving cell, and a BWP ID field 25-10 may indicate a bandwidth part ID.

An S field 25-00 may indicate the number of pieces of joint TCI state information included in a MAC-CE. For example, if the value of an S field 25-00 is 1, the MAC-CE may indicate one joint TCI state and may have a length only up to the second octet, and the joint TCI state may be indicated to the UE through a TCI state $ID_0$ field 25-20. If, for example, the value of the S field 25-00 is 0, the MAC-CE may include information on two or more joint TCI states, respective codepoints of a TCI state field of DCI format 1_1 or 1_2 may activate respective joint TCI states, a maximum of 8 joint TCI states may be activated, there are no second octet, and there may be the first octet and the third octet to the (N+1)th octet on the MAC-CE structure of FIG. 25. Respective fields existing in the third to (N+1)th octets are a bitmap indicating joint TCI states configured through higher layer signaling. For example, $T_{15}$ 25-25 may be a field indicating whether a 16th joint TCI state configured through higher layer signaling is indicated. An R field 25-15 may be a 1-bit reserve field not including indication information.

If the number of joint TCI states transferred through the MAC-CE structure of FIG. 25 is 1, the UE may apply the joint TCI state indicated by the MAC-CE to uplink transmission and downlink reception beams. If the number of joint TCI states transferred through the MAC-CE structure of FIG. 25 is 2 or greater, the UE may identify that respective joint TCI states indicated by the MAC-CE correspond to respective codepoints of a TCI state field of DCI format 1_1 or 1_2 and activate each joint TCI state, and the indicated joint TCI states may be activated starting from the joint TCI state having the lowest index by sequentially corresponding to codepoints of the TCI state field of DCI format 1_1 or 1_2 starting from a codepoint having the lowest index.

FIG. 26 is a diagram illustrating a MAC-CE structure for separate TCI state activation and indication in a wireless communication system according to an embodiment of the disclosure.

In FIG. 26, a serving cell ID field 26-05 may indicate an identifier (serving cell ID) of a serving cell, and a BWP ID field 26-10 may indicate a bandwidth part ID.

An S field 26-00 may indicate the number of pieces of separate TCI state set information included in a MAC-CE. If, for example, the value of the S field 26-00 is 1, the MAC-CE may indicate one separate TCI state set and may include only octets up to the third octet. If, for example, the value of the S field 26-00 is 0, the MAC-CE may include information on two or more separate TCI state sets, respective codepoints of a TCI state field of DCI format 1_1 or 1_2 may activate respective separate TCI state sets, and a maximum of 8 separate TCI state sets may be activated. A $C_0$ field 26-15 may be a field indicating separate TCI states which the indicated separate TCI state set includes. For example, if the value of the $C_0$ field is "00", this may mean reserve, if same is "01 ", this may mean one DL TCI state, if same is "10", this may mean one UL TCI state, and if same is "11", this may mean that one DL TCI state and one UL TCI state are indicated, but this interpretation is merely an example of interpretation of the $C_0$ field 26-15, and the interpretation of the $C_0$ field 26-15 is not limited thereto. A TCI state $ID_{D,0}$ field 26-20 and a TCI state $ID_{U,0}$ field 26-25 may mean a DL TCI state and a UL TCI state which may be included and indicated in the 0th separate TCI state set. If the value of the $C_0$ field is "01", the TCI state $ID_{D,0}$ field 26-20 may indicate a DL TCI state, and the TCI state $ID_{U,0}$ field 26-25 may be disregarded. If the value of the $C_0$ field is "10", the TCI state $ID_{D,0}$ field 26-20 may be disregarded, and the TCI state $ID_{U,0}$ field 26-25 may indicate a UL TCI state. If the value of the $C_0$ field is "11", the TCI state $ID_{D,0}$ field 26-20 may indicate a DL TCI state, and the TCI state $ID_{U,0}$ field 26-25 may indicate a UL TCI state.

FIG. 26 may illustrate an example of a MAC-CE when a UL TCI state among separate TCI states uses, as described above, a higher layer signaling structure identical to that of a DL TCI state among separate TCI states and a joint TCI state. Accordingly, the length of the TCI state $ID_{D,0}$ field 26-20 and the TCI state $ID_{U,0}$ field 26-25 may be 7 bits for representing a maximum of 128 TCI states. Therefore, in order to use 7 bits as the TCI state $ID_{D,0}$ field 26-20, 6 bits 26-20 may be allocated to the second octet and 1 bit 26-21 may be allocated to the third octet. In addition, FIG. 26 may show a case where a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the first bit of the TCI state $ID_{U,0}$ field 26-25 may be fixed to be 0 or 1, and bits for representing actual UL TCI states may correspond to only a total of 6 bits from the second bit to the seventh bit.

FIG. 27 is a diagram illustrating another MAC-CE structure for separate TCI state activation and indication in a wireless communication system according to an embodiment of the disclosure.

In FIG. 27, a serving cell ID field 27-05 may indicate an identifier (serving cell ID) of a serving cell, and a BWP ID field 27-10 may indicate a bandwidth part ID. An S field 27-00 may indicate the number of pieces of separate TCI state set information included in a MAC-CE. If, for example, the value of the S field 27-00 is 1, the MAC-CE may indicate one separate TCI state set and may include only octets up to the third octet. If, for example, the value of the S field 27-00 is 0, the MAC-CE may include information on two or more separate TCI state sets, respective codepoints of a TCI state field of DCI format 1_1 or 1_2 may correspond to respective separate TCI state sets to activate same, and a maximum of 8 separate TCI state sets may be activated. A $C_{D,0}$ field 27-15 may be a field indicating whether an indicated separate TCI state set includes a DL TCI state, if the value of the $C_{D,0}$ field 27-15 is 1, the separate TCI state set includes a DL TCI state and the DL TCI state may be indicated through a TCI state $ID_{D,0}$ field 27-25, and if the value of the $C_{D,0}$ field 27-15 is 0, the separate TCI state set does not include a DL TCI state and the TCI state $ID_{D,0}$ field 27-25 may be disregarded. Similarly, a $C_{U,0}$ field 27-20 may be a field indicating whether an indicated separate TCI state set includes a UL TCI state, if the value of the $C_{U,0}$ field 27-20 is 1, the separate TCI state set includes a UL TCI state and the UL TCI state may be indicated through a TCI state $ID_{U,0}$ field 27-30, and if the value of the $C_{U,0}$ field 27-20 is 0, the separate TCI state set does not include a UL TCI state and the TCI state $ID_{U,0}$ field 27-30 may be disregarded.

FIG. 27 may illustrate an example of a MAC-CE when a UL TCI state among separate TCI states uses, as described above, a higher layer signaling structure identical to that of a DL TCI state among separate TCI states and a joint TCI state. Accordingly, the length of the TCI state $ID_{D,0}$ field 27-25 and the TCI state $ID_{U,0}$ field 27-30 may be 7 bits for representing a maximum of 128 TCI states. In addition, FIG. 27 may illustrate an example of a MAC CE when a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the first bit of the TCI state $ID_{U,0}$ field 27-25 may be fixed to be 0 or 1, and bits for representing actual UL TCI states may correspond to only a total of 6 bits from the second bit to the seventh bit.

FIG. 28 is a diagram illustrating another MAC-CE structure for separate TCI state activation and indication in a wireless communication system according to an embodiment of the disclosure.

In FIG. 28, a serving cell ID field 28-05 may indicate an identifier (serving cell ID) of a serving cell, and a BWP ID field 28-10 may indicate a bandwidth part ID. An S field 28-00 may indicate the number of pieces of separate TCI state set information included in a MAC-CE. If, for example, the value of the S field 28-00 is 1, the MAC-CE may indicate one separate TCI state set and may include only octets up to the third octet. The MAC-CE structure of FIG. 28 may use two octets to indicate one separate TCI state set, and if the separate TCI state set includes a DL TCI state, the first octet among the two octets indicates a DL TCI state and the second octet may indicate a UL TCI state. Alternatively, this sequence may also be changeable.

If, for example, the value of the S field 28-00 is 0, the MAC-CE may include information on two or more separate TCI state sets, respective codepoints of a TCI state field of DCI format 1_1 or 1_2 may activate respective separate TCI state sets, and a maximum of 8 separate TCI state sets may be activated. A $C_{0,0}$ field 28-15 may have the meaning to distinguish whether a TCI state indicated by a TCI state $ID_{0,0}$ field 28-25 is a DL TCI state or a UL TCI state. If the value of the $C_{0,0}$ field 28-15 is 1, the TCI state means a DL TCI state, the DL TCI state may be indicated through the TCI state $ID_{0,0}$ field 28-25, and there may be a third octet. In this case, if the value of a $C_{1,0}$ field 28-20 is 1, a UL TCI state may be indicated through a TCI state $ID_{1,0}$ field 28-30, and if the value of the $C_{1,0}$ field 28-20 is 0, the TCI state $ID_{1,0}$ field 28-30 may be disregarded. If the value of the $C_{0,0}$ field 28-15 is 0, a UL TCI state may be indicated through the TCI state $ID_{0,0}$ field 28-25, and the third octet may not exist. This interpretation of the $C_{0,0}$ field 28-15 and the $C_{1,0}$ field 28-20 merely corresponds to an example, the values 0 and 1 of the $C_{0,0}$ field 28-15 may be interpreted in an opposite matter, or the values of the DL TCI state and UL TCI state may be interpreted in an opposite matter.

FIG. 28 may illustrate an example of a MAC-CE when a UL TCI state among separate TCI states uses, as described above, a higher layer signaling structure identical to that of a DL TCI state among separate TCI states and a joint TCI state. Accordingly, the length of the TCI state $ID_{0,0}$ field 28-25 and the TCI state $ID_{1,0}$ field 28-30 may be 7 bits for representing a maximum of 128 TCI states. In addition, FIG. 28 may illustrate an example of a MAC CE when a UL TCI state among separate TCI states uses, as described above, a higher layer signaling structure different from that of a DL TCI state among separate TCI states and a joint TCI state. Accordingly, the TCI state $ID_{0,0}$ field 28-25 may have 7 bits capable of representing both 6 bits for representing a maximum of 64 UL TCI states and 7 bits for representing a maximum of 128 DL TCI states. If the value of the $C_{1,0}$ field 28-15 is 1 and thus the TCI state $ID_{0,0}$ field 28-25 indicates a UL TCI state, the first bit of the TCI state $ID_{0,0}$ field 28-25 may be fixed to be 0 or 1, and bits for representing actual UL TCI states may correspond to only a total of 6 bits from the second bit to the seventh bit.

FIG. 29 is a diagram illustrating another MAC-CE structure for separate TCI state activation and indication in a wireless communication system according to an embodiment of the disclosure.

In FIG. 29, a serving cell ID field 29-05 may indicate an identifier (serving cell ID) of a serving cell, and a BWP ID field 29-10 may indicate a serving cell ID and a bandwidth part ID. An S field 29-00 may indicate the number of pieces of separate TCI state set information included in a MAC-CE. If, for example, the value of the S field 29-00 is 1, the MAC-CE may indicate one separate TCI state set and may include only octets up to the third octet.

If, for example, the value of the S field 29-00 is 0, the MAC-CE may include information on two or more separate TCI state sets, respective codepoints of a TCI state field of DCI format 1_1 or 1_2 may activate respective separate TCI state sets, and a maximum of 8 separate TCI state sets may be activated. A $C_0$ field 29-15 may be a field indicating separate TCI states which an indicated separate TCI state set includes, if the value of the $C_0$ field 29-15 is "00", this means reserve, if same is "01", this means one DL TCI state, if same is " 10", this means one UL TCI state, and if same is " 11", this means that one DL TCI state and one UL TCI state are indicated, but this interpretation is merely an example of interpretation of the $C_0$ field 29-15, and the interpretation of the $C_0$ field 29-15 is not limited thereto. A TCI state $ID_{U.0}$ field 29-20 and a TCI state $ID_{U.0}$ field 29-25 may mean a UL TCI state and a DL TCI state which may be included and indicated in the 0th separate TCI state set. If the value of the $C_0$ field 29-15 is "01", the TCI state $ID_{D,0}$ field 29-25 may indicate a DL TCI state, and the TCI state $ID_{U.0}$ field 29-20 may be disregarded. If the value of the $C_0$ field 29-15 is "10", the third octet may be disregarded, and the TCI state $ID_{U,0}$ field 29-20 may indicate a UL TCI state. If the value of the $C_0$ field 29-15 is "11", the TCI state $ID_{D,0}$ field 29-25 may indicate a DL TCI state, and the TCI state $ID_{U,0}$ field 29-20 may indicate a UL TCI state. An R field 29-21 may be a 1-bit reserve field not including indication information.

FIG. 29 may illustrate an example of a MAC CE used when a UL TCI state among separate TCI states uses, as described above, a higher layer signaling structure different from that of a DL TCI state among separate TCI states and a joint TCI state. Accordingly, the length of the TCI state $ID_{D,0}$ field 29-25 may be 7 bits for representing a maximum of 128 TCI states, and the length of the TCI state $ID_{U,0}$ field 29-20 may be 6 bits for representing a maximum of 64 TCI states.

FIG. 30 is a diagram illustrating a MAC-CE structure for joint and separate TCI state activation and indication in a wireless communication system according to an embodiment of the disclosure.

In FIG. 30, a serving cell ID field 30-05 may indicate an identifier (serving cell ID) of a serving cell, and a BWP ID field 30-10 may indicate a bandwidth part ID. A J field 30-00 may indicate whether a TCI state indicated through a MAC-CE is a joint TCI state or a separate TCI state set. If, for example, the value of the J field 30-00 is 1, the MAC-CE may indicate a joint TCI state and if the same is 0, the MAC-CE may indicate a separate TCI state set. This interpretation of the J field 30-00 merely corresponds to an example, and it is possible to interpret same in the opposite manner.

- If the MAC-CE indicates a joint TCI state, all the odd-numbered octets (the third octet, the fifth octet, ...) except for the first octet may be disregarded. A $C_{0,0}$ field 30-15 includes whether the MAC-CE indicates one joint TCI state, or information on two or more TCI states and respective codepoints of a TCI state field of DCI format 1_1 or 1_2 activate respective TCI states. If the value of the $C_{0,0}$ field 30-15 is 1, the MAC-CE may indicate one joint TCI state and there may be no octets starting from the third octet. If the value of the $C_{0,0}$ field 30-15 is 0, two or more joint TCI states indicated by the MAC-CE may correspond to respective codepoints of a TCI state field of DCI format 1_1 or 1_2 and be activated. TCI state $ID_{0,0}$ may mean the indicated first joint TCI state.
- In a case where the MAC-CE indicates a separate TCI state set, for example, the $C_{0,0}$ field 30-15 may have the meaning to distinguish whether a TCI state indicated by a TCI state $ID_{0,0}$ field 30-25 is a DL TCI state or a UL TCI state, and if the value of the field is 1, the TCI state means a DL TCI state, the DL TCI state may be indicated through the TCI state $ID_{D,0}$ field 30-25, and there may be a third octet. In this case, if the value of a $C_{1,0}$ field 30-20 is 1, a UL TCI state may be indicated through a TCI state $ID_{1,0}$ field 30-30, and if the value of the $C_{1,0}$ field 30-20 is 0, the TCI state $ID_{1,0}$ field 30-30 may be disregarded. If the value of the $C_{0,0}$ field 30-15 is 0, a UL TCI state may be indicated through the TCI state $ID_{0,0}$ field 30-25, and the third octet may not exist. FIG. 30 may illustrate an example of a MAC-CE used when a UL TCI state among separate TCI states uses, as described above, a higher layer signaling structure identical to that of a DL TCI state among separate TCI states and a joint TCI state. Accordingly, the length of the TCI state $ID_{0,0}$ field 30-25 and the TCI state $ID_{1,0}$ field 30-30 may be 7 bits for representing a maximum of 128 TCI states. In addition, FIG. 30 may illustrate an example of a MAC CE used when a UL TCI state among separate TCI states uses, as described above, a higher layer signaling structure different from that of a DL TCI state among separate TCI states and a joint TCI state. Accordingly, the TCI state $ID_{0,0}$ field 30-25 may have 7 bits capable of representing both 6 bits for representing a maximum of 64 UL TCI states and 7 bits for representing a maximum of 128 DL TCI states. If the value of the $C_{0,0}$ field 30-15 is 1 and thus the TCI state $ID_{0,0}$ field 30-25 indicates a UL TCI state, the first bit of the TCI state $ID_{0,0}$ field 30-25 may be fixed to be 0 or 1, and bits for representing actual UL TCI states may correspond to only a total of 6 bits from the second bit to the seventh bit.

FIG. 31 is a diagram illustrating another MAC-CE structure for joint and separate TCI state activation and indication in a wireless communication system according to an embodiment of the disclosure.

In FIG. 31, a serving cell ID field 31-05 and a BWP ID field 31-10 may indicate a serving cell ID and a bandwidth part ID, respectively. A J field 31-00 may indicate whether a TCI state indicated through a MAC-CE is a joint TCI state or a separate TCI state set. If, for example, the value of the J field 31-00 is 1, the MAC-CE may indicate a joint TCI state and if the same is 0, the MAC-CE may indicate a separate TCI state set. This interpretation of the J field 30-00 merely corresponds to an example, and it is possible to interpret same in the opposite manner.

- If the MAC-CE indicates a joint TCI state, all the even-numbered octets (the second octet, the fourth octet, ...) except for the first octet may be disregarded. An $S_0$ field 31-21 indicates whether the MAC-CE indicates one joint TCI state, or two or more TCI states correspond to respective codepoints of a TCI state field of DCI format 1_1 or 1_2 and are activated. If the value of the $S_0$ field 31-21 is 1, the MAC-CE may indicate one joint TCI state and there may be no octets starting from the third octet. If the value of the $S_0$ 31-21 is 0, the MAC-CE may include information on two or more joint TCI states, and respective codepoints of a TCI state field of DCI format 1_1 or 1_2 may activate respective joint TCI states. TCI state $ID_{D,0}$ may mean the indicated first joint TCI state.
- If the MAC-CE indicates a separate TCI state set, a $C_0$ field 31-15 may be a field indicating separate TCI states which the indicated separate TCI state set includes. For example, if the value of the $C_0$ field 31-15 is "00", this means reserve, if same is "01", this means one DL TCI state, if same is "10", this means one UL TCI state, and if same is "11", this means that one DL TCI state and one UL TCI state are indicated. These values merely correspond to an example and the disclosure is not limited to the example. A TCI state $ID_{U,0}$ field 31-20 and a TCI state $ID_{U,0}$ field 31-25 may mean a UL TCI state and a DL TCI state which may be included and indicated in the 0th separate TCI state set. If the value of the $C_0$ field 31-15 is "01", the TCI state $ID_{D,0}$ field 31-25 may indicate a DL TCI state and the TCI state $ID_{U,0}$ field 31-20 may be disregarded, if the value of the $C_0$ field 31-15 is "10", the TCI state $ID_{U,0}$ field 31-20 may indicate a UL TCI state, and if the value of the $C_0$ field 31-15 is "11", the TCI state $ID_{D,0}$ field 31-25 indicates a DL TCI state and the TCI state $ID_{U,0}$ field 31-20 may indicate a UL TCI state. If the value of the $S_0$ field 31-21 is 1, the MAC-CE may indicate one separate TCI state set and there may be no octets starting from the fourth octet. If, for example, the value of the $S_0$ 31-21 is 0, the MAC-CE may include information on two or more separate TCI state sets, respective codepoints of a TCI state field of DCI format 1_1 or 1 2 may activate respective separate TCI state sets, and a maximum of 8 separate TCI state sets may be activated. In a case where, for example, the value of the $S_0$ field 31-21 is 0, if the values of $C_1$, ..., and $C_{N-1}$ fields are "10", this means that only UL TCI states are indicated and thus the fifth, seventh, ..., and M-th octets may be disregarded. Alternatively, an $S_n$ field may indicate whether there is an octet for a next separate TCI state set. For example, if the value of the $S_n$ field is 1, there may be no next octet, and if the value of the $S_n$ field is 0, there may be a next octet including $C_{n+1}$ and TCI state $ID_{U,n+1}$. These values of the $S_n$ field merely correspond to an example and the disclosure is not limited to the example.
- FIG. 31 may show an example of a MAC CE when a UL TCI state among separate TCI states uses, as described above, a higher layer signaling structure different from that of a DL TCI state among separate TCI states and a joint TCI state. Accordingly, the length of the TCI state $ID_{D,0}$ field 31-25 may be 7 bits for representing a maximum of 128 TCI states, and the length of the TCI state $ID_{U,0}$ field 31-20 may be 6 bits for representing a maximum of 64 TCI states.

In a case where a UE receives a transmission/reception beam-related indication through higher layer signaling by using a joint TCI state scheme or a separate TCI state scheme, the UE may receive a PDSCH including a MAC-CE indicating a joint TCI state or separate TCI state from a base station to perform application to a transmission/reception beam. If a MAC-CE includes two or more joint TCI state or separate TCI state sets, the UE may identify, as described above, that multiple joint TCI states or separate TCI state sets indicated by the MAC-CE correspond to respective codepoints of a TCI state field of DCI format 1_1 or 1_2 after 3 ms after transmission of a PUCCH including HARQ-ACK information meaning whether reception of a corresponding PDSCH is successful, and may activate the indicated joint TCI states or separate TCI state sets. Thereafter, the UE may receive DCI format 1_1 or 1_2 to apply one joint TCI state or separate TCI state set indicated by a TCI state field in the DCI to uplink transmission and downlink reception beams. DCI format 1_1 or 1_2 may include downlink data channel scheduling information (with DL assignment) or not include same (without DL assignment).

FIG. 32 is a diagram illustrating a beam application time which may be considered when a unified TCI scheme is used in a wireless communication system according to an embodiment of the disclosure.

As described above, a UE may receive, from a base station, DCI format 1_1 or 1_2 including or not including downlink data channel scheduling information (with DL assignment or without DL assignment), and apply one joint TCI state or one separate TCI state set indicated by a TCI state field in the DCI to uplink transmission and downlink reception beams.

- DCI format 1_1 or 1_2 with DL assignment (32-00): If a UE receives, from a base station, DCI format 1_1 or 1_2 including downlink data channel scheduling information (32-01) so that one joint TCI state or one separate TCI state set based on a unified TCI scheme is indicated, the UE may receive a PDSCH scheduled based on the received DCI (32-05), and transmit, to the base station, a PUCCH including a HARQ-ACK indicating whether reception of the DCI and the PDSCH is successful (32-10). The HARQ-ACK may include whether reception is successful, for both the DCI and the PDSCH, if the UE fails to receive at least one of the DCI and the PDSCH, the UE may transmit a NACK, and if the UE succeeds in receiving both of them, the UE may transmit an ACK.
- DCI format 1_1 or 1_2 without DL assignment (32-50): If a UE receives, from a base station, DCI format 1_1 or 1_2 not including downlink data channel scheduling information (32-55) so that one joint TCI state or one separate TCI state set based on a unified TCI scheme is indicated, the UE may assume the following items for the DCI.

■ The DCI includes a CRC scrambled using a CS-RNTI.
■ The values of all bits assigned to all fields used as redundancy version fields are 1.
■ The values of all bits assigned to all fields used as modulation and coding scheme (MCS) fields are 1.
■ The values of all bits assigned to all fields used as new data indication (NDI) fields are 0.
■ In a case of frequency domain resource allocation (FDRA) type 0, the values of all bits assigned to an FDRA field are 0, in a case of FDRA type 1, the values of all bits assigned to an FDRA field are 1, and in a case of an FDRA scheme being dynamicSwitch, the values of all bits assigned to an FDRA field are 0.

The UE may transmit, to the base station, a PUCCH including a HARQ-ACK indicating whether DCI format 1_1 or 1_2 on which the items described above are assumed is successfully received (32-60).

- With respect to both DCI format 1_1 or 1_2 with DL assignment (32-00) and without DL assignment (32-50), if a new TCI state indicated through DCI 32-01 or 32-55 is the same as a TCI state having been previously indicated and thus having been being applied in uplink transmission and downlink reception, the UE may maintain the previously applied TCI state. If the new TCI state is different from the previously indicated TCI state, the UE may determine that the joint TCI state or separate TCI state set, which is indicatable by a TCI state field included in the DCI, is applied (in a time interval 32-30 or 32-80) after the start time point 32-20 or 32-70 of the first slot after passage of a time interval as long as a beam application time (BAT) 32-15 or 32-65 after PUCCH transmission, and may use the previously indicated TCI-state in a time interval 32-35 or 32-75 before the start time point 32-20 or 32-70 of the slot.
- With respect to both DCI format 1_1 or 1_2 with DL assignment (32-00) and without DL assignment (32-50), the BAT is a particular number of OFDM symbols, and may be configured through higher layer signaling, based on UE capability report information. Numerologies of the BAT and the first slot after the BAT may be determined based on the smallest numerology among all cells to which a joint TCI state or separate TCI set indicated through DCI is applied.

A UE may apply one joint TCI state indicated through a MAC-CE or DCI to reception for control resource sets connected to all UE-specific search spaces, reception of a PDSCH scheduled by a PDCCH transmitted from the control resource sets and transmission of a PUSCH, and transmission of all PUCCH resources.

If one separate TCI state set indicated through a MAC-CE or DCI includes one DL TCI state, a UE may apply the one separate TCI state set to reception for control resource sets connected to all UE-specific search spaces and to reception of a PDSCH scheduled by a PDCCH transmitted from the control resource sets, and apply a previously indicated UL TCI state to all PUSCH and PUCCH resources.

If one separate TCI state set indicated through a MAC-CE or DCI includes one UL TCI state, a UE may apply the one separate TCI state set to all PUSCH and PUCCH resources, and apply a previously indicated DL TCI state to reception for control resource sets connected to all UE-specific search spaces and reception of a PDSCH scheduled by a PDCCH transmitted from the control resource sets.

If one separate TCI state set indicated through a MAC-CE or DCI includes one DL TCI state and one UL TCI state, a UE may apply the DL TCI state to reception for control resource sets connected to UE-specific search spaces and reception of a PDSCH scheduled by a PDCCH transmitted from the control resource sets, and apply the UL TCI state to all PUSCH and PUCCH resources.

In the examples of a MAC CE described above with reference to FIG. 23 to FIG. 31, it is possible for at least one of elements thereof to be combined.

<Second embodiment: Multi-TCI state indication and activation method based on unified TCI scheme>

As an embodiment of the disclosure, a multi-TCI state indication and activation method based on a unified TCI scheme is described. A multi-TCI state indication and activation method may indicate a case where the number of indicated joint TCI states is expanded to 2 or greater and a case where the number of each of DL TCI states and UL TCI states included in one separate TCI state set is expanded to 2 or greater. If the number of each of DL TCI states and UL TCI states includible in one separate TCI state set is up to 2, an available combination of DL TCI states and UL TCI states which one separate TCI state set is able to have may be a total of 8 ({DL,UL} = {0,1}, {0,2}, {1,0}, {1,1}, {1,2}, {2,0}, {2,1}, {2,2}, here, each number indicates the number of TCI states).

If multiple TCI states are indicated to a UE by a base station, based on a MAC-CE, the UE may receive two or more joint TCI states or one separate TCI state set from the base station through the MAC-CE. The base station may schedule reception of a PDSCH including the MAC-CE for the UE through a PDCCH, and the UE may determine an uplink transmission beam or transmission filter and a downlink reception beam or reception filter, based on the indicated 2 or more joint TCI states or one separate TCI state set after 3 ms after transmission of a PUCCH including HARQ-ACK information indicating whether reception of the PDSCH including the MAC-CE is successful.

If multiple TCI states are indicated to the UE by the base station, based on DCI format 1_1 or 1_2, each codepoint of one TCI state field in the DCI format 1_1 or 1_2 may indicate two or more joint TCI states or two or more separate TCI state sets. In this case, the UE may receive a MAC-CE from the base station and activate two or more joint TCI states or two or more separate TCI state sets corresponding to each codepoint of one TCI state field in the DCI format 1_1 or 1_2. The base station may schedule reception of a PDSCH including the MAC-CE for the UE through a PDCCH, and the UE may activate pieces of TCI state information included in the MAC-CE after 3 ms after transmission of a PUCCH including HARQ-ACK information indicating whether reception of the PDSCH including the MAC-CE is successful.

If multiple TCI states are indicated to the UE by the base station, based on DCI format 1_1 or 1_2, there may be two or more TCI state fields in the DCI format 1_1 or 1_2 and one of two or more joint TCI states or two or more separate TCI state sets may be indicated based on each TCI state field. In this case, the UE may receive a MAC-CE from the base station and activate a joint TCI state or a separate TCI state set corresponding to each codepoint of the two or more TCI state fields in the DCI format 1_1 or 1_2. The base station may schedule reception of a PDSCH including the MAC-CE to the UE through a PDCCH. The UE may activate pieces of TCI state information included in the MAC-CE after 3 ms after transmission of a PUCCH including HARQ-ACK information indicating whether reception of the PDSCH including the MAC-CE is successful. Whether there are one or more additional TCI state fields may be configured for the UE through higher layer signaling, and the bit length of an additional TCI state field may be the same as an existing TCI state field, or may be adjusted based on higher layer signaling.

A transmission/reception beam-related indication may be received by a UE in a unified TCI scheme by using one scheme among a joint TCI state and a separate TCI state configured by a base station. Using one of a joint TCI state and a separate TCI state may be configured for the UE by the base station through higher layer signaling. A separate TCI state indication may be configured for the UE through higher layer signaling such that the bit length of a TCI state field in DCI format 1_1 or 1_2 is a maximum of 4.

A MAC-CE used to activate or indicate multiple joint TCI states and separate TCI states described above may exist for each of joint and separate TCI state schemes, one MAC-CE may be used to activate or indicate a TCI state, based on one of joint and separate TCI state schemes, or MAC-CEs used in an MAC-CE-based indication scheme and an MAC-CE-based activation scheme may share one MAC-CE structure or use individual MAC-CE structures. Through the following drawings to be described, various MAC-CE structures for activation and indication of multiple joint or separate TCI states may be considered. In the following drawings, for convenience of explanation, 2 TCI states being activated or indicated are considered, but the drawings may be similarly applied to three or more TCI states.

FIG. 33 is a diagram illustrating a MAC-CE structure for activation and indication of multiple joint TCI states in a wireless communication system according to an embodiment of the disclosure.

In FIG. 33, a serving cell ID field 33-05 may indicate an identifier (serving cell ID) of a serving cell, and a BWP ID field 33-10 may indicate a bandwidth part ID. An R field may be a 1-bit reserve field not including indication information. An S field 33-00 may indicate the number of pieces of joint TCI state set information included in a MAC-CE. If, for example, the value of the S field 33-00 is 1, the MAC-CE may indicate one or two joint TCI states and may have a length only up to the third octet. In this case, if the value of a $C_0$ field 33-15 is 0, there is no third octet and one joint TCI state may be indicated through a TCI state $ID_{0,0}$ field 33-20, and if the value of the $C_0$ field 33-15 is 1, there is the third octet and two joint TCI states may be indicated through the TCI state $ID_{0,0}$ field 33-20 and a TCI state $ID_{1,0}$ field 33-25, respectively.

If, for example, the value of the S field 33-00 is 0, the MAC-CE may activate one or two joint TCI states corresponding to each codepoint of a TCI state field of DCI format 1_1 or 1_2 or activate one joint TCI state corresponding to each codepoint of two TCI state fields of DCI format 1_1 or 1_2, and joint TCI states for a maximum of 8 codepoints may be activated. In a case where one or two joint TCI states are activated for one codepoint of one TCI state field, a TCI state $ID_{0,Y}$ field and a TCI state $ID_{1,Y}$ field may indicate first and second joint TCI states among two joint TCI states activated on the Y-th codepoint of the TCI state field, respectively. In a case where one joint TCI state is activated for one codepoint of two TCI state fields, a TCI state $ID_{0,Y}$ field and a TCI state $ID_{1,Y}$ field may indicate respective joint TCI states activated on the Y-th codepoints of first and second TCI state fields.

FIG. 34 is a diagram illustrating a MAC-CE structure for activation and indication of multiple separate TCI states in a wireless communication system according to an embodiment of the disclosure.

In FIG. 34, a serving cell ID field 34-05 may indicate an identifier (serving cell ID) of a serving cell, and a BWP ID field 34-10 may indicate a bandwidth part ID. An R field may be a 1-bit reserve field not including indication information. An S field 34-00 may indicate the number of pieces of separate TCI state set information included in a MAC-CE. If the value of the S field 34-00 is 1, the MAC-CE may indicate one separate TCI state set and may include only octets up to the fifth octet. If the value of the S field 34-00 is 0, the MAC-CE may include information on multiple separate TCI state sets, the MAC-CE may activate one separate TCI state set corresponding to each codepoint of a TCI state field of DCI format 1_1 or 1_2 or activate one separate TCI state set corresponding to each codepoint of two TCI state fields of DCI format 1_1 or 1_2, and as described above, separate TCI states for a maximum of 8 or 16 codepoints may be activated by higher layer signaling.

In the MAC-CE structure of FIG. 34, every four octets may correspond to one separate TCI state set starting from the second octet. For example, a $C_0$ field 34-15 may have a total of 8 values from "000" to "1 1 1", and these values may correspond to 8 cases which one separate TCI state set is able to have, respectively, as described above.

- If the $C_0$ field has the value of "000", this means that one separate TCI state set includes one UL TCI state, a TCI state $ID_{D,0,0}$ field 34-20 and 34 34 may be disregarded, and a TCI state $ID_{U,0,0}$ field 34-25 may include information on one UL TCI state. Furthermore, the fourth and fifth octets may be disregarded.
- If the $C_0$ field has the value of "001", this means that one separate TCI state set includes two UL TCI states, the TCI state $ID_{D,0,0}$ field 34-20 and 34-21 may be disregarded, and the TCI state $ID_{U,0,0}$ field 34-25 may include information on a first UL TCI state among the two UL TCI states. In addition, the fourth octet may be disregarded, and the TCI state $ID_{U,1,0}$ field 34-35 may include information on a second UL TCI state among the two UL TCI states.
- If the $C_0$ field has the value of "010", this means that one separate TCI state set includes one DL TCI state, the TCI state $ID_{D,0,0}$ field 34-20 and 34-21 may include information on one DL TCI state, and the TCI state $ID_{U,0,0}$ field 34-25 and the fourth and fifth octets may be disregarded.
- If the $C_0$ field has the value of "011", this means that one separate TCI state set includes one DL TCI state and one UL TCI state, the TCI state $ID_{D,0,0}$ field 34-20 and 34-21 may include information on one DL TCI state, and the TCI state $ID_{U,0,0}$ field 34-25 may include information on one UL TCI state. The fourth and fifth octets may be disregarded.
- If the $C_0$ field has the value of "100", this means that one separate TCI state set includes one DL TCI state and two UL TCI states, the TCI state $ID_{D,0,0}$ field 34-20 and 34-21 may include information on one DL TCI state, and the TCI state $ID_{U,0,0}$ field 34-25 may include information on a first UL TCI state among the two UL TCI states. In addition, the fourth octet may be disregarded, and the TCI state $ID_{U,1,0}$ field 34-35 may include information on a second UL TCI state among the two UL TCI states.
- If the $C_0$ field has the value of "101", this means that one separate TCI state set includes two DL TCI states, the TCI state $ID_{D,0,0}$ field 34-20 and 34-21 may include information on a first DL TCI state among the two DL TCI states, and the TCI state $ID_{U,0,0}$ field 34-25 and the fifth octet may be disregarded. In addition, a TCI state $ID_{D,1,0}$ field 34-30 may include information on a second DL TCI state among the two DL TCI states.
- If the $C_0$ field has the value of "110", this means that one separate TCI state set includes two DL TCI states and one UL TCI state, the TCI state $ID_{D,0,0}$ field 34-20 and 34-21 may include information on a first DL TCI state among the two DL TCI states, the TCI state $ID_{U,0,0}$ field 34-25 may include information on one UL TCI state, the TCI state $ID_{D,1,0}$ field 34-30 may include information on a second DL TCI state among the two DL TCI states, and the fifth octet may be disregarded.
- If the $C_0$ field has the value of "111", this means that one separate TCI state set includes two DL TCI states and two UL TCI states, the TCI state $ID_{D,0,0}$ field 34-20 and 34-21 may include information on a first DL TCI state among the two DL TCI states, the TCI state $ID_{U,0,0}$ field 34-25 may include information on a first UL TCI state among the two UL TCI states, the TCI state $ID_{D,1,0}$ field 34-30 may include information on a second DL TCI state among the two DL TCI states, and a TCI state $ID_{U,1,0}$ field 34-35 may include information on a second UL TCI state among the two UL TCI states.

FIG. 34 may illustrate an example of a MAC CE used when a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the TCI state $ID_{U,0,0}$ to TCI state $ID_{U,1,N}$ fields representing UL TCI states may be expressed by 6 bits while the TCI state $ID_{D,0,0}$ to TCI state $ID_{D,1,N}$ fields representing DL TCI states may be expressed by 7 bits.

FIG. 35 is a diagram illustrating another MAC-CE structure for activation and indication of multiple separate TCI states in a wireless communication system according to an embodiment of the disclosure.

In FIG. 35, a serving cell ID field 35-05 may indicate an identifier (serving cell ID) of a serving cell, and a BWP ID field 35-10 may indicate a bandwidth part ID. An R field may be a 1-bit reserve field not including indication information. An S field 35-00 may indicate the number of pieces of separate TCI state set information included in a MAC-CE. If, for example, the value of the S field 35-00 is 1, the MAC-CE may indicate one separate TCI state set and may have a length only up to the fifth octet.

If, for example, the value of the S field 35-00 is 0, the MAC-CE may include information on multiple separate TCI state sets, the MAC-CE may activate one separate TCI state set corresponding to each codepoint of a TCI state field of DCI format 1_1 or 1_2 or activate one separate TCI state set corresponding to each codepoint of two TCI state fields of DCI format 1_1 or 1_2, and as described above, separate TCI state sets corresponding to a maximum of 8 or 16 codepoints may be activated by higher layer signaling.

In the MAC-CE structure of FIG. 35, every four octets may correspond to one separate TCI state set starting from the second octet. A $C_{U,0}$ field 35-15 and a $C_{D,0}$ field 35-21 mean the number of UL TCI states and the number of DL TCI states included in one separate TCI state set, respectively, and the meaning of each codepoint may be as follows.

- If the $C_{U,0}$ field has a value of "00", this means that UL TCI states are not included, and thus TCI state $ID_{U,0,0}$ 35-20 and TCI state $ID_{U,1,0}$ 35-25 may be disregarded.
- If the $C_{U,0}$ field has a value of "01", this means that one UL TCI state is included, and thus TCI state $ID_{U,0,0}$ 35-20 may include information on one UL TCI state and TCI state $ID_{U,1,0}$ 35-25 may be disregarded.
- If the $C_{U,0}$ field has a value of " 10", this means that two UL TCI states are included, and thus TCI state $ID_{U,0,0}$ 35-20 may include information on a first UL TCI state among the two UL TCI states and TCI state $ID_{U,1,0}$ 35-25 may include information on a second UL TCI state among the two UL TCI states.
- If the $C_{D,0}$ field has a value of "00", this means that DL TCI states are not included, and thus the fourth and fifth octets may be disregarded.
- If the $C_{D,0}$ field has a value of "01", this means that one DL TCI state is included, and thus TCI state $ID_{D,0,0}$ 35-30 may include information on one DL TCI state and the fifth octet may be disregarded.
- If the $C_{D,0}$ field has a value of "10", this means that two DL TCI states are included, and thus TCI state $ID_{U,0,0}$ 35-30 may include information on a first DL TCI state among the two DL TCI states and TCI state $ID_{D,1,0}$ 35-35 may include information on a second DL TCI state among the two DL TCI states.

FIG. 35 may illustrate an example of a MAC CE used when a UL TCI state among separate TCI states uses, as described above, a higher layer signaling structure different from that of a DL TCI state among separate TCI states and a joint TCI state. Accordingly, a UL TCI state requires 6 bits for representing a maximum of 64 states, and thus the TCI state $ID_{U,0,0}$ to TCI state $ID_{U,1,N}$ fields representing UL TCI states may be expressed by 6 bits while the TCI state $ID_{D,0,0}$ to TCI state $ID_{D,1,N}$ fields representing DL TCI states may be expressed by 7 bits.

In the examples of a MAC CE described above with reference to FIG. 33 to FIG. 35, it is possible for at least one of elements thereof to be combined.

<Third embodiment: UE capability reporting method for supporting multi-DCI-based simultaneous uplink transmission using multiple panels, and an operation following same method>

As an embodiment of the disclosure, a method of simultaneously transmitting uplink signals scheduled by multi-DCI (mDCI), by using multiple panels is described.

Until NR release 17, it has been possible to select one panel from among multiple panels to transmit an uplink signal or, depending on UE implementation, use all the panels to transmit an uplink signal. However, such transmission is simultaneous transmission not supported in the specification, and thus it has been unexpectable that uplink transmission power is allocated according to each panel or different data is transmitted for each panel to increase the transmission amount. Meanwhile, respective PUSCHs are schedulable through different DCI associated with different values of CORESETPoolIndex, based on multi-DCI, but the scheduled PUSCHs are restricted to overlap with each other in the time domain. This implies that a function of performing simultaneous transmission in time by considering multiple panels is unsupportable.

Future NR releases are expected to discuss and introduce methods of supporting simultaneous uplink channel transmission by using multiple panels. In order to simultaneously transmit uplink signals by using multiple panels, uplink channels for simultaneous transmission may be scheduled based on single DCI, or uplink channels for simultaneous transmission may be scheduled based on multi-DCI. In the disclosure, a case of scheduling uplink channels through multi-DCI and simultaneously transmitting the scheduled uplink channels, overlapping in the time domain, at the same time is considered. If two panels are considered, two uplink channels (e.g., PUSCHs) may be scheduled through respective pieces of DCI, the channels may partially or fully overlap with each other in the time domain, and some resources or all resources may overlap or not overlap with each other in the frequency domain (frequency division multiplexing, FDM).

As described above, in order to support simultaneous uplink transmission using multiple panels, multi-panel implementation of a UE for simultaneous transmission and a UE capability associated therewith are required. A UE may report, to a base station, a supportable UE capability among various UE capabilities associated with simultaneous uplink transmission, and the base station may determine, based on the UE capability, whether to support simultaneous uplink transmission of the UE using multiple panels. If the base station determines to support simultaneous uplink transmission for the UE supporting simultaneous uplink transmission using multiple panels, the base station may configure a higher layer parameter associated therewith for the UE. Thereafter, the base station may schedule uplink channels for simultaneous uplink transmission, based on one of scheduling methods based on single-DCI or multi-DCI. Alternatively, the base station may also support same through a dynamically switching method, such as dynamic switching, by using both of the scheduling methods based on single-DCI and multi-DCI. In the disclosure, simultaneous uplink transmission using multiple panels through scheduling based on multi-DCI is considered. However, this does not mean that it is impossible for the UE to support simultaneous uplink transmission using multiple panels through scheduling based on single-DCI.

FIG. 36 illustrates an example of scheduling PUSCHs that are simultaneously transmitted in the uplink through respective panels by using multi-DCI.

DCI 36-10 having been received through a CORESET configured to have CORESETPoolIndex of 0 may schedule, for a UE, transmission of a PUSCH 36-16 and 36-17 through panel1. FIG. 36 illustrates a case where the PUSCH 36-16 and 36-17 transmitted through panel1 and scheduled through the DCI 36-10 has two layers, but a PUSCH having the number of layers being 1, other than 2, may be scheduled. DCI 36-20 having been received through a CORESET configured to have CORESETPoolIndex of 1 may schedule, for the UE, transmission of a PUSCH 36-26 and 36-27 through panel2. FIG. 36 illustrates a case where the PUSCH 36-26 and 36-17 transmitted through panel2 and scheduled through the DCI 36-20 has two layers, but a PUSCH having the number of layers being 1, other than 2, may be scheduled. Additionally, according to the implementation or capability of the UE, respective PUSCHs scheduled by respective DCI 36-10 and 36-20 may be required to have the same number of layers. Alternatively, according to the implementation or capability of the UE, respective PUSCHs scheduled by respective DCI 36-10 and 36-20 may have different numbers of layers. Panel1 and Panel2 illustrated in FIG. 36 merely correspond to an example for convenience of detailed explanation, DCI having been received through a CORESET configured to have CORESETPoolIndex of 0 may schedule uplink transmission through panel2 (a panel having an ID value greater than those of other panels in view of panel management of the UE), and DCI having been received through a CORESET configured to have CORESETPoolIndex of 1 may schedule uplink transmission through panel1 (a panel having an ID value smaller than those of other panels in view of panel management of the UE). A panel ID may not be separately reported to the base station, and the UE may randomly assign and manage an ID in view of implementation.

As described with reference to FIG. 36, respective DCI having been received from CORESETs configured to have different values of CORESETPoolIndex may schedule respective PUSCH transmitted through respective panels. In the (3-1)th embodiment, a UE capability supportable by a UE to perform simultaneous transmission using multiple panels as shown in FIG. 36 is described in detail. In the (3-2)th embodiment, whether the UE supports the UE capability described in the (3-1)th embodiment, and the specific operations of a base station and the UE according to a reported candidate value are described. A UE capability for multi-DCI-based simultaneous uplink transmission using multiple panels described in detail in the disclosure may be used as a UE capability for single-DCI-based simultaneous uplink transmission using multiple panels if necessary, as well as a multi-DCI-based operation. A parameter for a corresponding feature group (FG) or a corresponding UE capability report may be defined as a parameter for a common feature group or a common UE capability report for supporting simultaneous transmission using multiple panels.

<(3-1)th embodiment: UE feature for supporting multi-DCI-based simultaneous uplink transmission using multiple panels>

As an embodiment of the disclosure, a UE feature required for a UE to support multi-DCI-based simultaneous uplink transmission using multiple panels is described in detail.

In order to support multi-DCI-based simultaneous uplink transmission using multiple panels (hereinafter, it may be replaced with mDCI-based simultaneous transmission with multi-panel (STxMP) for convenience of explanation in the disclosure), additional UE features and UE capability reports related thereto as follows may be required. At least one of the following UE features may be defined, and a UE capability report for the at least one UE feature may be required:

- UE feature 1) A maximum number of CORESETs configurable per bandwidth part (BWP) per support cell (if CORESET0 is configured, a maximum configurable number of CORESETs including CORESET0): This UE feature and a corresponding UE report may be used identically to a UE feature and a corresponding UE report for multi-DCI-based multi-TRP support for the downlink.
- UE feature 2) A maximum number of CORESETs per CORESETPoolIndex: This UE feature and a corresponding UE report may be identical to a UE feature and a corresponding UE report for multi-DCI-based multi-TRP support for the downlink.
- UE feature 3) Support of transmission of PUSCHs fully overlapping in the time domain: The UE feature may support transmission of PUSCHs which fully overlap in the time domain, but do not overlap in the frequency domain. In addition, the UE feature may also support transmission of PUSCHs which fully overlap in the frequency domain as well as the time domain. If the UE feature includes whether to support transmission of PUSCHs which fully overlap in both the time domain and the frequency domain, "UE feature 6" and a UE capability described later may be omitted.

- UE feature 4) A maximum number of PUSCHs transmitted per CORESETPoolIndex per slot: The UE feature means a maximum number of PUSCHs scheduled through DCI associated with one value of CORESETPoolIndex that the UE is able to process in one slot. A candidate value reportable through a UE capability may be one of {1, 2, 3, 4, 7}. Alternatively, any natural number between 1 and 7 may be a candidate. Alternatively, any natural number between 1 and 14 may be a candidate. For example, if the UE reports 2 to the base station for a UE report corresponding to the UE feature 4), this may imply that the UE is able to transmit, on one slot, two PUSCHs scheduled by DCI having CORESETPoolIndex of 0 (or having no CORESETPoolIndex configured therefor) or CORESETPoolIndex of 1.
- UE feature 5) A maximum number of PUSCHs transmitted for all values of CORESETPoolIndex per slot: The UE feature means a maximum number of PUSCHs scheduled through DCI associated with all values of CORESETPoolIndex that the UE is able to process in one slot. A candidate value reportable through a UE capability may be one of {(1), 2, ..., N}. Here, 1 may not be included as the candidate value. Here, N may be 14 or another random natural number.
- UE feature 6) Support of transmission of PUSCHs fully overlapping in the time domain and the frequency domain: If "UE feature 3" does not include support of transmission of PUSCHs fully overlapping in the time domain and the frequency domain, UE feature 6 may be considered as an additional UE feature and a UE capability. A pre-requisite for supporting "UE feature 6" may be that "UE feature 3" is required to be supported.
- UE feature 7) Support of transmission of PUSCHs partially overlapping in the time domain and the frequency domain: The UE feature is a UE feature for notifying of whether simultaneous transmission of PUSCHs overlapped by at least one resource element (RE) is possible. If a UE capability associated therewith is reported to the base station, the base station may identify that the UE is also able to simultaneously transmit PUSCHs overlapped by some resources. A precondition for supporting "UE feature 7" may be that "UE feature 6" is required to be supported.
- UE feature 8) Support of an out-of-order operation related to a PUSCH for a PDCCH: Before describing the UE feature, an out-of-order operation is described first. The UE may not be able to, before completing transmission of a PUSCH scheduled by firstly received DCI, preferentially perform PUSCH transmission scheduled by subsequently received DCI. However, if the out-of-order operation is supported, the UE may be able to perform an operation of transmitting a PUSCH scheduled by subsequently received DCI earlier than a PUSCH scheduled by previously received DCI. If the UE is able to support UE feature 8 and perform UE reporting therefor, the UE may perform PUSCH transmission using mDCI-based STxMP in which the out-of-order operation described above is possible.
- UE feature 9) Simultaneous transmission using different values of type D: The UE feature means that the UE is able to support simultaneous uplink transmission using different QCI type-D RSs. That is, if different RSs are configured to be source RSs of QCI type-D, this means that the UE is able to perform simultaneous uplink transmission using spatial filters configured for the different source RSs.
- UE feature 10) Support of retransmission of a PUSCH having been scheduled through a different value of CORESETPoolIndex: The UE feature indicates whether to support that, with respect to PUSCHs scheduled through different values of CORESETPoolIndex, retransmission of a PUSCH is scheduled by DCI, other than DCI associated with a value of CORESETPoolIndex through which the PUSCH is scheduled, associated with a different value of CORESETPoolIndex. For example, in a case where PUSCH 1 is scheduled by DCI 1 having been received through a CORESET having CORESETPoolIndex of 0 and PUSCH 2 is scheduled by DCI 2 having been received through a CORESET having CORESETPoolIndex of 1, UE feature 9 and a UE report therefor may be used to indicate that retransmission of PUSCH 2 is supported by DCI to be received through a CORESET having CORESETPoolIndex of 0 and retransmission of PUSCH 1 is supported by DCI to be received through a CORESET having CORESETPoolIndex of 1.
- UE feature 11) When mDCI-based STxMP is supported, a maximally supportable layers for all uplink transmission to a corresponding serving cell: The UE feature means the number of layers maximally transmittable to a corresponding serving cell when the UE performs mDCI-based STxMP. The UE feature means the number of layers that the UE is able to support only when a PUSCH scheduled by DCI having been received through a CORESET having CORESETPoolIndex of 0 (or there is no configured value) or CORESETPoolIndex of 1 fully or partially (at least one RE) overlaps. The number of layers may be defined to be the sum of layers of respective scheduled and overlapping PUSCHs.
- UE feature 12) When mDCI-based STxMP is supported, a maximally supportable layers for each uplink transmission: The UE feature means the number of layers maximally supportable for each uplink channel (e.g., PUSCH) transmitted to a corresponding serving cell when the UE performs mDCI-based STxMP. That is, the UE feature means the number of layers that the UE is able to maximally support for one PUSCH transmission only when a PUSCH scheduled by DCI having been received through a CORESET having CORESETPoolIndex of 0 (or there is no configured value) or CORESETPoolIndex of 1 fully or partially (at least one RE) overlaps.

- UE feature 13) When simultaneous PUSCH transmission is performed, support of a different number of layers for each PUSCH: The feature indicates whether, when mDCI-based STxMP is supported, respective scheduled PUSCHs having different numbers of layers are supported. That is, if the UE supports feature 13 and performs corresponding UE reporting, PUSCHs having different numbers of layers may be scheduled by DCI received through CORESETs associated with respective values of CORESETPoolIndex.
- UE feature 14) Support of SRS resource sets, the number of which is greater than 1, having usage of "codebook" or "nonCodebook" for mDCI-based STxMP support: The UE feature indicates whether the UE supports more than one SRS resource set having usage of "codebook" or "nonCodebook". As a specific example, if UE feature 14 is supported and a maximum of two SRS resource sets (the usage thereof is "codebook" or "nonCodebook") are supported, each SRS resource set may be associated with transmission of a PUSCH scheduled by each value of CORESETPoolIndex.
- UE feature 15) Support of a different number of SRS resources for each SRS resource set having usage of "codebook" or "nonCodebook": The UE feature indicates whether a UE supporting UE feature 14 described above supports respective SRS resource sets including different numbers of SRS resources. Codebook-based PUSCH transmission or nonCodebook-based PUSCH transmission may be reported through a UE report corresponding to one feature, or may be reported through respective UE reports corresponding to different UE features according to respective transmission methods. For example, UE feature 15-1 may indicate that the UE is able to support different numbers of SRS resources with respect to SRS resource sets having usage of "codebook", and UE feature 15-2 may indicate that the UE is able to support different numbers of SRS resources with respect to SRS resource sets having usage of "nonCodebook". Alternatively, the UE may select one value from among {CB, NCB, both} as a candidate value for a component of a corresponding FG, the one value indicating whether the component is supportable when the usage of an SRS resource set is "codebook", when same is "nonCodebook", or by both of the two methods, and report a UE capability to the base station.
- UE feature 16) Support of different maximum numbers of SRS ports for SRS resources included in each SRS resource set having usage of "codebook" for mDCI-based STxMP support: The UE feature assumes that UE feature 14 is supported. The UE feature is a feature indicating that a maximum number of SRS ports among SRS resources included in an SRS resource set (the usage thereof is "codebook") associated with a CORESET having CORESETPoolIndex of 0, and a maximum number of SRS ports among SRS resources included in an SRS resource set (the usage thereof is "codebook") associated with a CORESET having CORESETPoolIndex of 1 may be different from each other. If the UE supports the UE feature and a UE report therefor, multiple (e.g., two) SRS resource sets having usage of "codebook" and having different maximum numbers of SRS ports may be configured for the UE by the base station, and the UE may support mDCI-based STxMP according thereto.
- UE feature 17) Full power mode supported for an SRS resource set associated with each value of CORESETPoolIndex when codebook-based PUSCH transmission is performed: The UE feature may indicate a full power mode supportable for each PUSCH transmitted through an SRS resource set associated with each value of CORESETPoolIndex. Sub-features which may be included may indicate whether full power modes supportable for multiple SRS resource sets (e.g., two SRS resource sets) are required to be same or may be different from each other. If multiple SRS resource sets are required to be supported by the same full power mode, supportable full power modes and SRS resources in SRS resource sets configured according thereto are required to be configured to support the same full power mode. If multiple SRS resource sets are allowed to be supported by different full power modes, a corresponding higher layer parameter may be configured without any restriction on a configuration of SRS resource sets and SRS resources for supporting the same full power mode.

Previously defined UE capabilities and UE features are reused as most of the above UE capabilities and UE features for supporting multi-DCI-based STxMP, and only some operations having no UE capability and UE feature to be reused may be newly defined to add new UE capabilities and UE features (hereinafter, this is referred to as Method 1). Alternatively, some of previously defined new UE capabilities and UE features are defined as a pre-requisite, but most of associated UE capabilities and UE features may be newly defined to be a new feature group and a new UE report parameter (hereinafter, this is referred to as Method 2). Method 1 and Method 2 define UE capabilities and UE features for supporting mDCI-based STxMP in different types, but eventually, operations for supporting mDCI-based STxMP by a UE and a base station may be same or similar to each other. The previously defined UE capabilities and UE features are UE capabilities and UE features for simultaneous reception of multi-DCI-based PDSCHs, and may indicate some identical UE capabilities and UE features capable of supporting simultaneous uplink and downlink transmission and reception.

An additional UE feature may be required other than UE feature 1 to UE feature 17 described above as UE features for supporting multi-DCI-based STxMP, and corresponding UE reporting may be performed. Alternatively, only some UE features and corresponding UE reports, according to a multi-DCI-based STxMP operation scenario, among UE feature 1 to UE feature 17 described above may be used, and the others may not be used.

When the base station and the UE support multi-DCI-based STxMP, the UE may report a UE capability so as to report, to the base station, an STxMP technique(s) specifically supportable according to a combination of some or all of UE feature 1 to UE feature 17 and additionally required UE features (if they exist). The base station may configure, for the UE, a higher layer parameter to support one or multiple techniques among the specific multi-DCI-based STxMP technique(s), based on received UE capabilities reported by the UE. Alternatively, the base station may not support multi-DCI-based STxMP.

<(3-2)th embodiment: Specific method of configuring UE features to support multi-DCI-based simultaneous uplink transmission using multiple panels, and a corresponding UE capability>

As an embodiment of the disclosure, a specific method of configuring UE features required for a UE to support multi-DCI-based simultaneous uplink transmission using multiple panels and a corresponding UE capability are described.

In the (3-1)th embodiment, UE feature 1 to UE feature 17 for supporting multi-DCI-based simultaneous uplink transmission using multiple panels has been defined and described. In this embodiment, a method of concretely configuring UE features with respect to some features among UE feature 1 to UE feature 17 is described.

[Specific UE feature group configuration method for multi-DCI-based STxMP support]

A feature group (FG), which is a basis for supporting multi-DCI-based STxMP, selected from among the above UE features may be configured. As described in the (3-1)th embodiment, UE features may be configured as the UE features included in the FG as shown in Table 45 below with respect to UE feature 1 and/or UE feature 2 and/or UE feature 3 and/or UE feature 4 according to Method 2 (Most of associated UE features are newly defined), and a UE may report a UE capability therefor to a base station. All or some of UE features 1 to 5 may be included, and Table 45 shows a case where all the features of UE features 1 to 5 are included in the FG.

Table 45

| FG(and index) | Components | Prerequisite FGs | Field name in TS 38.331 | Parent IE in TS 38.331 | Note | Mandatory /Optional |
|---|---|---|---|---|---|---|
| Multi-DCI based STxMP (xy-za) | 1: A maximum number of CORESETs configurable per bandwidth part (BWP) per support cell<br>2: A maximum number of CORESETs per CORESET-PoolIndex<br>3: Support of transmission of PUSCHs fully overlapping in the time domain<br>4: A maximum number of PUSCHs transmitted per CORESETPoolIndex per slot<br>5: A maximum number of PUSCHs transmitted for all values of CORESETPoolIndex per slot | | multiDCI-STxMP | FeaturesetUplinkPerCC-v18xx | Component 1: Candidate value {2, 3, 4, 5}<br>Component 2: Candidate value {1, 2, 3}<br>Component 4: Candidate value {1, 2, 3, 4,7}<br>Component 5: Candidate value {2, 3, ..., 14} | Optional with capability signaling |

In Table 45, an "FG" row denotes a feature group, and "Component" indicates UE features included in the FG.

Here, an FG index indicates the index value of the FG, and x, y, and z indicate real numbers. For example, the index may be the value of 81-2a. In the disclosure, the FG is indexed by xy-za and the index is represented together in the "FG" row, but may be separated from the FG and represented in another row in a document such as technical report 38.822. In Table 45, the FG includes a total of 5 components, and the respective components indicate values corresponding to UE features 1 to 5 described in the (3-1)th embodiment. "Prerequisite FGs" indicates a pre-requisite FG for the FR, and indicates that FG "multi-DCI based STxMP" in Table 45 does not need a pre-requisite FG. "Field name in TS 38.331" indicates a higher layer parameter for reporting a UE capability for the FG. The UE may configure, for the FG, whether each component 1 to 5 is supported and candidate values in the following *"multiDCI-STxMP",* and transmit same to the base station. "Parent IE in TS 38.331" indicates the report granularity of a higher layer parameter including "Field name in TS 38.331" reported by the UE, and the higher layer parameter *"multiDCI-STxMP"* for a UE capability report of the FG may be reported through *"FeatureSetUplinkPerCC-v18xx"* that is a feature set per CC (FSPC, per CC per band per band combination) level. Here, *"FeatureSetUplinkPerCC-v18xx"* may be defined as a new higher layer parameter for a UE capability report of an uplink FSPC level added to NR release 18, and xx may be a value having an index among newly added higher layer parameters. The FG "multi-DCI based STxMP" being reported at an FSPC level is assumed, but the UE capability may be reported to the base station at another level of granularity, such as "FS" (per feature set), "BC" (per band combination), or "Band" (per band). In a "Mandatory/Optional" row, the FG may be defined to be an "optional" FG performing capability signaling (i.e., UE capability report). The UE may optionally support a corresponding operation, and capability signaling is required to be accompanied to support a corresponding function. In Table 45 and an example for a feature group described below, areas for necessity of difference according to FDD/TDD and necessity of difference according to FR1/FR2 may be omitted, but may be added to an actual technical report. A value available for the two areas may be "No".

Table 46 shows an example of a case of configuring a feature group (FG) that is a basis for supporting multi-DCI-based STxMP according to Method 1 described in the (3-1)th embodiment.

[Table 46]

| FG(and index) | Components | Prerequisite FGs | Field name in TS 38.331 | Parent IE in TS 38.331 | Note | Mandatory /Optional |
|---|---|---|---|---|---|---|
| Multi-DCI based STxMP (xy-za) | 1: Support of transmission of PUSCHs fully overlapping in the time domain<br>2: A maximum number of PUSCHs transmitted per CORESETPoolIndex per slot<br>3: A maximum number of PUSCHs transmitted for all values of CORESETPoolIndex per slot | 16-2a | multiD CI-STxMP | FeaturesetUplinkPerCC-v18xx | Component 2: Candidate value {1, 2,3,4,7} Component 3: Candidate value {2, 3, ..., 141 | Optional with capability signal! ng |

In comparison between Table 45 and Table 46, it may be noted that basic UE features for supporting multi-DCI-based STxMP are identical, but components sharable with a downlink-related FG are excluded from Table 46 according to Method 1. That is, it may be noted that components 1 and 2 in Table 45 are excluded from Table 46, and 16-2a is added as a pre-requisite (Prerequisite FGs) instead. Therefore, these changes may be reflected on detailed contents (indexing of components and resultant modifying of Note), and the UE may configure same to be a UE capability and report the UE capability to the base station.

Therefore, Table 45 and Table 46 may be used as UE features for reporting that the UE is able to support the same operation (multi-DCI-based STxMP), and may be defined as an FG by being configured as one form according to Method 2 or Method 1.

Table 47 is an example of an FG configuration for indicating whether, for a UE supporting multi-DCI-based STxMP, transmission of PUSCHs fully overlapping in the time and frequency domains (FG index is xy-za-0) is supported or transmission of PUSCHs partially overlapping in the time and frequency domains (FG index is xy-za-1) is supported.

[Table 47]

| FG(and index) | Components | Prere quisit e FGs | Field name in TS 38.331 | Parent IE in TS 38.331 | Note | Manda tory /Optio nal |
|---|---|---|---|---|---|---|
| Fully overlap ping PUSC Hs in time and frequen cy domain (aη- za-0) | 1. Support of transmission of fully overlapping PUSCHs. That is, a PUSCH scheduled by DCI associated with a CORESET configured to have CORESETPoolIndex =0 and a PUSCH resource scheduled by DCI associated with a CORESET configured to have CORESETPoolIndex =1 are completely identical<br><br>2. A maximum number of PUSCH scrambling sequences per serving cell | xy-za | overlap PUSC HsFull yFreqT ime | MIMO- Paramete rsPerBan d | Component 2: Candidate value {1, 2} | Option al with capabi lity sig- nal! ng |
| Partiall y overlap ping PUSC Hs in time and frequen cy domain (aη-za) | 1. Support of transmission of partially overlapping PUSCHs. That is, a PUSCH scheduled by DCI associated with a CORESET configured to have CORESETPoolIndex =0 and a PUSCH resource scheduled by DCI associated with a CORESET configured to have CORESETPoolIndex =1 are overlapped by at least one RE. | xy-za-0 | overlap PUSC HsParti allyFre qTime | MIMO- Paramete rsPerBan d | | Option al with capabi lity signal! ng |

An FG having an FG index of xy-za-0 and supporting fully overlapping PUSCHs requires support of xy-za as a pre-requisite. If the UE support the FG, the UE may report *"overlapPUSCHsFullyFreqTime"* included in the higher layer parameter *"MIMO-ParametersPerBand'* meaning a UE capability report granularity of a band level. FG xy-za-0 may include component 2. Alternatively, if different scrambling sequences are not used according to a multi-DCI-based STxMP operation method, component 2 may not be included. If component 2 is included and the UE supports the FG xy-za-0, the UE may configure one of candidate values and perform UE capability reporting. If component 2 is included and the UE does not support the FG xy-za-0, the UE may not perform the UE capability reporting. If component 2 is not included and the UE supports the FG xy-za-0, the UE may configure "supported" as the UE capability reporting to perform same. If component 2 is not included and the UE does not support the FG xy-za-0, the UE may not perform the UE capability reporting. Similarly, an FG having an FG index of xy-za-1 and supporting partially overlapping PUSCHs requires support of xy-za-0 as a pre-requisite. From the above description, it may be inferred that support of xy-za as a pre-requisite of xy-za-0 is also required as well as xy-za-0 as the pre-requisite. Other higher layer parameter configurations for UE reporting may be defined similarly to FG xy-za-0.

Table 48 shows an example of an FG for UE features related to an SRS resource set supportable by the UE to support multi-DCI-based STxMP.

[Table 48]

| FG(and index) | Components | Prerequisite FGs | Field name in TS 38.331 | Parent IE in TS 38.331 | Note | Mandatory /Optional |
|---|---|---|---|---|---|---|
| More than one SRS resource set with usage set to 'codebook' or 'nonCodebook' (xy-zb) | 1: Support of SRS resource sets, the number of which is greater than 1, having usage of "codebook" or "nonCodebook" for mDCI-based STxMP support when mDCI-based STxMP is supported. Respective SRS resource sets are associated with a CORESET having CORESETPoolIndex of 0 and a CORESET having CORESETPoolIndex of 1 | xy-za | SupportTwoSRSResSet-mDCIbased STxMP | FeatureSet Uplink | | Optional with capability signaling |
| Different number of SRS resources in each SRS resource set (xy-zb-1) | 1: Support of a different number of SRS resources for each SRS resource set when mDCI-based STxMP is supported<br>2: The number of SRS resources maximally includible for each SRS resource set | xy-zb | Support Different NrofSRS ResforSets-mDCIbased STxMP | FeatureSet Uplink | Component 1: Candidate value {CB, NCB, both} Component 2: Candidate value {1_1, 1_2, 2_1, 2_2} | Optional with capability signal! ng |
| Different maximum number of SRS ports in each SRS resource set with usage set to 'code book' (xy-zb-2) | 1: Support of a maximum number of SRS ports among SRS resources included in an SRS resource set (the usage thereof is "codebook") associated with a CORESET having CORESETPoolIndex of 0, and a different maximum number of SRS ports among SRS resources included in an SRS resource set (the usage thereof is "codebook") associated with a CORESET having CORESETPoolIndex of 1<br>2: The number of SRS ports maximally supportable for SRS resources included in each SRS resource set | xy-zb | Support Different NrofSRS ResforSets-mDCIbased STxMP | FeatureSet Uplink | Component 2: Candidate value {1_1, 1_2, 2_1, 2_2} | Optional with capability signaling |

FGs zy-zb, zy-zb-1, and zy-zb-2 are an example of UE features relating to an SRS resource set configuration when multi-DCI-based STxMP is supported and higher layer parameters for UE capability reports. Similarly to the description of different FG described above, each field may be configured by an FG, features (components) included in the FG, an FG that is a pre-requisite, a higher layer parameter for a UE capability report for the FG, a higher layer parameter meaning the UE report granularity of the higher layer parameter for the UE capability report, a note for additional description of the FG and description of candidate values of components included in the FG, and a field indicating whether it is required to mandatorily support the FG (Mandatory) or it is possible to optionally support the FG (Optional). FG zy-zb, for operating an SRS resource set for each value of CORESETPoolIndex, indicating whether multiple SRS resource sets are supported may be required, as a pre-requisite, to support FG zy-za for supporting multi-DCI-based STxMP. FGs zy-zb-1 and zy-zb-2 may be required, as a pre-requisite, to support FG xy-zb indicating whether multiple SRS resource sets are supported. In the example, only an example in which the number of SRS resource sets supported for component 2 of FG xy-zb-1 is 2 and up to two SRS resources being included in each SRS resource set is possible is specified. However, a case where more than two SRS resource sets are supportable and more than two SRS resources are supported in each set may be considered. In consideration of these combinations, new candidate values for component 2 may be defined (e.g., when four SRS resource sets (usage thereof is codebook or nonCodebook) are supported and a maximum of four SRS resources are includible in one set, 1_2_4_4 may be a candidate value). Similarly, in an example, if the number of SRS resource sets supported for component 2 of FG xy-zb-2 is 2 and the number of SRS ports maximally supportable for SRS resources includible in each set is 2, candidate values for component 2 may be defined as in the note of the FG.

In a similar way to the example for the FG, UE feature(s) described in the (3-1)th embodiment may be grouped into one FG or each UE feature may be defined as one FG, and the UE may configure a corresponding value as a higher layer parameter for a UE report associated thereto according to a capability supportable by the UE, and report same to the base station.

<(3-3)th embodiment: Specific operation for multi-DCI-based simultaneous uplink transmission using multiple panels according to a reported UE capability>

As an embodiment of the disclosure, configuration and indication of a base station and a corresponding specific operation of a UE to perform multi-DCI-based simultaneous uplink transmission using multiple panels according to a UE capability reported by a UE are described.

In the (3-3)th embodiment, an example for an operation of a UE performing multi-DCI-based STxMP and a base station supporting same, according to a UE feature, an FG associated therewith, and a UE capability report described in the (3-1)th embodiment or the (3-2)th embodiment, is described in detail.

A UE may support FG xy-za for performing multi-DCI-based STxMP. The UE may select whether to support each component of FG xy-za, and select one of candidate values of a corresponding component to configure a higher layer parameter value for a UE report associated therewith. For example, the UE may support all component 1 to component 5 included in FG xy-za, configure "4" for component 1, configure "2" for component 2, configure "2" for component 4, configure "4" for component 5, and configure "supported" (or this may be an indicator notifying of being supportable such as "enable") for component 3, to report a UE capability through the higher layer parameter *"multiDCI-STxMP"*. That is, the UE may notify a base station of the number (4) of CORESETs configurable per bandwidth part for a corresponding support cell, the number (2) of CORESETs configurable per CORESETPoolIndex, whether fully overlapping PUSCH transmissions are possible only in the time domain, the number (2) of PUSCHs schedulable per CORESETPoolIndex in one slot, and the number (4) of PUSCHs transmittable by the UE in one slot. A corresponding configuration (a CORESET and the number of CORESETs per CORESETPoolIndex) and the number of PUSCHs allowed in one slot when being scheduled may be determined based on the UE capability report transmitted to the base station. That is, a maximum of four CORESETs may be configured per bandwidth part of the serving cell, and up to two CORESETs may be configured per CORESETPoolIndex. A maximum of four PUSCHs including both PUSCHs scheduled based on DCI and PUSCHs scheduled based on a configured grant may be allowed in one slot, and the number of PUSCHs schedulable through each value of CORESETPoolIndex may be allowed to a maximum of 2. These numbers are maximally configurable and schedulable upper limit numbers, and a higher layer configuration and DCI scheduling for supporting a number smaller than these numbers may be used.

Thereafter, the UE may additionally support UE feature 6 (PUSCH transmissions fully overlapping in the time domain and the frequency domain) and UE feature 7 (PUSCH transmissions partially overlapping in the time domain and the frequency domain). The two features may be defined as respective FGs. Alternatively, the two features may be defined to be two components in one FG. If the UE supports UE feature 7 and thus performs UE capability reporting therefor, the base station may schedule multiple PUSCHs fully or partially overlapping or not overlapping in the time and frequency domains through multi-DCI. If the PUSCHs fully or partially overlap with each other, the UE performs multi-DCI-based STxMP and if the PUSCHs do not overlap with each other (in the time domain), the UE transmits the PUSCHs divided in time.

The UE may notify the base station of whether UE feature 8 is supported, through a UE report. If the UE does not support the feature, the base station is required to avoid an out-of-order operation (an operation in which a PUSCH scheduled by subsequently received DCI is transmitted earlier) when scheduling PUSCHs through multi-DCI.

The UE may support UE feature 9 and perform simultaneous uplink transmission using different values of QCL type-D. If the UE transmits a UE report for feature 9 to the base station, the base station may schedule uplink beams for multiple PUSCHs scheduled through multi-DCI, to have different values of QCL type-D. If the UE does not support the UE feature, the base station may be required to schedule PUSCHs such that the overlapping PUSCHs use a spatial filter based on the same value of QCL type-D.

If the UE supports UE feature 10, the UE performs UE reporting for the UE feature and retransmit a PUSCH having been scheduled by DCI received through a CORESET associated with a value of CORESETPoolIndex, through DCI received for another value of CORESETPoolIndex. A scheduling example of the case is omitted because same has been described using a specific example in the (3-1)th embodiment. A HARQ process number or a new data indicator for PUSCH transmission may be collectively managed. The wording "collective management" may indicate that multiple pieces of DCI received through CORESETs according to multiple values of CORESETPoolIndex are collectively managed. Alternatively, DCI may be individually managed, and a new DCI field is introduced into the DCI and may indicate retransmission of a PUSCH scheduled by DCI associated with another value of CORESETPoolIndex.

The UE may perform UE reporting for one feature group or FGs configured by individual feature groups with respect to features 11, 12, and 13. A pre-requisite of one or multiple FGs may be xy-za indicating an FG for supporting mDCI-based STxMP. When the UE performs UE reporting for UE features 11 and 12, the UE may notify the base station of the number of all simultaneously transmittable layers and the number of layers for each PUSCH transmission with respect to the respective features. For example, the UE may report "4" for feature 11 and "2" for feature 12. Alternatively, the UE may report a maximum number of supported layers for each PUSCH transmission (e.g., two PUSCH transmissions) for feature 12, and for example, a combination of respective numbers of layers for PUSCH transmissions, such as "2-2" or "2-1", may be reported. Alternatively, an individual candidate value for each transmission may be reported. The above example for UE features 11 and 12 merely corresponds to an example, and all reporting may not be performed or only partial reporting may be performed. If reporting is not performed, the base station may infer the number of uplink transmission layers supportable by the UE for simultaneous uplink transmission through a UE feature and a UE report associated with another PUSCH. If the UE supports UE feature 13, the number of layers of a PUSCH scheduled by each piece of DCI may be different. If the UE does not support UE feature 13, the number of layers of a PUSCH scheduled by each piece of DCI has to be the same. The base station may perform PUSCH scheduling, based on a UE report transmitted by the UE for the UE feature.

As described with reference to Table 48, the UE may notify the base station of whether UE features 14, 15, and 16 are supported, through FGs xy-zb, xy-zb-1, and xy-zb-2 and UE reports therefor. FG xy-zb is required to be supported so that PUSCHs scheduled by respective values of CORESETPoolIndex are operated based on different SRS resource sets. Thereafter, at the time of UE reporting for each UE feature of a subsequent FG, the UE may select a candidate value supportable by the UE and report same to the base station. For example, if "CB" is configured as a candidate value for FG xy-zb-1, when mDCI-based STxMP is supported, the UE may support PUSCH transmission through respective SRS resource sets including different numbers of SRS resources only for codebook-based PUSCH transmission. This implies that the UE is unable to support a corresponding function for nonCodebook-based PUSCH transmission. That is, if the base station supports the UE for nonCodebook-based PUSCH transmission, the base station is required to configure, for the UE, respective SRS resource sets including the same number of SRS resources and the UE is required to support PUSCH transmission based on the SRS resource sets. Similarly, the UE may select an SRS port configuration supportable by the UE as a candidate value for FG xy-zb-2, and perform UE reporting to the base station.

If UE is able to support a full power transmission mode and is able to support different full power transmission modes for SRS resource sets associated with different values of CORESETPoolIndex when mDCI-based STxMP is supported, this means that the UE is able to support feature 17 and the UE performs UE reporting therefor. At the time of UE reporting, the respective full power transmission modes supportable for SRS resource sets of the respective values of CORESETPoolIndex may be reported as a candidate value. Alternatively, the UE may define a new subordinate FG and perform additional UE reporting.

FIG. 37 illustrates an operation flowchart of a UE for supporting mDCI-based STxMP.

A UE identifies a supportable UE feature among multiple UE features for supporting mDCI-based STxMP (operation 37-01). The UE feature may be all or some of UE feature 1 to UE feature 17 described in the (3-1)th embodiment, or may include other UE features not specified in the disclosure. Thereafter, the UE performs UE capability reporting for the supported UE feature (operation 37-02). The UE may configure a candidate value of a higher layer parameter for a UE report for the UE feature, or configure a value of "supported" as a field of the corresponding higher layer to transmit the UE report to a base station. Then, the UE may receive a higher layer parameter for transmission or reception in an NR system from the base station (operation 37-03). The UE identifies whether the received higher layer parameter includes a higher layer parameter for multi-DCI-based STxMP (operation 37-04). If the higher layer parameter configured by the base station includes a higher layer parameter for supporting multi-DCI-based STxMP, the UE may support multi-DCI-based STxMP (operation 37-05). When PUSCHs scheduled by respective pieces of DCI received through CORESETs associated with different values of CORESETPoolIndex overlap on time and frequency resources, or overlap on time resources, the UE may support STxMP (operation 37-05). If the higher layer parameter configured by the base station does not include a higher layer parameter for supporting multi-DCI-based STxMP (operation 37-04), the UE may perform a conventional operation (operation 37-06). That is, this means that transmission of different PUSCHs overlapping in the time domain is not allowed to the UE.

FIG. 38 illustrates an operation flowchart of a base station for supporting mDCI-based STxMP.

A base station may receive a UE capability from a UE (operation 38-01). The base station identifies whether the UE is able to support multi-DCI-based STxMP, based on the UE capability received from the UE (operation 38-02). If it is identified that the UE is able to support multi-DCI-based STxMP, the base station may determine, based on the UE capability, whether to configure, for the UE, a higher layer parameter for supporting multi-DCI-based STxMP (operation 38-03). Even if the UE has reported a UE capability indicating that the UE is able to support multi-DCI-based STxMP, the base station may not configure a higher layer parameter for a corresponding function. However, the base station does not configure the higher layer parameter for the corresponding function for a UE incapable of supporting the function. If the base station determines to configure, for the UE, the higher layer parameter for multi-DCI-based STxMP, the base station transmits higher layer parameters including the parameter to the UE (operation 38-04). If the base station determines not to configure, for the UE, the higher layer parameter for multi-DCI-based STxMP, the base station transmits only higher layer parameters except for the parameter to the UE (operation 38-05). Thereafter, the base station may schedule multiple PUSCHs for multi-DCI-based STxMP for the UE capable of supporting multi-DCI-based STxMP (the UE having performed up to operation 38-04) according to a scheduler.

In the third embodiment, PUSCHs are selected to describe an example of supporting multi-DCI-based STxMP. UE features and UE capability reports described above may be used for not only PUSCH support through multi-DCI-based STxMP, but also PUCCH support through multi-DCI-based STxMP. In this case, UE features and capability reports may be reused identically, or may be modified according to a description suitable for some PUCCHs and then reused. In addition, some of UE features and capability reports described in detail in the disclosure may be used for support of single-DCI-based STxMP as well as multi-DCI-based STxMP.

FIG. 39 illustrates a structure of a UE in a wireless communication system according to an embodiment of the disclosure.

Referring to FIG. 39, the UE may include a transceiver, which refers to a UE receiver 3900 and a UE transmitter 3910 as a whole, a memory (not illustrated), and a UE processor 3905 (or UE controller or processor). The UE transceiver 3900 and 3910, the memory, and the UE processor 3905 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

FIG. 40 illustrates a structure of a base station in a wireless communication system according to an embodiment of the disclosure.

Referring to FIG. 40, the base station may include a transceiver, which refers to a base station receiver 4000 and a base station transmitter 4010 as a whole, a memory (not illustrated), and a base station processor 4005 (or base station controller or processor). The base station transceiver 4000 and 4010, the memory, and the base station processor 4005 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a terminal in a wireless communication system, the method comprising:

   transmitting, to a base station, terminal capability information including information related to simultaneous transmission with multi-panel (STxMP);
   receiving a higher layer signal from the base station;
   identifying whether the higher layer signal includes a parameter for supporting the STxMP;
   in case that the higher layer signal includes the parameter for supporting the STxMP, identifying support of the STxMP based on multi-downlink control information (DCI);
   receiving, from the base station, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1; and
   performing a first PUSCH transmission and a second PUSCH transmission overlapping at least in a time domain, based on the STxMP.

2. The method of claim 1, wherein the information related to the STxMP comprises information indicating whether more than one sounding reference signal (SRS) resource set having a usage of codebook or nonCodebook is supported.

3. The method of claim 1, wherein the information related to the STxMP comprises at least one of information on support of transmission of PUSCHs overlapping in the time domain, information on a maximum number of PUSCHs transmitted per slot and CORESET pool index, or information on a maximum number of PUSCHs transmitted for all CORESET pool indexes per slot.

4. The method of claim 1, wherein the information related to the STxMP comprises at least one of information on whether respective SRS resource sets support different numbers of SRS resources in case that the STxMP is supported, or information on the number of SRS resources maximally included in each SRS resource set.

5. A method performed by a base station in a wireless communication system, the method comprising:

   receiving, from a terminal, terminal capability information including information related to simultaneous transmission with multi-panel (STxMP);
   generating a higher layer signal including a parameter for supporting the STxMP, based on the terminal capability information;
   transmitting the higher layer signal to the terminal;
   determining support of the STxMP based on multi-downlink control information (DCI);
   transmitting, to the terminal, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1; and
   performing a first PUSCH transmission and a second PUSCH reception overlapping at least in a time domain, based on the STxMP.

6. The method of claim 5, wherein the information related to the STxMP comprises information indicating whether more than one sounding reference signal (SRS) resource set having a usage of codebook or nonCodebook is supported.

7. The method of claim 5, wherein the information related to the STxMP comprises at least one of information on support of transmission of PUSCHs overlapping in the time domain, information on a maximum number of PUSCHs transmitted per slot and CORESET pool index, or information on a maximum number of PUSCHs transmitted for all CORESET pool indexes per slot.

8. The method of claim 5, wherein the information related to the STxMP comprises at least one of information on whether respective SRS resource sets support different numbers of SRS resources in case that the STxMP is supported, or information on the number of SRS resources maximally included in each SRS resource set.

9. A terminal of a wireless communication system, the terminal comprising:

a transceiver; and
a controller,
wherein the controller is configured to perform control to:

transmit, to a base station, terminal capability information including information related to simultaneous transmission with multi-panel (STxMP);
receive a higher layer signal from the base station;
identify whether the higher layer signal includes a parameter for supporting the STxMP;
in case that the higher layer signal includes the parameter for supporting the STxMP, identify support of the STxMP based on multi-downlink control information (DCI);
receive, from the base station, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1; and
perform a first PUSCH transmission and a second PUSCH transmission overlapping at least in a time domain, based on the STxMP.

**10.** The terminal of claim 9, wherein the information related to the STxMP comprises information indicating whether more than one sounding reference signal (SRS) resource set having a usage of codebook or nonCodebook is supported.

**11.** The terminal of claim 9, wherein the information related to the STxMP comprises at least one of information on support of transmission of PUSCHs overlapping in the time domain, information on a maximum number of PUSCHs transmitted per slot and CORESET pool index, or information on a maximum number of PUSCHs transmitted for all CORESET pool indexes per slot.

**12.** The terminal of claim 9, wherein the information related to the STxMP comprises at least one of information on whether respective SRS resource sets support different numbers of SRS resources in case that the STxMP is supported, or information on the number of SRS resources maximally included in each SRS resource set.

**13.** A base station in a wireless communication system, the base station comprising:

a transceiver; and
a controller,
wherein the controller is configured to perform control to:

receive, from a terminal, terminal capability information including information related to simultaneous transmission with multi-panel (STxMP);
generate a higher layer signal including a parameter for supporting the STxMP, based on the terminal capability information;
transmit the higher layer signal to the UE;
determine support of the STxMP based on multi-downlink control information (DCI); transmit, to the terminal, first downlink control information (DCI) for scheduling a first physical uplink shared channel (PUSCH) from a first control resource set (CORESET) having a CORESET pool index configured to be 0, and second DCI for scheduling a second PUSCH from a second CORESET having a CORESET pool index configured to be 1; and
perform a first PUSCH transmission and a second PUSCH reception overlapping at least in a time domain, based on the STxMP.

**14.** The base station of claim 13, wherein the information related to the STxMP comprises information indicating whether more than one sounding reference signal (SRS) resource set having a usage of codebook or nonCodebook is supported.

**15.** The base station of claim 13, wherein the information related to the STxMP comprises:

at least one of information on support of transmission of PUSCHs overlapping in the time domain, information on a maximum number of PUSCHs transmitted per slot and CORESET pool index, or information on a maximum number of PUSCHs transmitted for all CORESET pool indexes per slot; and
at least one of information on whether respective SRS resource sets support different numbers of SRS resources in case that the STxMP is supported, or information on the number of SRS resources maximally included in each SRS resource set.

FIG. 1

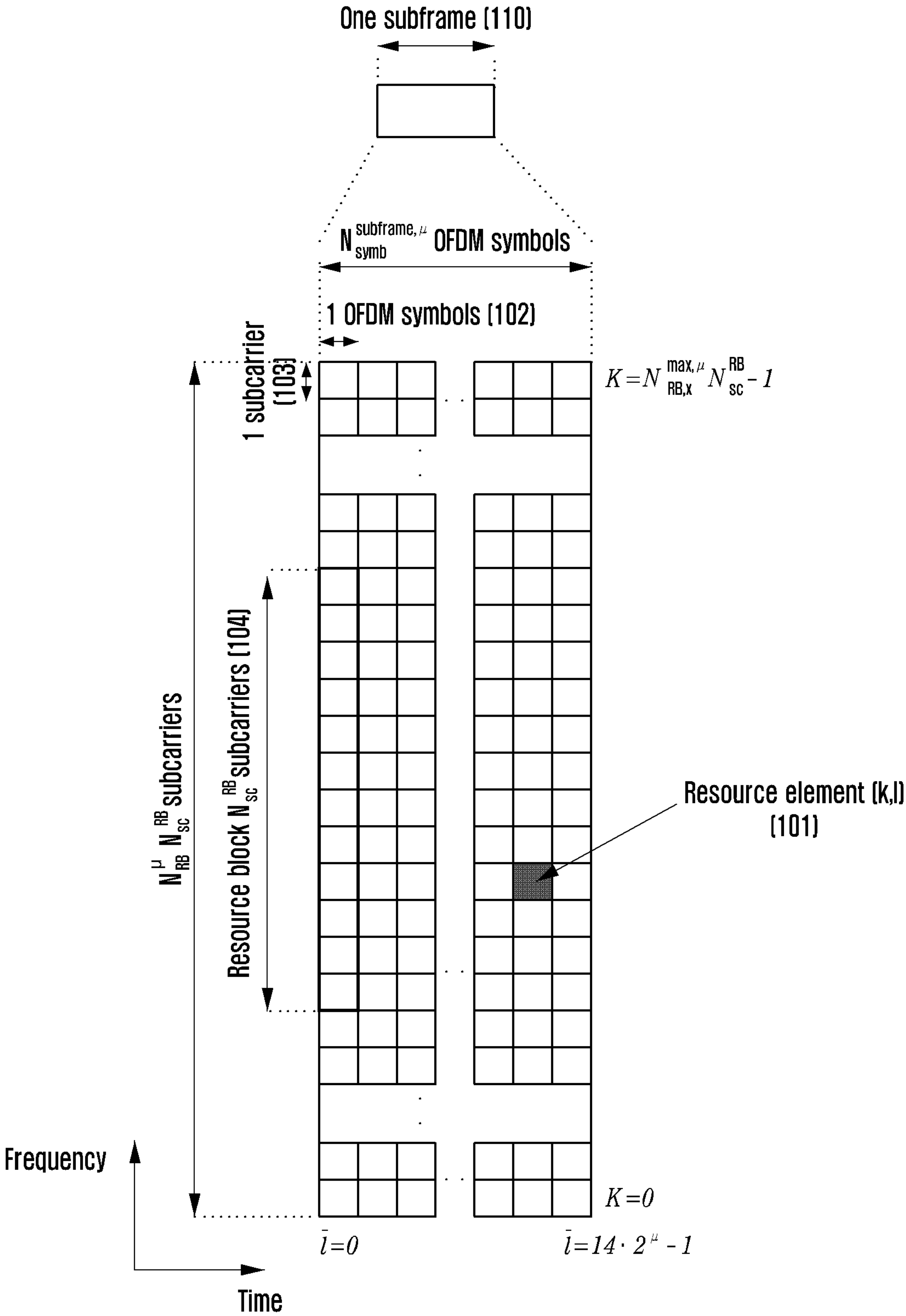
One subframe (110)
$N_{symb}^{subframe,\mu}$ OFDM symbols
1 OFDM symbols (102)
1 subcarrier (103)
$K=N_{RB,x}^{max,\mu}N_{sc}^{RB}-1$
$N_{RB}^{\mu}N_{sc}^{RB}$ subcarriers
Resource block $N_{sc}^{RB}$ subcarriers (104)
Resource element (k,l) (101)
Frequency
$K=0$
$\bar{l}=0$
$\bar{l}=14\cdot 2^{\mu}-1$
Time

FIG. 2

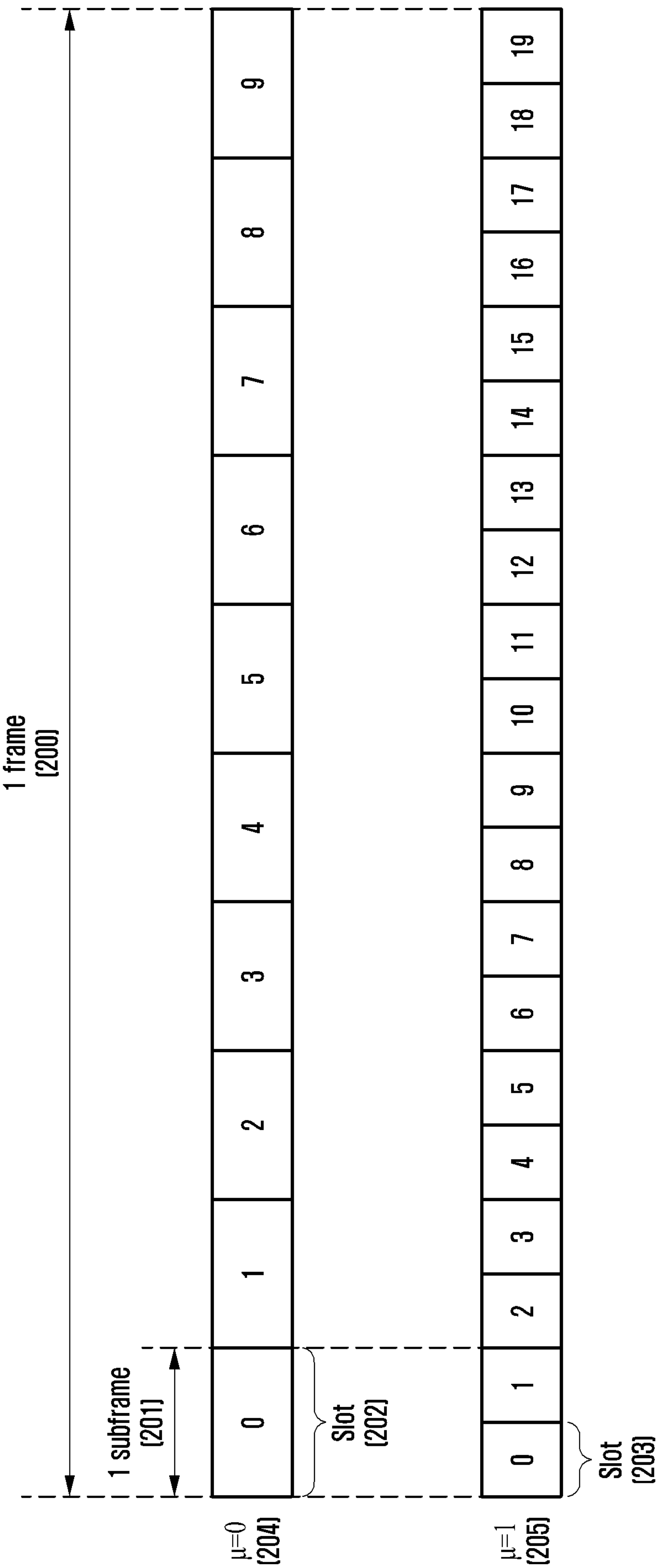
1 frame
(200)
1 subframe
(201)
Slot
(202)
Slot
(203)
μ=0
(204)
μ=1
(205)
0
1
2
3
4
5
6
7
8
9
10
11
12
13
14
15
16
17
18
19

FIG. 3

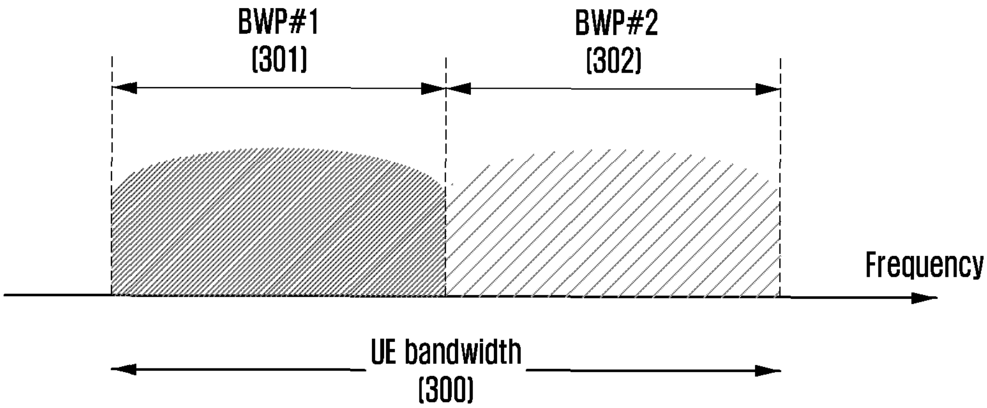

FIG. 4

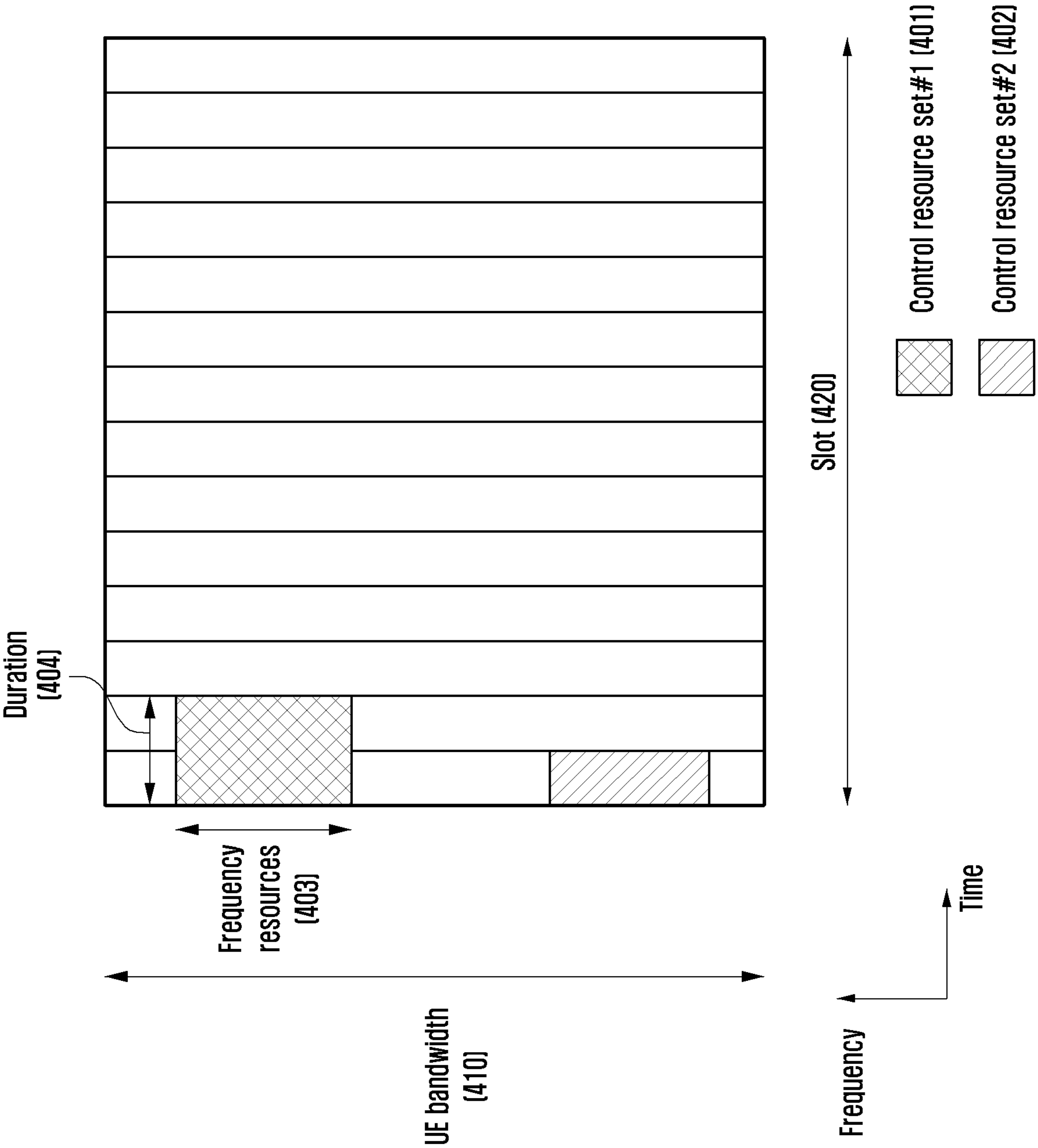
Duration
(404)
Frequency
resources
(403)
UE bandwidth
(410)
Slot (420)
Control resource set#1 (401)
Control resource set#2 (402)
Time
Frequency

FIG. 5A

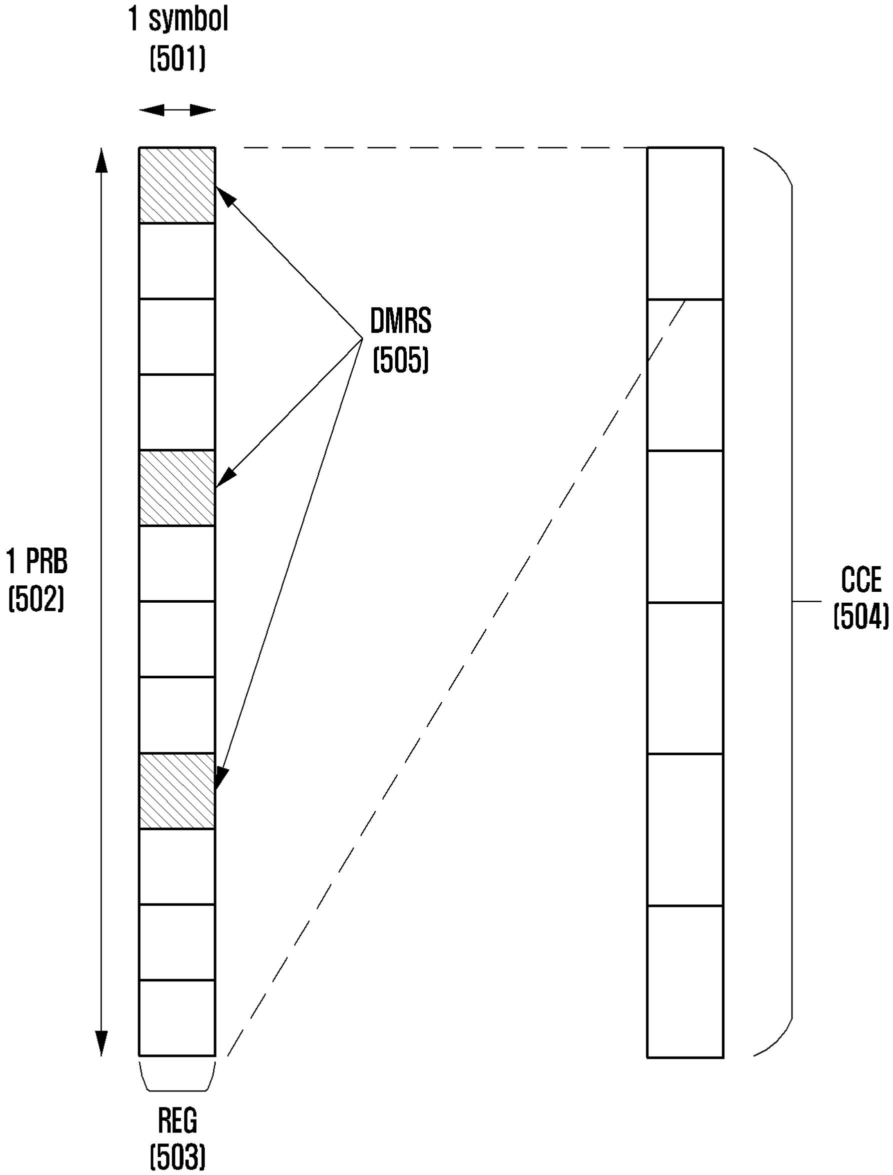

FIG. 5B

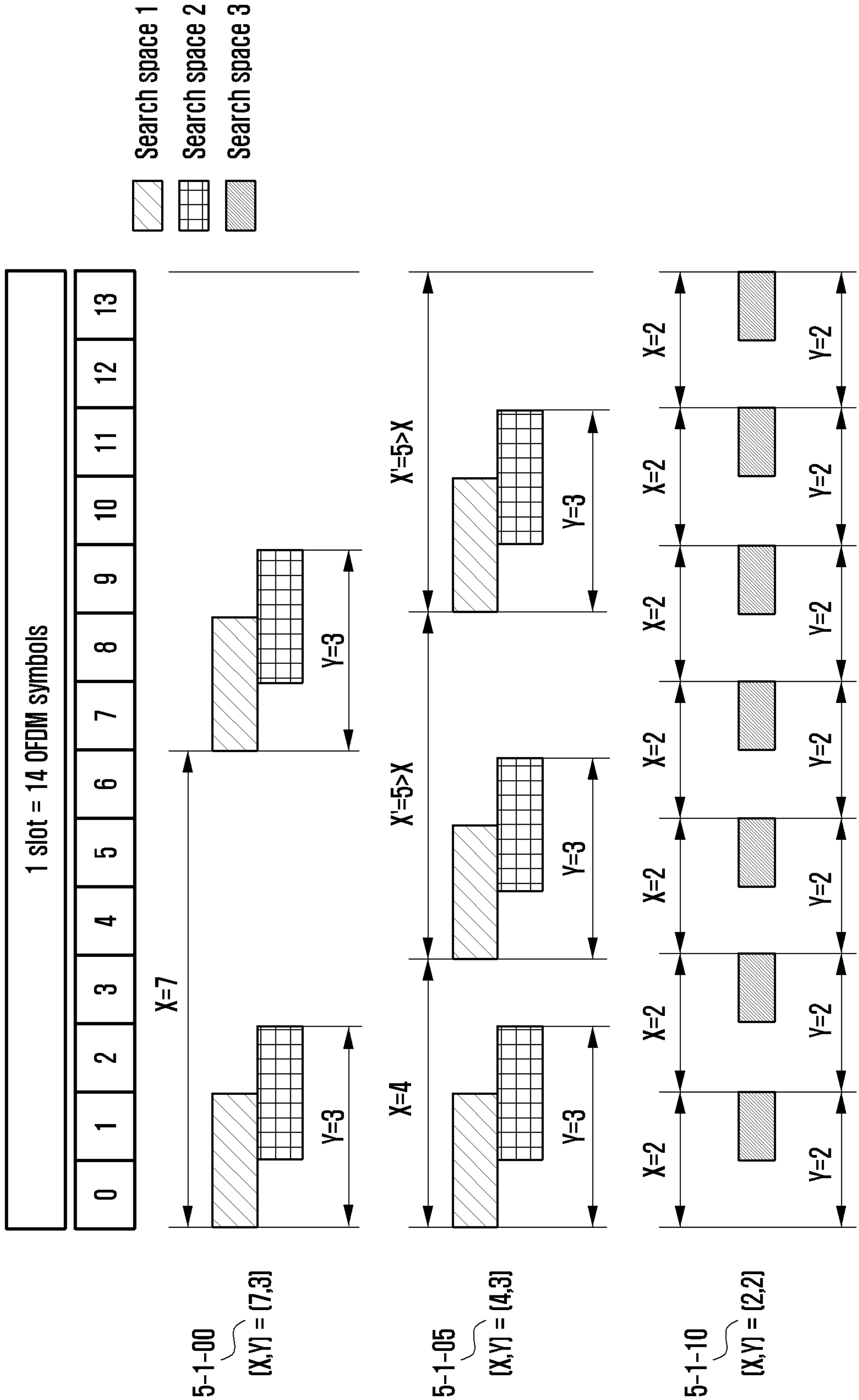
1 slot = 14 OFDM symbols
0
1
2
3
4
5
6
7
8
9
10
11
12
13
Search space 1
Search space 2
Search space 3
X=7
Y=3
Y=3
5-1-00
(X,Y) = (7,3)
X=4
X'=5>X
X'=5>X
Y=3
Y=3
Y=3
5-1-05
(X,Y) = (4,3)
X=2
Y=2
5-1-10
(X,Y) = (2,2)

FIG. 6

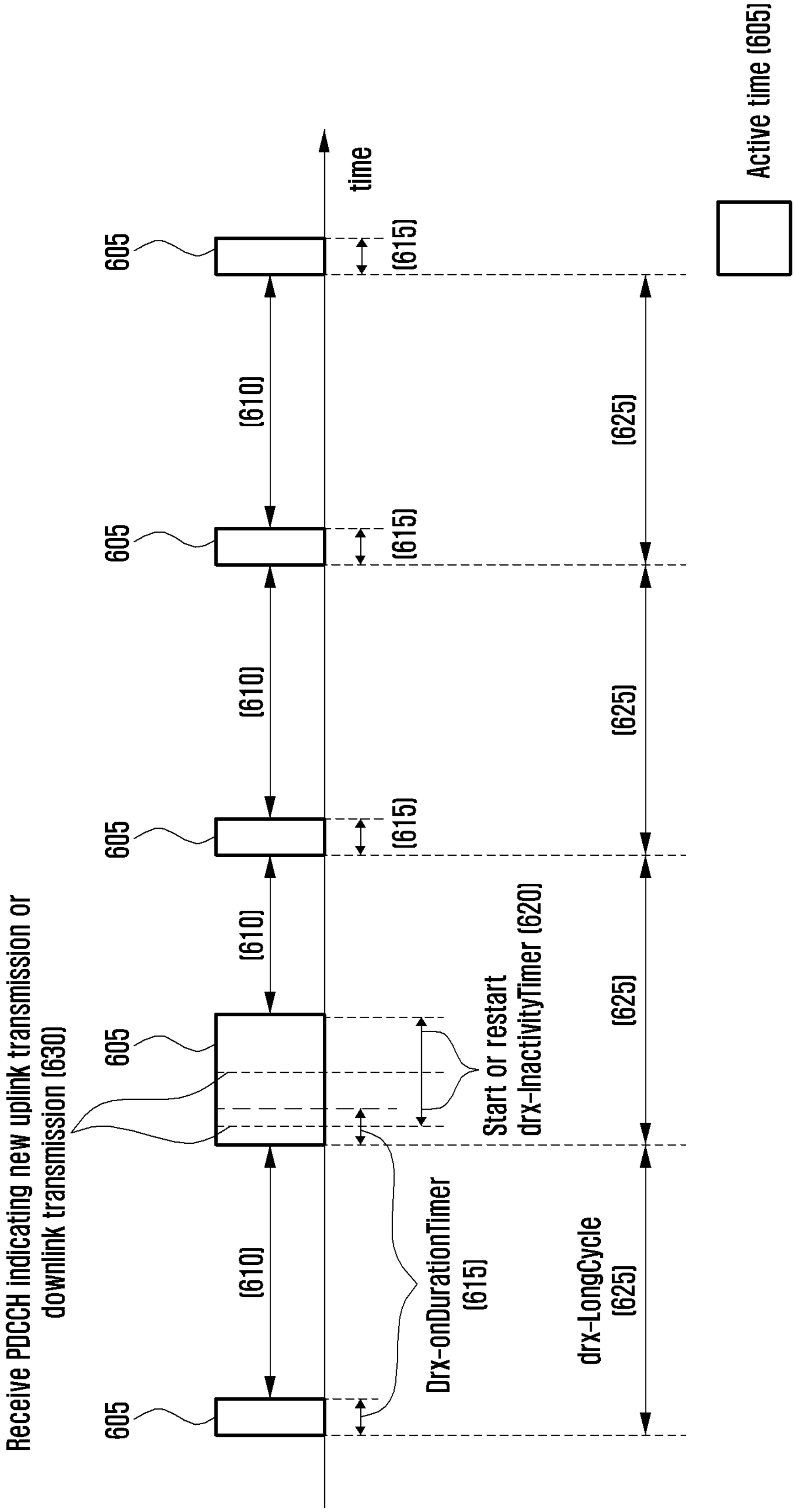
time
605
(610)
(615)
(625)
Receive PDCCH indicating new uplink transmission or downlink transmission (630)
Start or restart drx-InactivityTimer (620)
Drx-onDurationTimer (615)
drx-LongCycle (625)
Active time (605)

FIG. 7

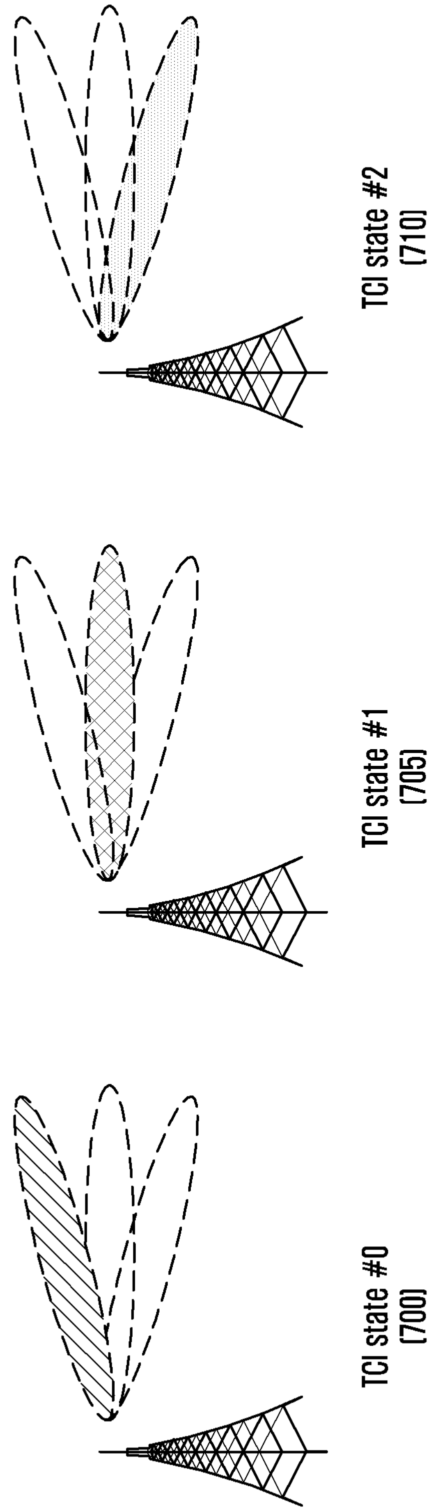

FIG. 8

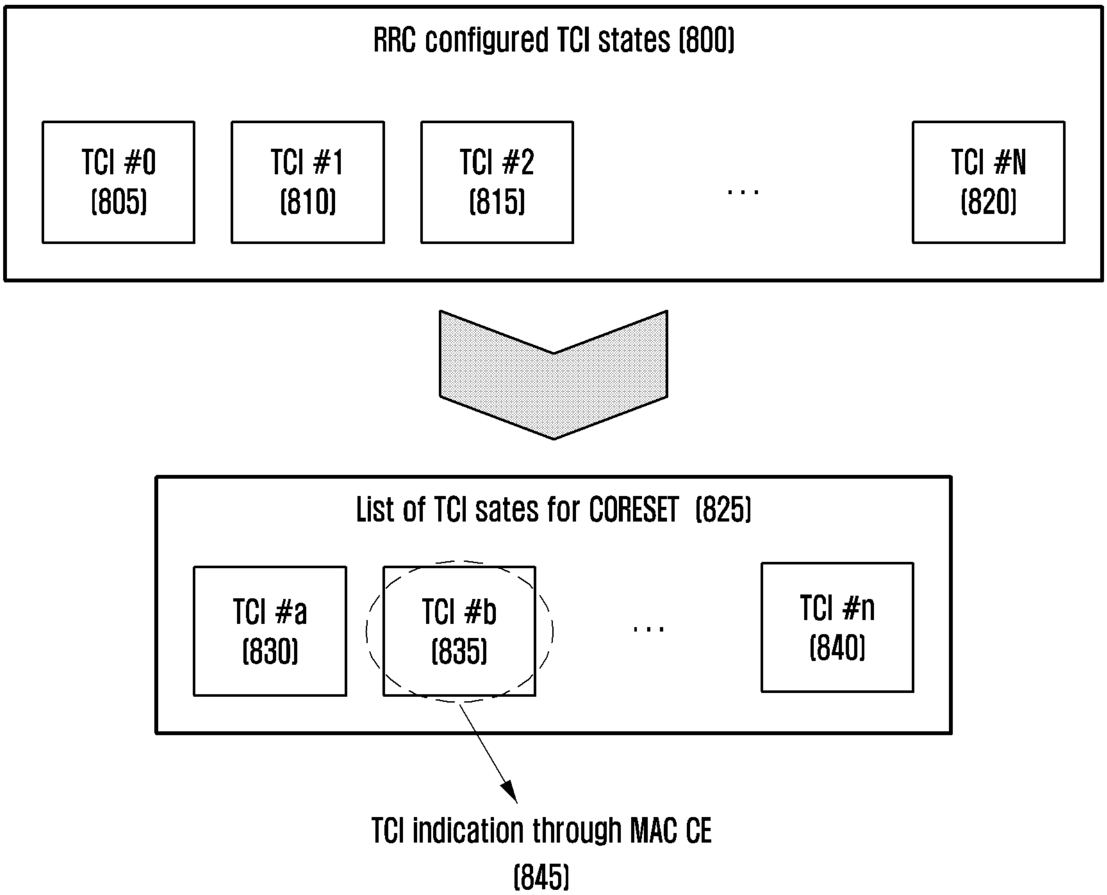
RRC configured TCI states (800)
TCI #0 (805)
TCI #1 (810)
TCI #2 (815)
...
TCI #N (820)
List of TCI sates for CORESET (825)
TCI #a (830)
TCI #b (835)
...
TCI #n (840)
TCI indication through MAC CE (845)

FIG. 9

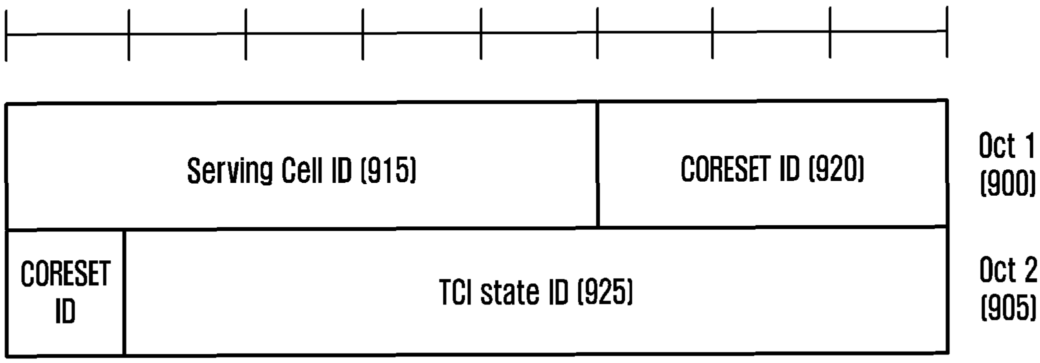
Serving Cell ID (915)
CORESET ID (920)
Oct 1 (900)
CORESET ID
TCI state ID (925)
Oct 2 (905)

FIG. 10

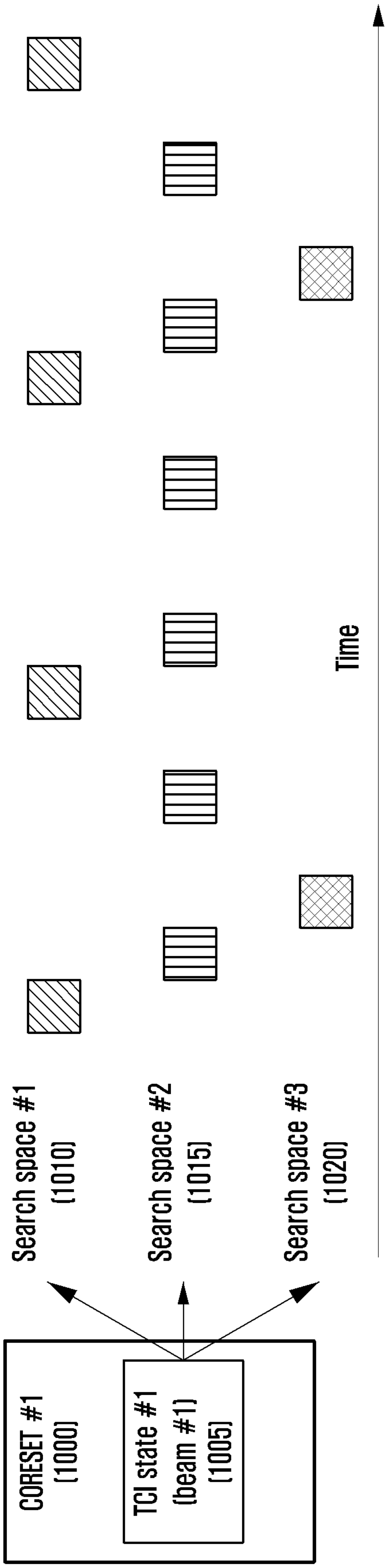
CORESET #1
(1000)
TCI state #1
(beam #1)
(1005)
Search space #1
(1010)
Search space #2
(1015)
Search space #3
(1020)
Time

FIG. 11

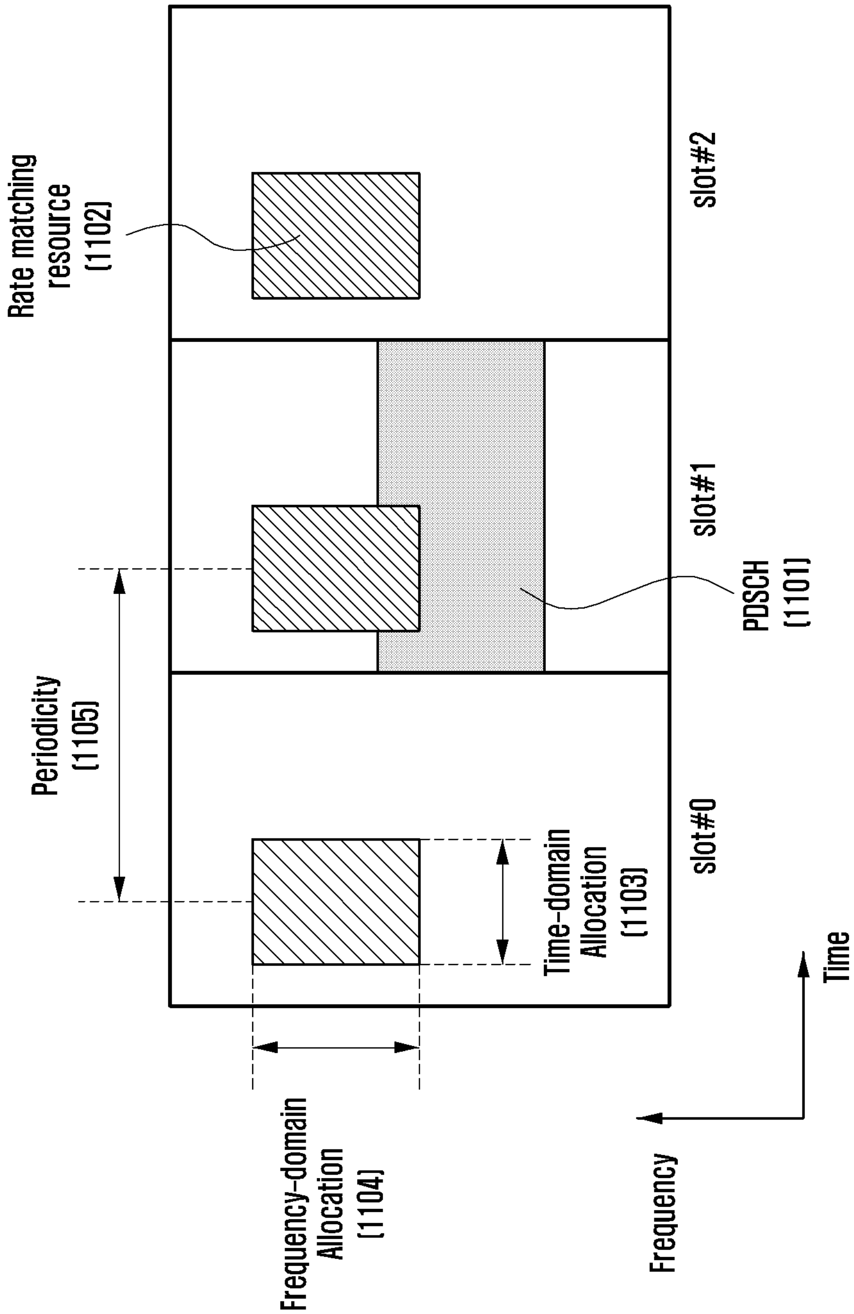
Rate matching resource (1102)
Periodicity (1105)
slot#2
slot#1
slot#0
PDSCH (1101)
Time-domain Allocation (1103)
Frequency-domain Allocation (1104)
Frequency
Time

FIG. 12

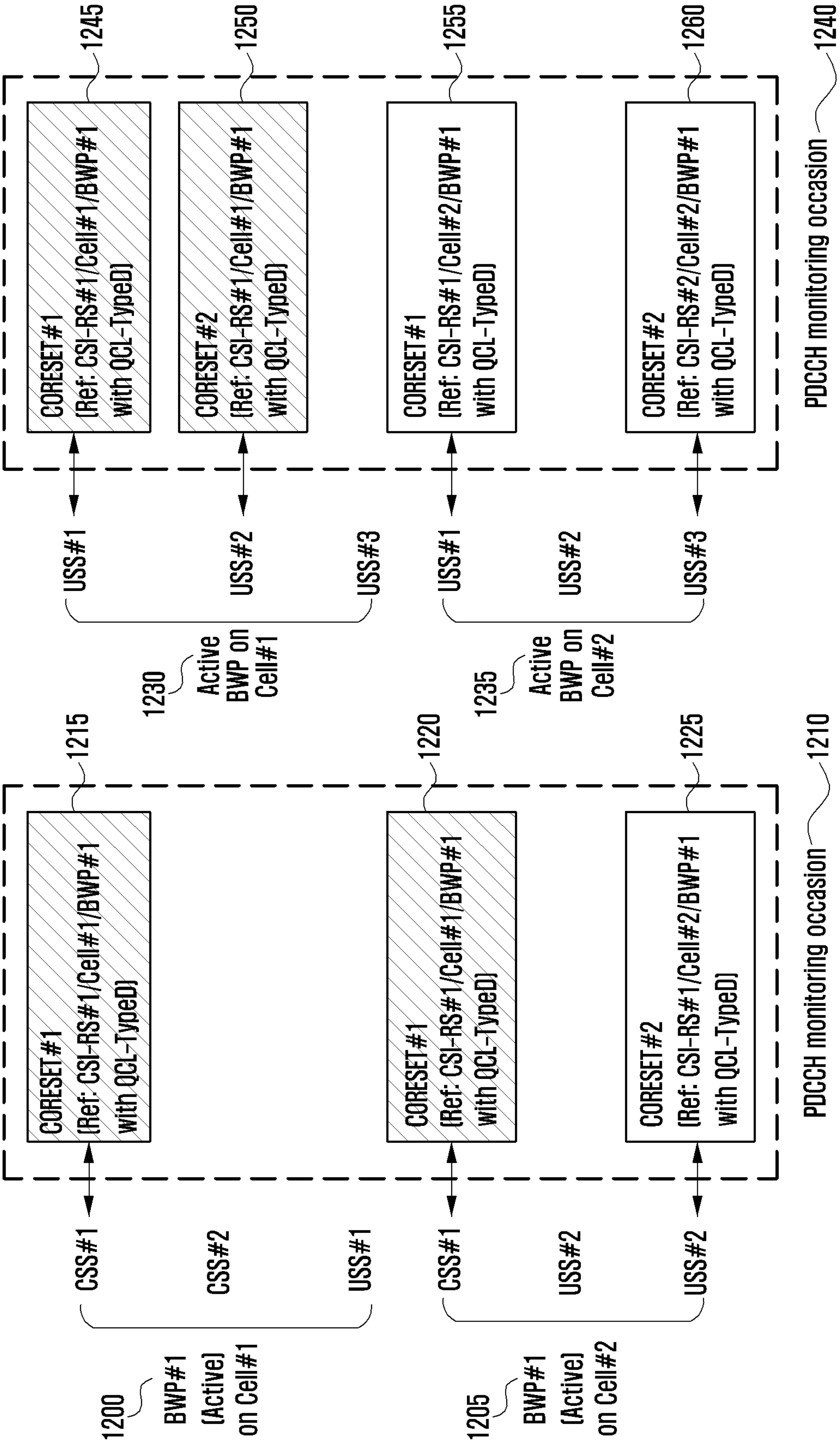
1200
BWP#1 (Active) on Cell#1
CSS#1
CSS#2
USS#1
1205
BWP#1 (Active) on Cell#2
CSS#1
USS#2
USS#2
CORESET#1 (Ref: CSI-RS#1/Cell#1/BWP#1 with QCL-TypeD)
1215
CORESET#1 (Ref: CSI-RS#1/Cell#1/BWP#1 with QCL-TypeD)
1220
CORESET#2 (Ref: CSI-RS#1/Cell#2/BWP#1 with QCL-TypeD)
1225
PDCCH monitoring occasion
1210
1230
Active BWP on Cell#1
USS#1
USS#2
USS#3
1235
Active BWP on Cell#2
USS#1
USS#2
USS#3
CORESET#1 (Ref: CSI-RS#1/Cell#1/BWP#1 with QCL-TypeD)
1245
CORESET#2 (Ref: CSI-RS#1/Cell#1/BWP#1 with QCL-TypeD)
1250
CORESET#1 (Ref: CSI-RS#1/Cell#2/BWP#1 with QCL-TypeD)
1255
CORESET#2 (Ref: CSI-RS#2/Cell#2/BWP#1 with QCL-TypeD)
1260
PDCCH monitoring occasion
1240

FIG. 13

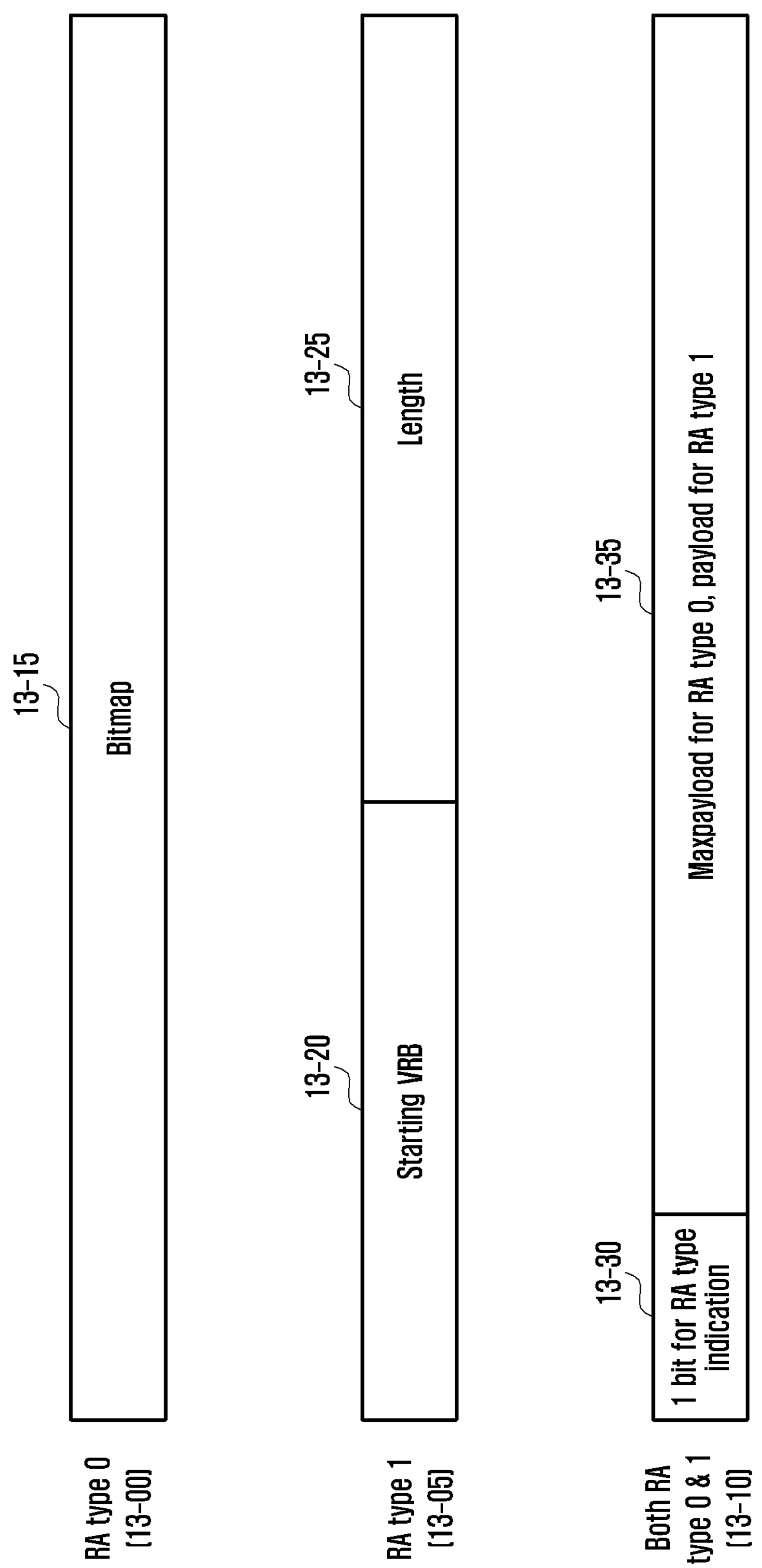
RA type 0
(13-00)
13-15
Bitmap
RA type 1
(13-05)
13-20
Starting VRB
13-25
Length
Both RA
type 0 & 1
(13-10)
13-30
1 bit for RA type
indication
13-35
Maxpayload for RA type 0, payload for RA type 1

FIG. 14

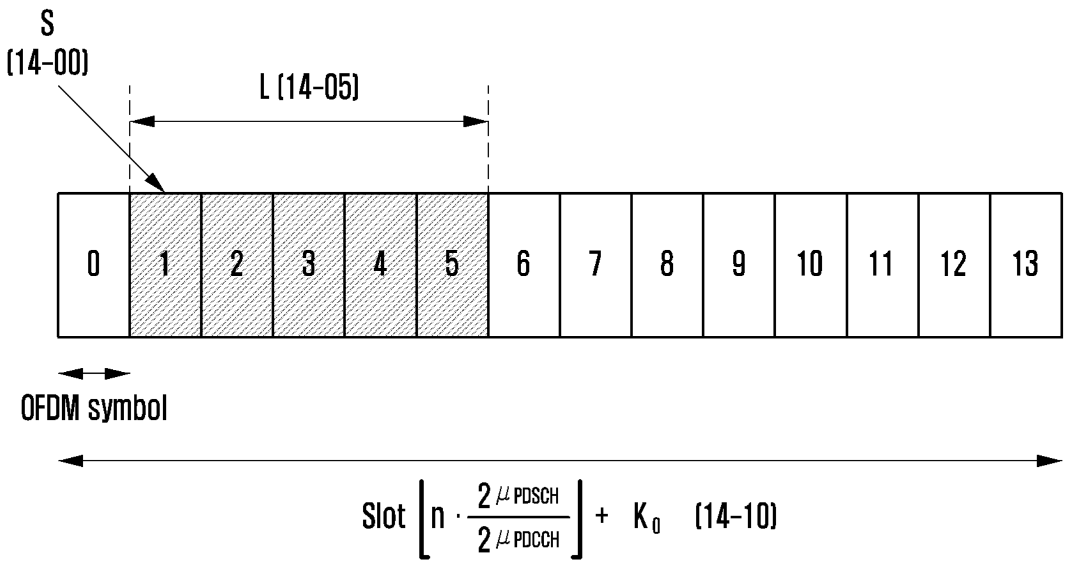
S
(14-00)
L (14-05)
0
1
2
3
4
5
6
7
8
9
10
11
12
13
OFDM symbol
Slot $\left\lfloor n \cdot \frac{2^{\mu_{PDSCH}}}{2^{\mu_{PDCCH}}} \right\rfloor + K_0$ (14-10)

FIG. 15

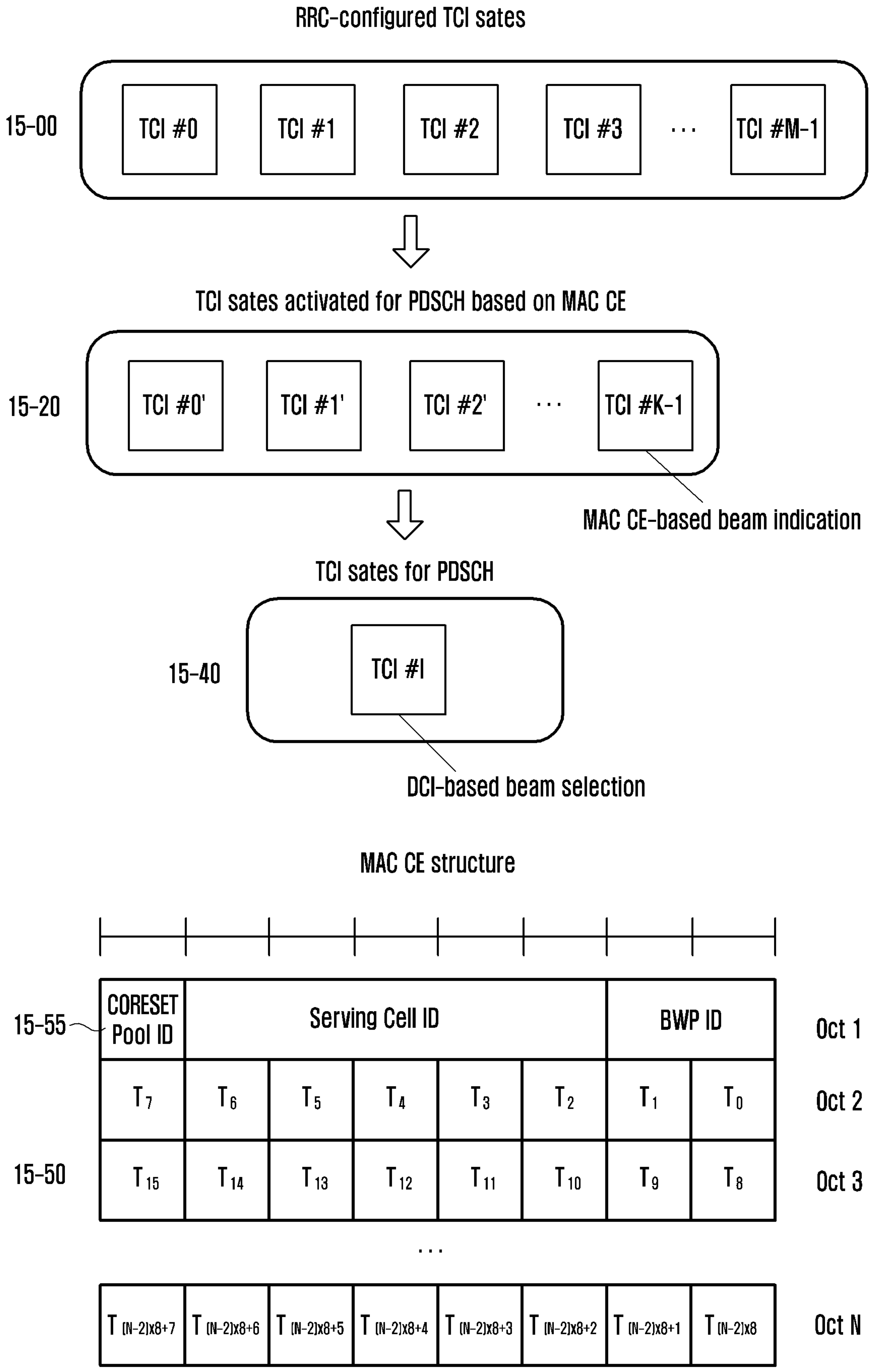
RRC-configured TCI sates
15-00
TCI #0
TCI #1
TCI #2
TCI #3
...
TCI #M-1
TCI sates activated for PDSCH based on MAC CE
15-20
TCI #0'
TCI #1'
TCI #2'
...
TCI #K-1
MAC CE-based beam indication
TCI sates for PDSCH
15-40
TCI #I
DCI-based beam selection
MAC CE structure
15-55
CORESET Pool ID
Serving Cell ID
BWP ID
Oct 1
T7 T6 T5 T4 T3 T2 T1 T0
Oct 2
15-50
T15 T14 T13 T12 T11 T10 T9 T8
Oct 3
...
T (N-2)x8+7 T (N-2)x8+6 T (N-2)x8+5 T (N-2)x8+4 T (N-2)x8+3 T (N-2)x8+2 T (N-2)x8+1 T (N-2)x8
Oct N

FIG. 16

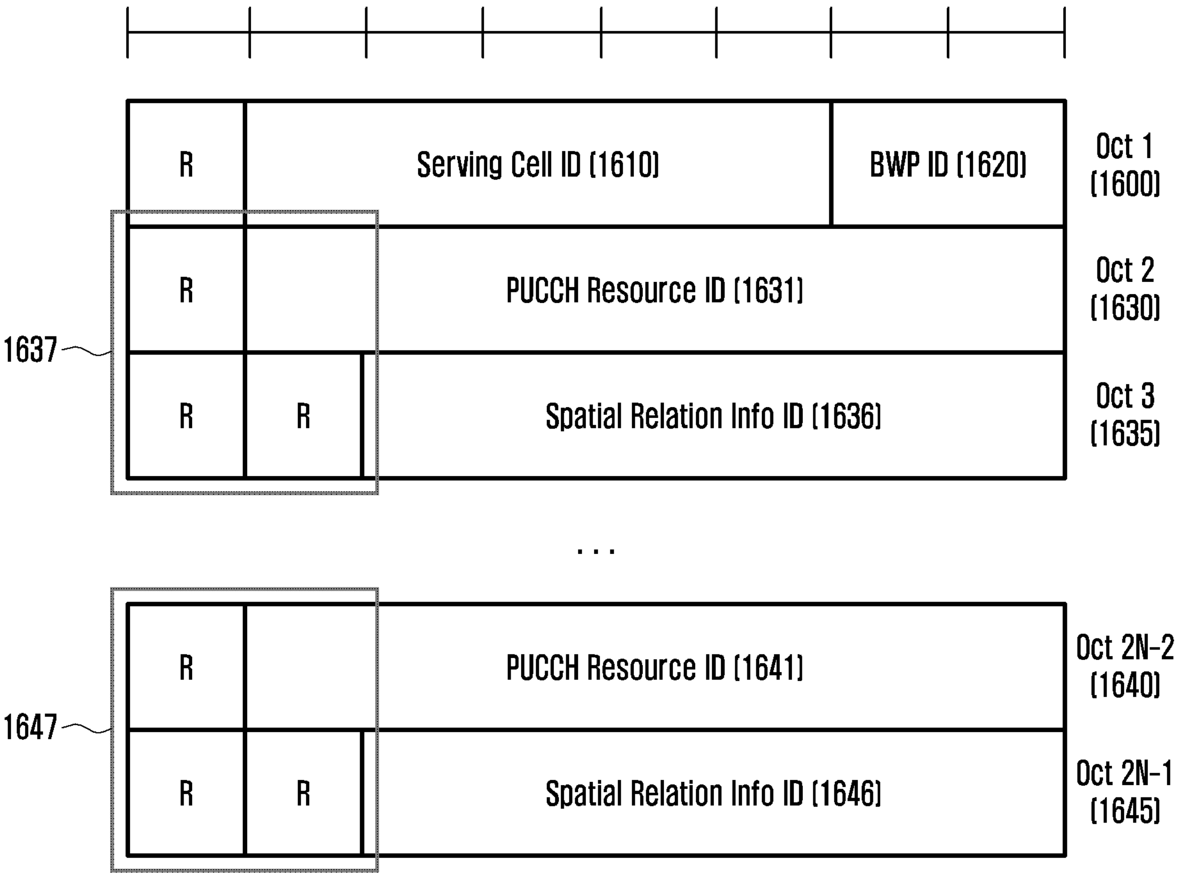
R
Serving Cell ID (1610)
BWP ID (1620)
Oct 1 (1600)
R
PUCCH Resource ID (1631)
Oct 2 (1630)
1637
R
R
Spatial Relation Info ID (1636)
Oct 3 (1635)
...
R
PUCCH Resource ID (1641)
Oct 2N-2 (1640)
1647
R
R
Spatial Relation Info ID (1646)
Oct 2N-1 (1645)

FIG. 17

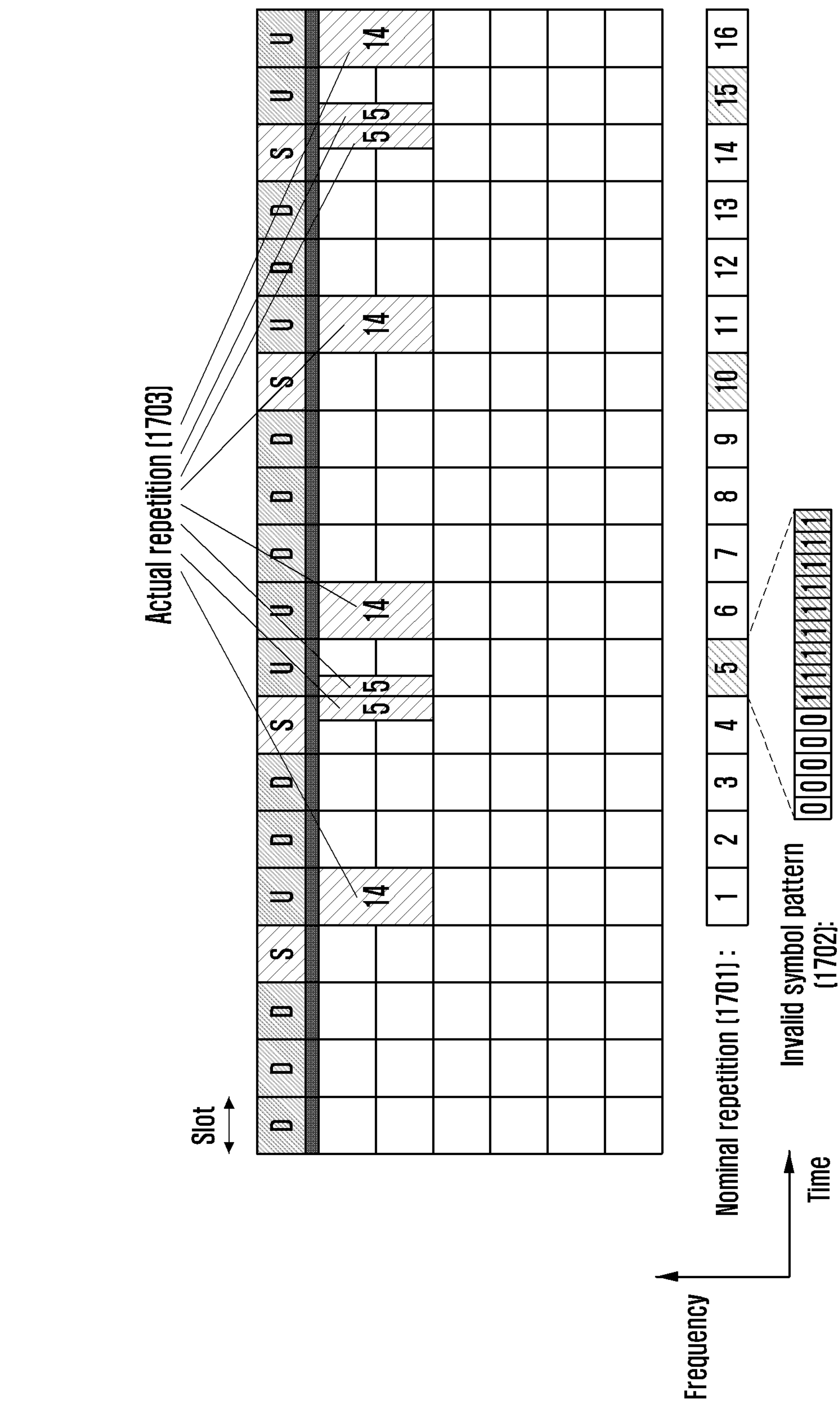
Actual repetition (1703)
Slot
D D D S U D D S U U D D D S U D D S U U
14
5 5
14
14
5 5
14
Nominal repetition (1701) :
1 2 3 4 5 6 7 8 9 10 11 12 13 14 15 16
Invalid symbol pattern (1702):
0 0 0 0 0 1 1 1 1 1 1 1 1 1
Time
Frequency

FIG. 18

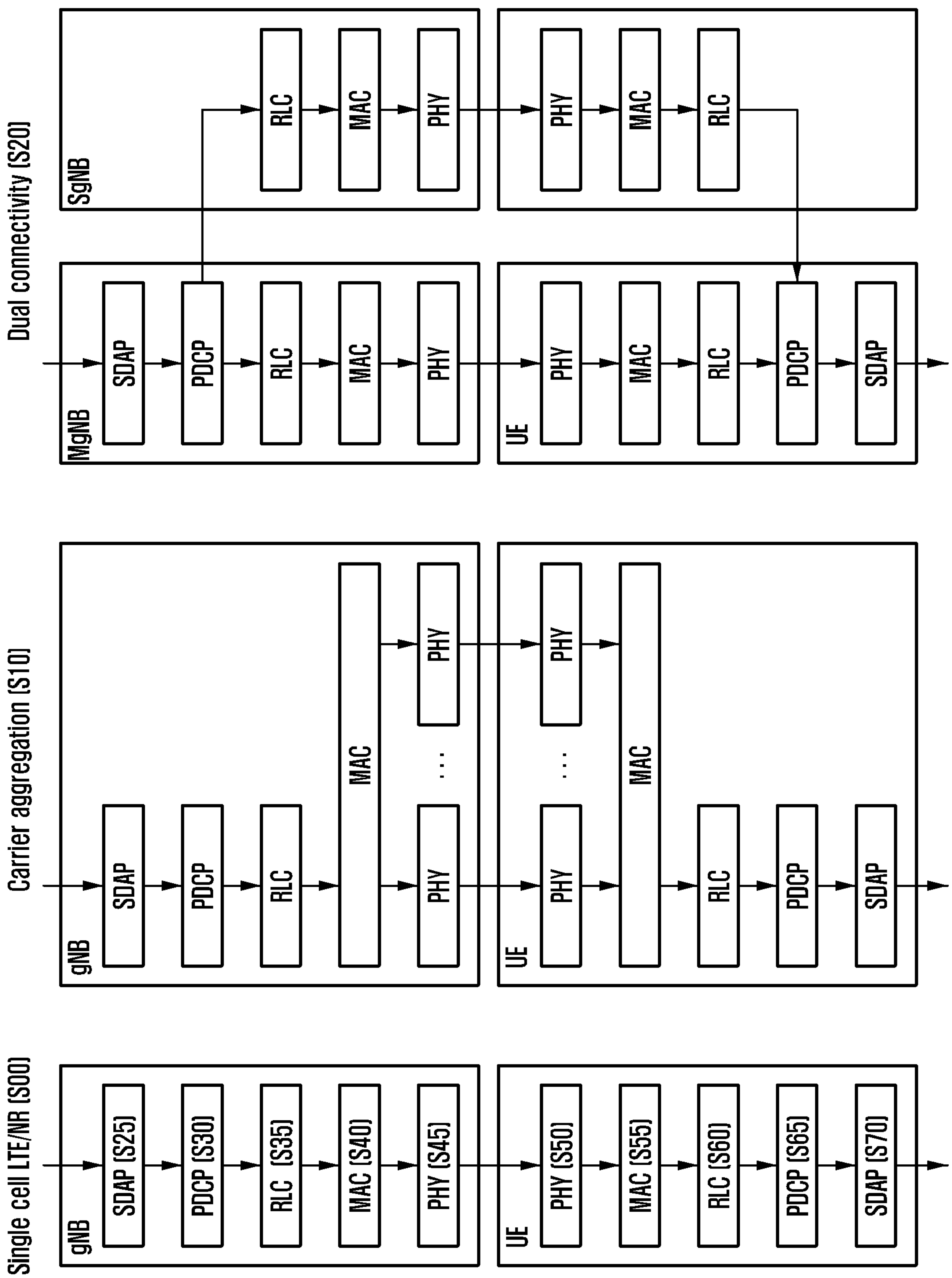
Single cell LTE/NR (S00)
gNB
SDAP (S25)
PDCP (S30)
RLC (S35)
MAC (S40)
PHY (S45)
UE
PHY (S50)
MAC (S55)
RLC (S60)
PDCP (S65)
SDAP (S70)
Carrier aggregation (S10)
gNB
SDAP
PDCP
RLC
MAC
PHY
...
PHY
UE
PHY
...
PHY
MAC
RLC
PDCP
SDAP
Dual connectivity (S20)
MgNB
SDAP
PDCP
RLC
MAC
PHY
SgNB
RLC
MAC
PHY
UE
PHY
MAC
RLC
PDCP
SDAP
PHY
MAC
RLC

FIG. 19

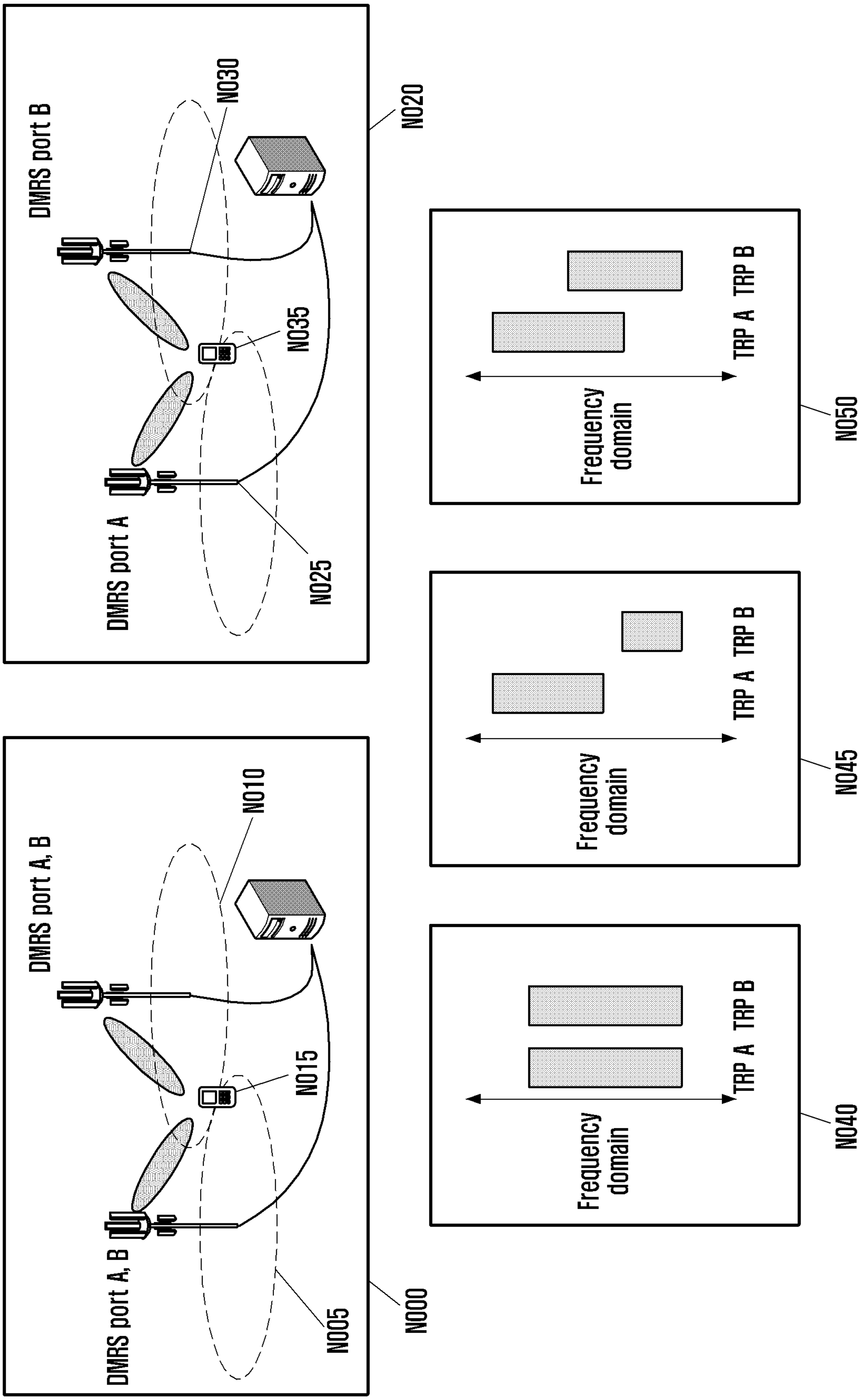
DMRS port A, B
DMRS port A, B
N000
N005
N010
N015
DMRS port A
DMRS port B
N020
N025
N030
N035
Frequency domain
TRP A
TRP B
N040
Frequency domain
TRP A
TRP B
N045
Frequency domain
TRP A
TRP B
N050

FIG. 20

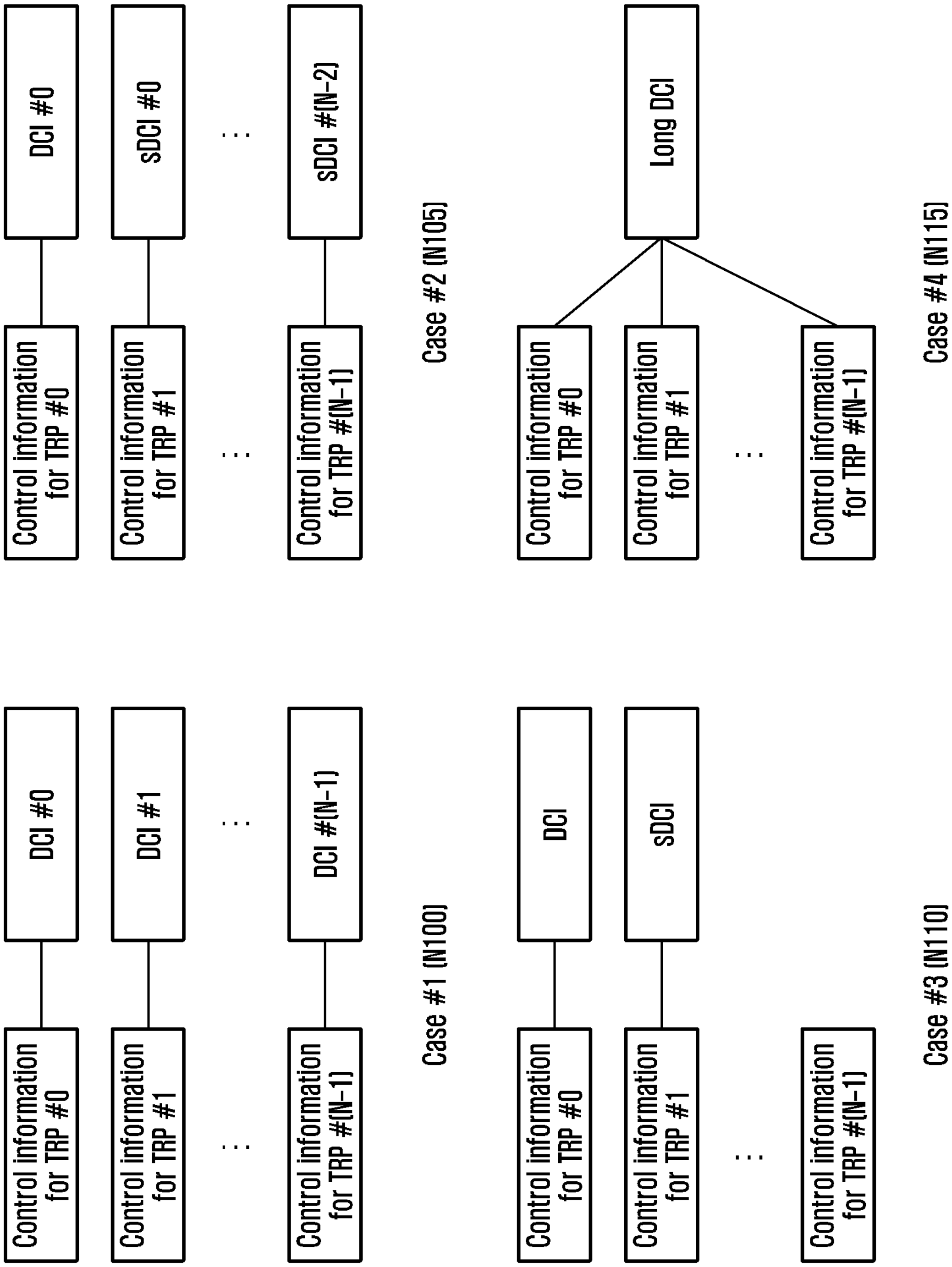
Control information for TRP #0
DCI #0
Control information for TRP #1
DCI #1
Control information for TRP #(N-1)
DCI #(N-1)
Case #1 (N100)
Control information for TRP #0
DCI #0
Control information for TRP #1
sDCI #0
Control information for TRP #(N-1)
sDCI #(N-2)
Case #2 (N105)
Control information for TRP #0
DCI
Control information for TRP #1
sDCI
Control information for TRP #(N-1)
Case #3 (N110)
Control information for TRP #0
Control information for TRP #1
Control information for TRP #(N-1)
Long DCI
Case #4 (N115)

FIG. 21

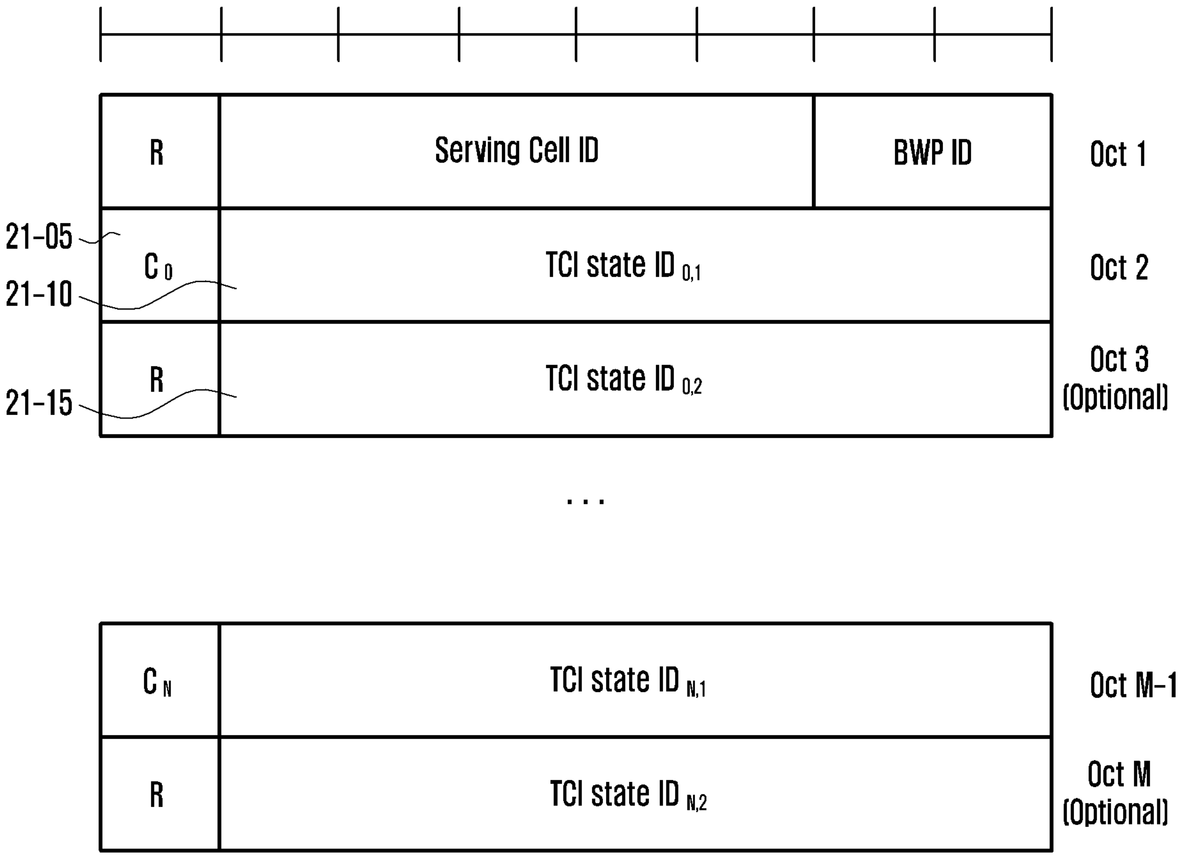
R
Serving Cell ID
BWP ID
Oct 1
21-05
21-10
C 0
TCI state ID 0,1
Oct 2
21-15
R
TCI state ID 0,2
Oct 3
(Optional)
...
C N
TCI state ID N,1
Oct M-1
R
TCI state ID N,2
Oct M
(Optional)

FIG. 22

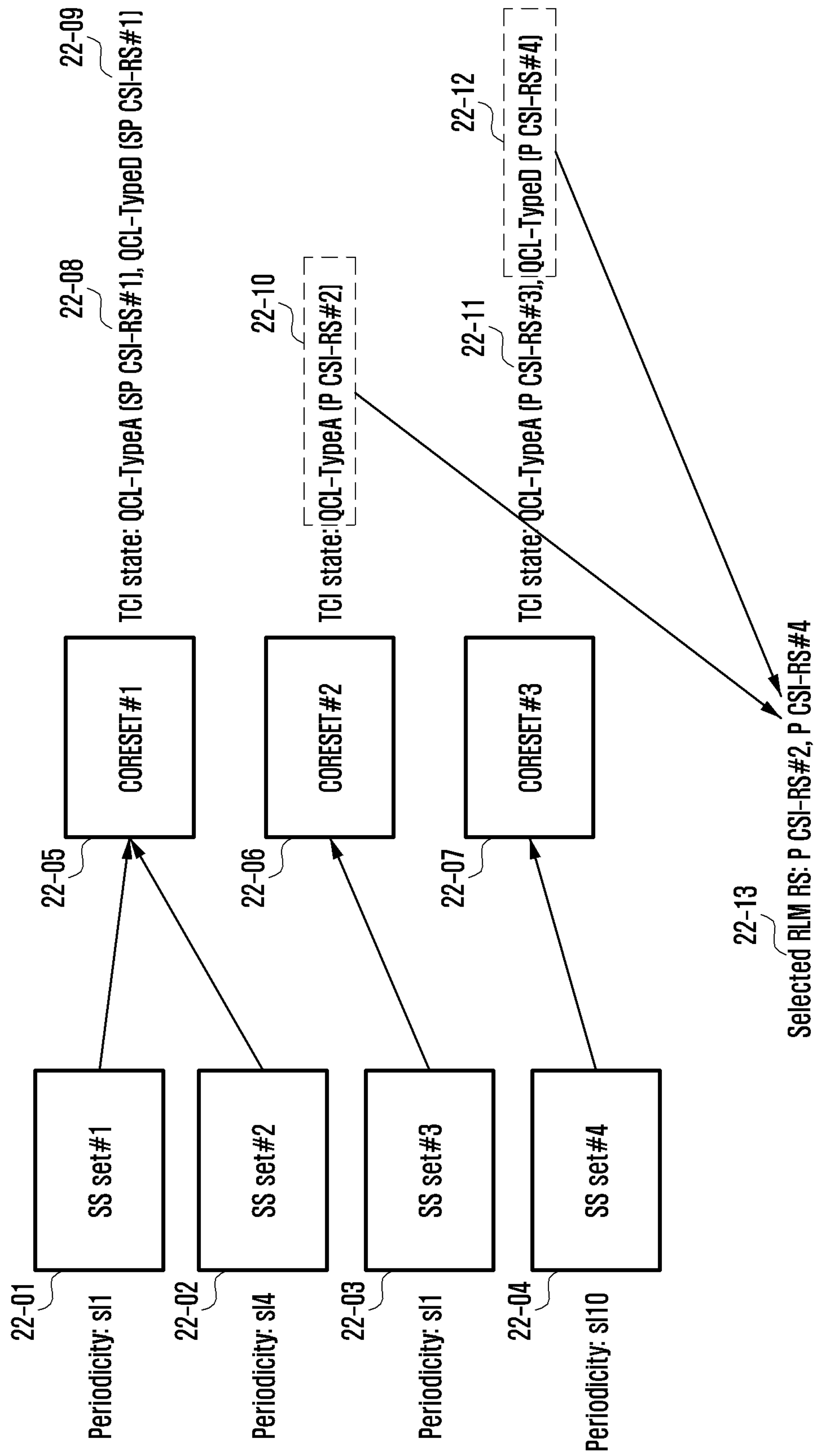

22-01
Periodicity: sl1
SS set#1
22-02
Periodicity: sl4
SS set#2
22-03
Periodicity: sl1
SS set#3
22-04
Periodicity: sl10
SS set#4
22-05
CORESET#1
22-06
CORESET#2
22-07
CORESET#3
22-08
22-09
TCI state: QCL-TypeA (SP CSI-RS#1), QCL-TypeD (SP CSI-RS#1)
22-10
TCI state: QCL-TypeA (P CSI-RS#2)
22-11
22-12
TCI state: QCL-TypeA (P CSI-RS#3), QCL-TypeD (P CSI-RS#4)
22-13
Selected RLM RS: P CSI-RS#2, P CSI-RS#4

FIG. 23

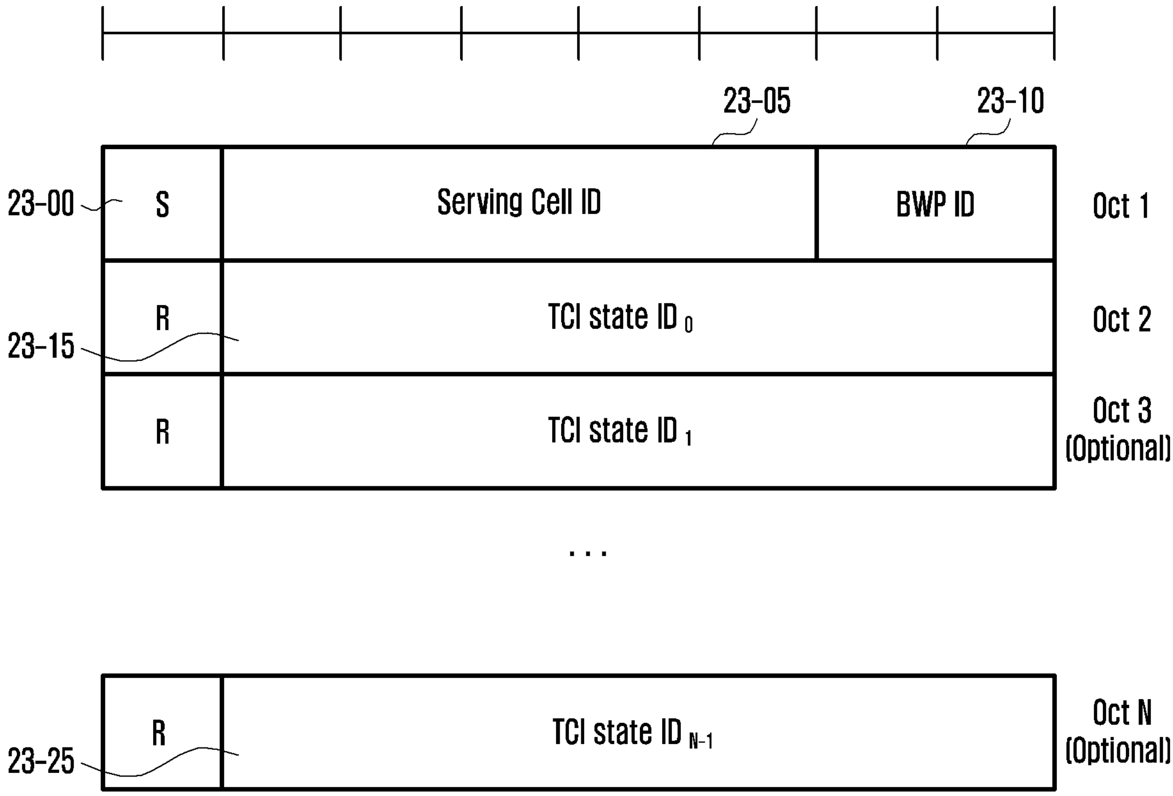
23-05
23-10
23-00
S
Serving Cell ID
BWP ID
Oct 1
R
23-15
TCI state ID 0
Oct 2
R
TCI state ID 1
Oct 3
(Optional)
...
R
23-25
TCI state ID N-1
Oct N
(Optional)

FIG. 24

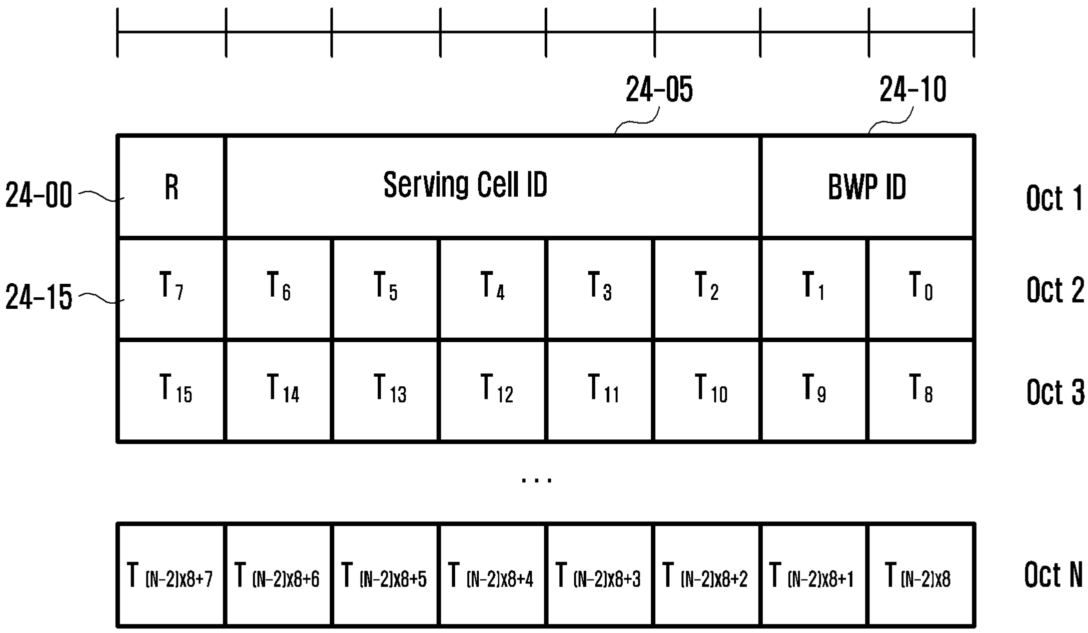
24-05
24-10
24-00
24-15
R
Serving Cell ID
BWP ID
Oct 1
T7 T6 T5 T4 T3 T2 T1 T0
Oct 2
T15 T14 T13 T12 T11 T10 T9 T8
Oct 3
...
T (N-2)x8+7 T (N-2)x8+6 T (N-2)x8+5 T (N-2)x8+4 T (N-2)x8+3 T (N-2)x8+2 T (N-2)x8+1 T (N-2)x8
Oct N

FIG. 25

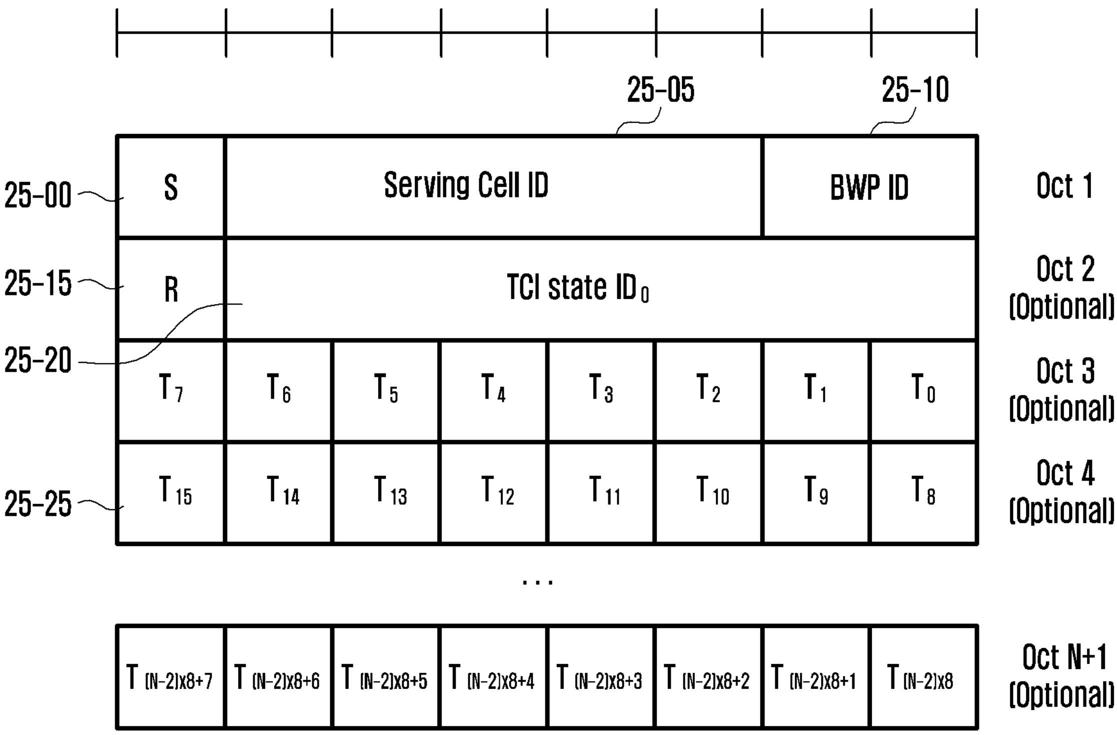
25-05
25-10
25-00
S
Serving Cell ID
BWP ID
Oct 1
25-15
R
TCI state ID0
Oct 2 (Optional)
25-20
T7 T6 T5 T4 T3 T2 T1 T0
Oct 3 (Optional)
25-25
T15 T14 T13 T12 T11 T10 T9 T8
Oct 4 (Optional)
...
T (N-2)x8+7 T (N-2)x8+6 T (N-2)x8+5 T (N-2)x8+4 T (N-2)x8+3 T (N-2)x8+2 T (N-2)x8+1 T (N-2)x8
Oct N+1 (Optional)

FIG. 26

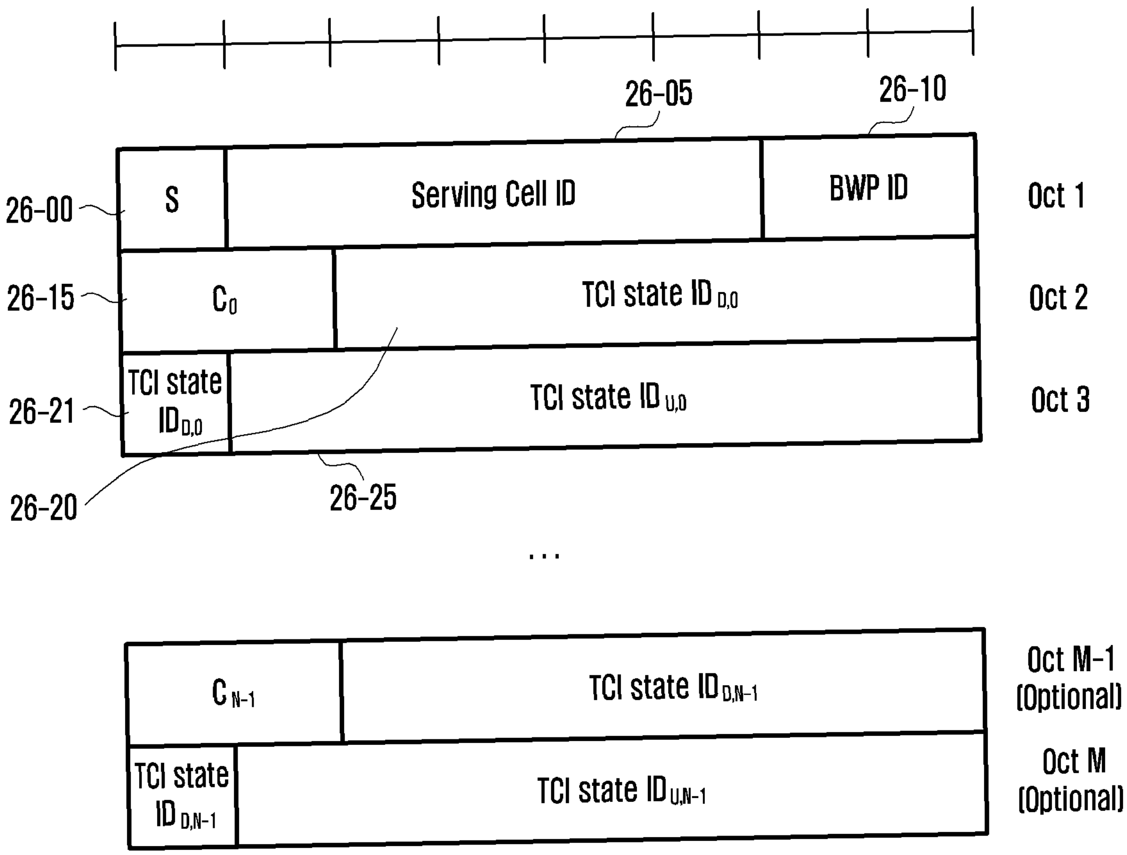
26-05
26-10
26-00
S
Serving Cell ID
BWP ID
Oct 1
26-15
C0
TCI state ID D,0
Oct 2
26-21
TCI state ID D,0
TCI state ID U,0
Oct 3
26-20
26-25
...
C N-1
TCI state ID D,N-1
Oct M-1 (Optional)
TCI state ID D,N-1
TCI state ID U,N-1
Oct M (Optional)

FIG. 27

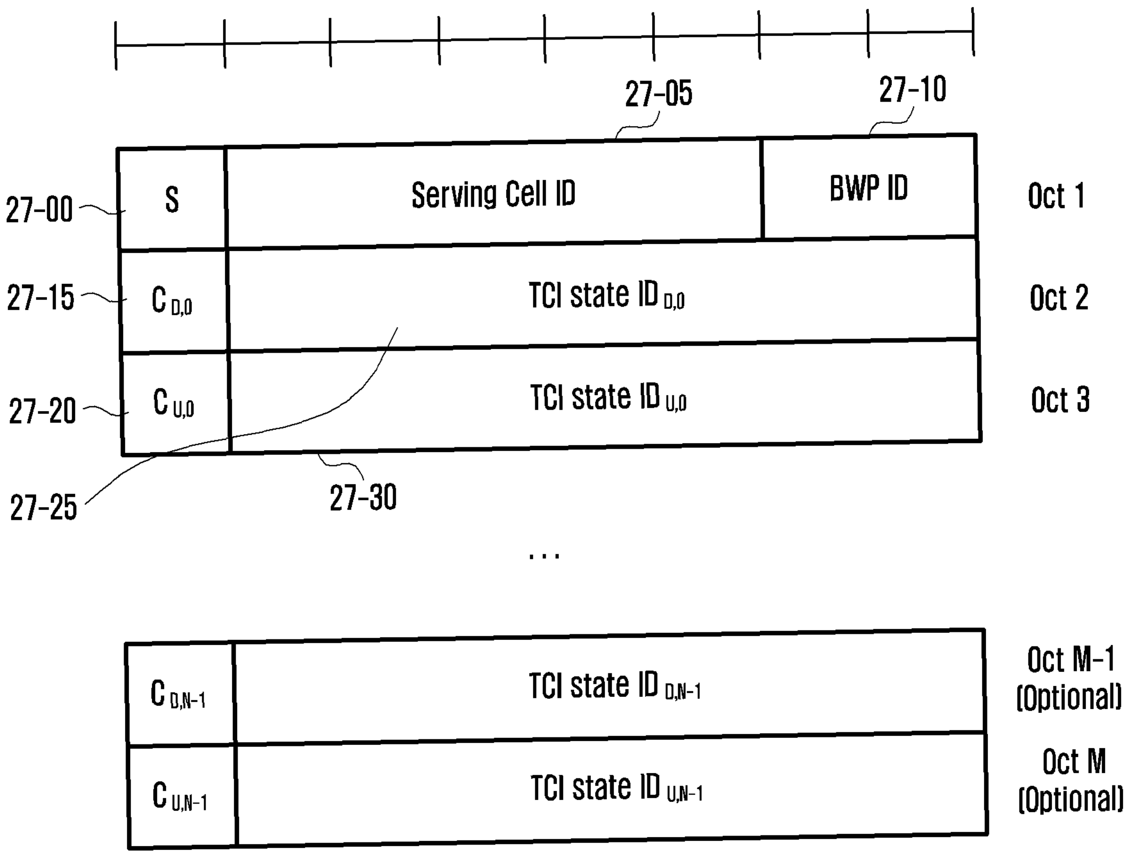
27-05
27-10
27-00
S
Serving Cell ID
BWP ID
Oct 1
27-15
C D,0
TCI state ID D,0
Oct 2
27-20
C U,0
TCI state ID U,0
Oct 3
27-25
27-30
...
C D,N-1
TCI state ID D,N-1
Oct M-1
(Optional)
C U,N-1
TCI state ID U,N-1
Oct M
(Optional)

FIG. 28

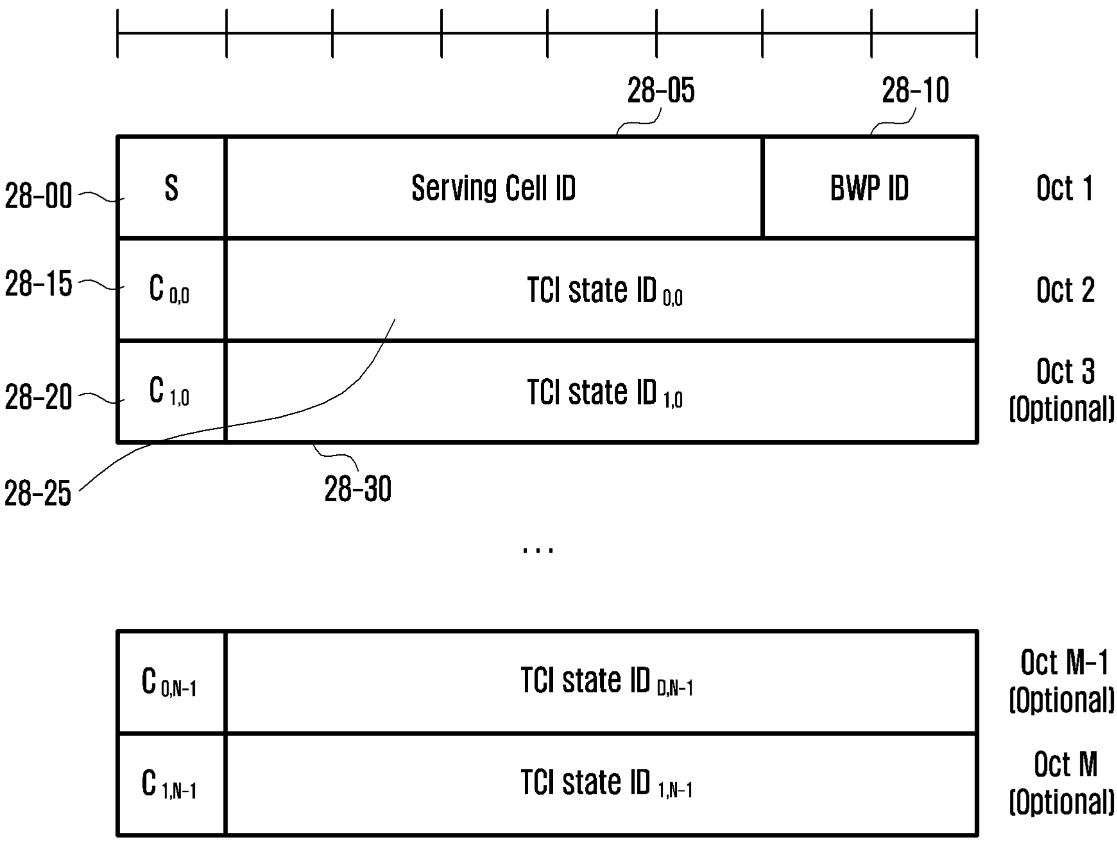
28-05
28-10
28-00
S
Serving Cell ID
BWP ID
Oct 1
28-15
C 0,0
TCI state ID 0,0
Oct 2
28-20
C 1,0
TCI state ID 1,0
Oct 3
(Optional)
28-25
28-30
...
C 0,N-1
TCI state ID 0,N-1
Oct M-1
(Optional)
C 1,N-1
TCI state ID 1,N-1
Oct M
(Optional)

FIG. 29

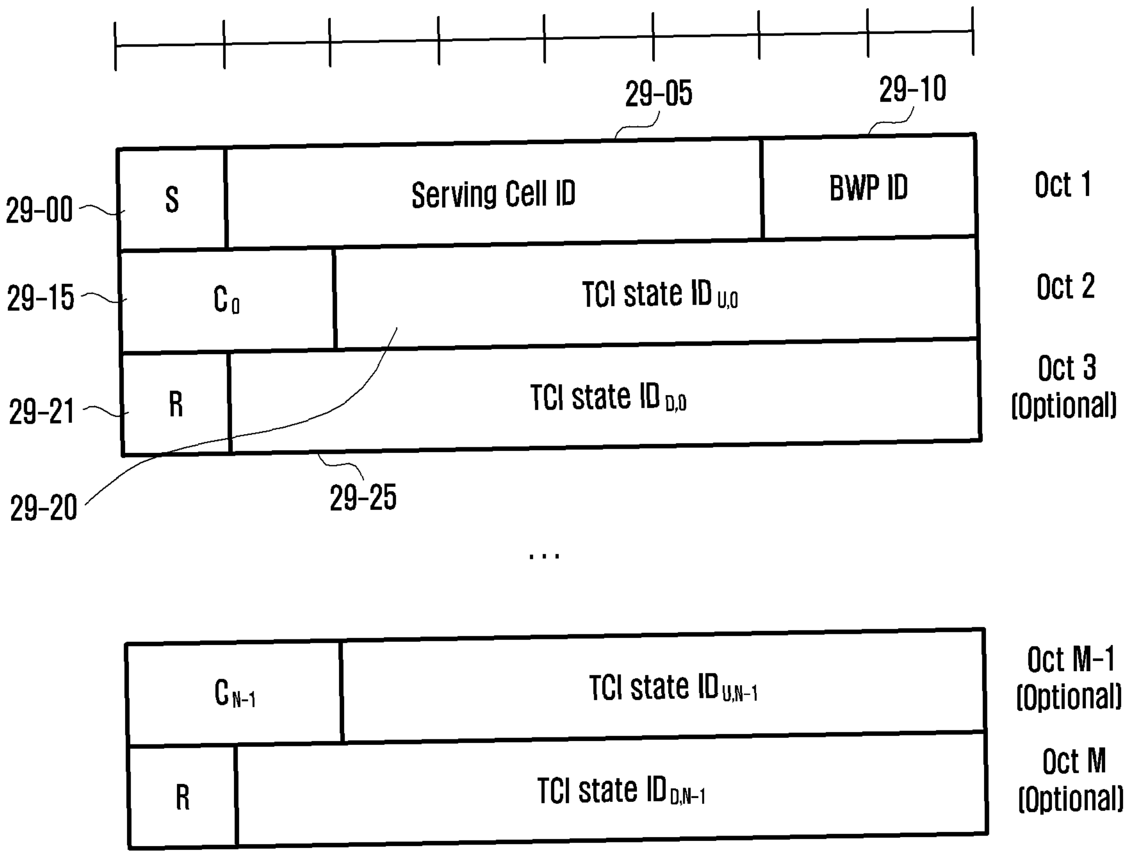
29-05
29-10
29-00
S
Serving Cell ID
BWP ID
Oct 1
29-15
C0
TCI state ID U,0
Oct 2
29-21
R
TCI state ID D,0
Oct 3
(Optional)
29-20
29-25
...
CN-1
TCI state ID U,N-1
Oct M-1
(Optional)
R
TCI state ID D,N-1
Oct M
(Optional)

FIG. 30

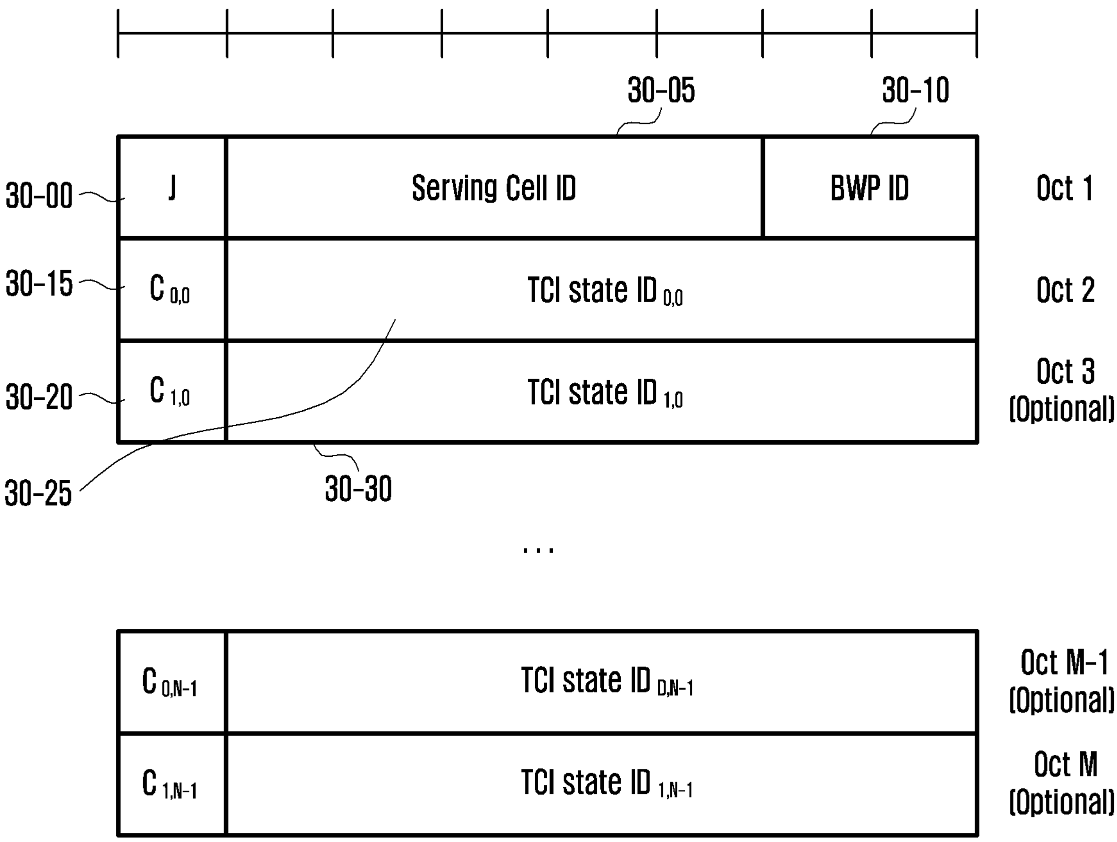
30-05
30-10
30-00
J
Serving Cell ID
BWP ID
Oct 1
30-15
C 0,0
TCI state ID 0,0
Oct 2
30-20
C 1,0
TCI state ID 1,0
Oct 3
(Optional)
30-25
30-30
...
C 0,N-1
TCI state ID 0,N-1
Oct M-1
(Optional)
C 1,N-1
TCI state ID 1,N-1
Oct M
(Optional)

FIG. 31

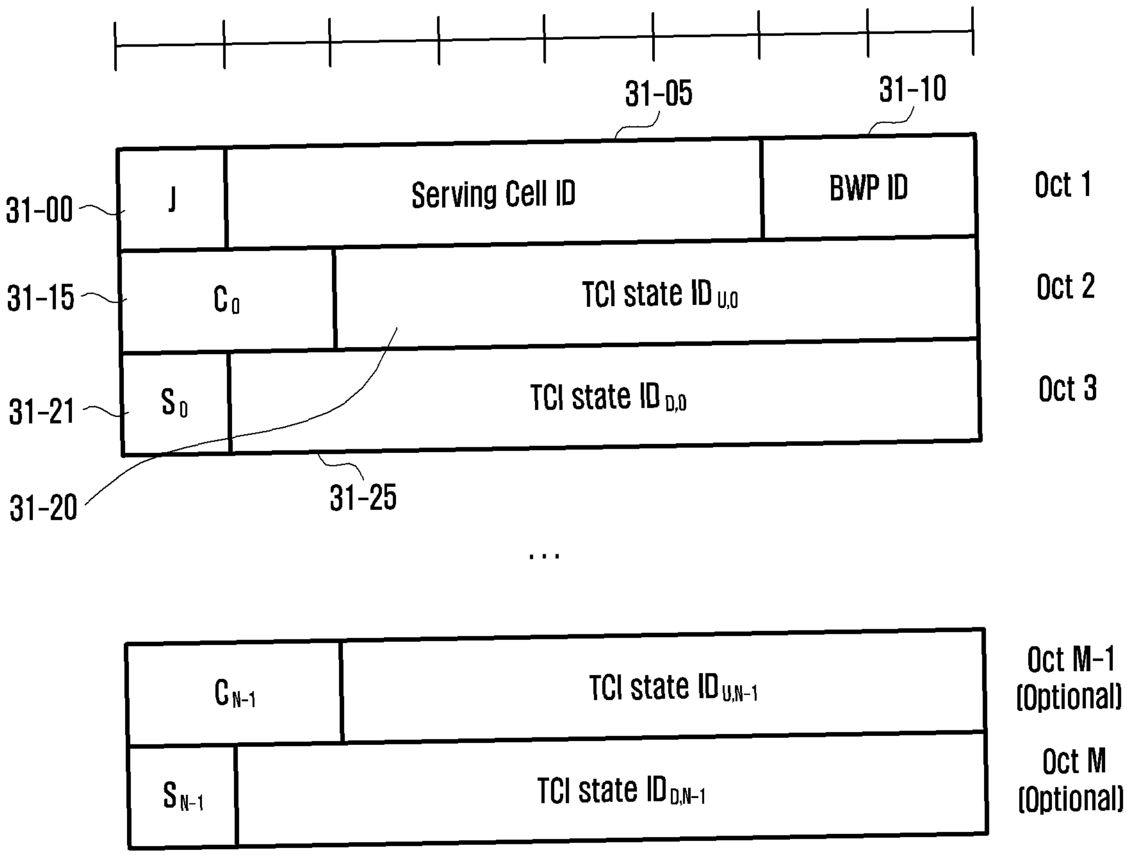
31-05
31-10
31-00
J
Serving Cell ID
BWP ID
Oct 1
31-15
C0
TCI state ID U,0
Oct 2
31-21
S0
TCI state ID D,0
Oct 3
31-20
31-25
...
CN-1
TCI state ID U,N-1
Oct M-1
(Optional)
SN-1
TCI state ID D,N-1
Oct M
(Optional)

FIG. 32

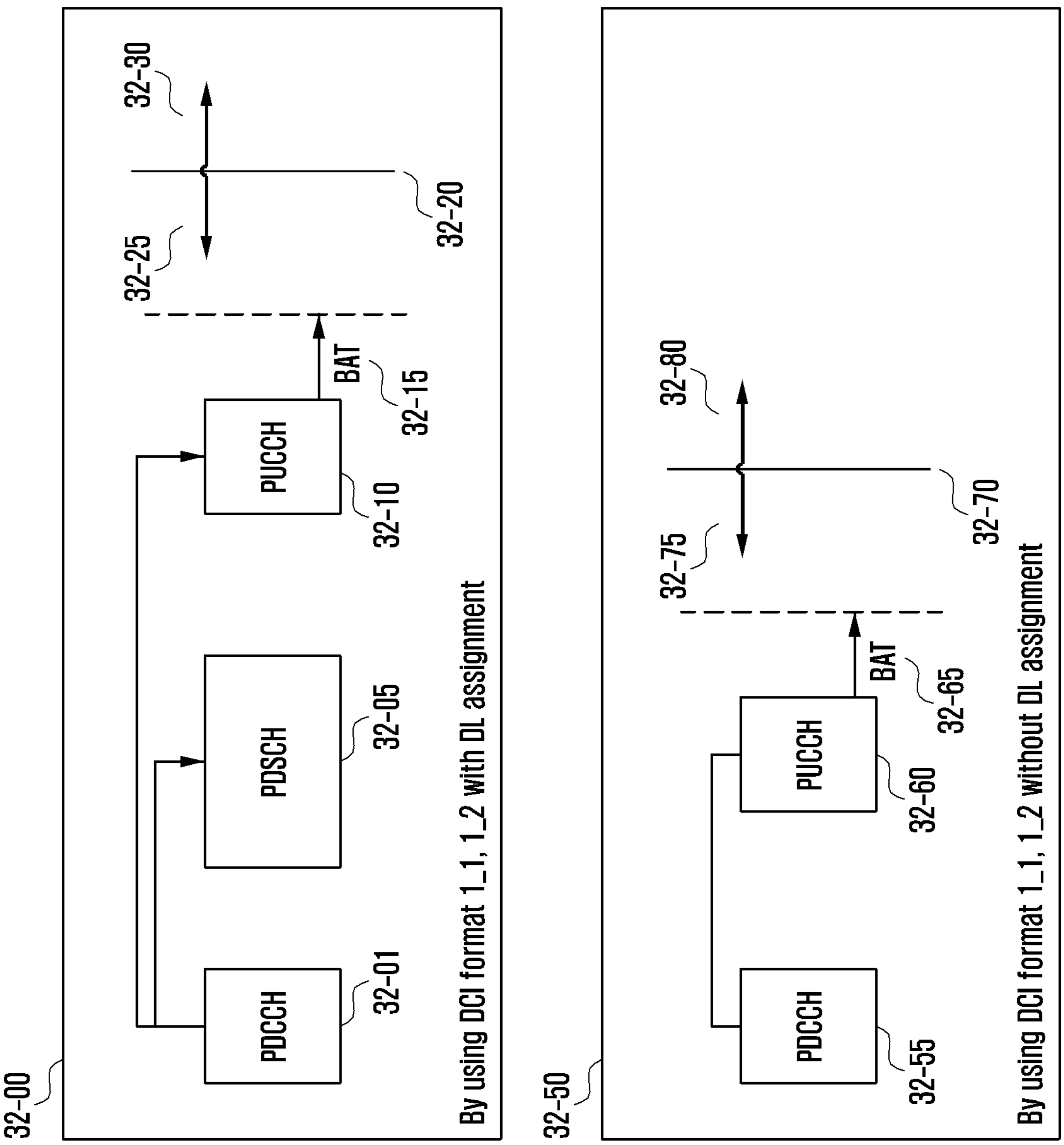
32-00
PDCCH
32-01
PDSCH
32-05
PUCCH
32-10
BAT
32-15
32-20
32-25
32-30
By using DCI format 1_1, 1_2 with DL assignment
32-50
PDCCH
32-55
PUCCH
32-60
BAT
32-65
32-70
32-75
32-80
By using DCI format 1_1, 1_2 without DL assignment

FIG. 33

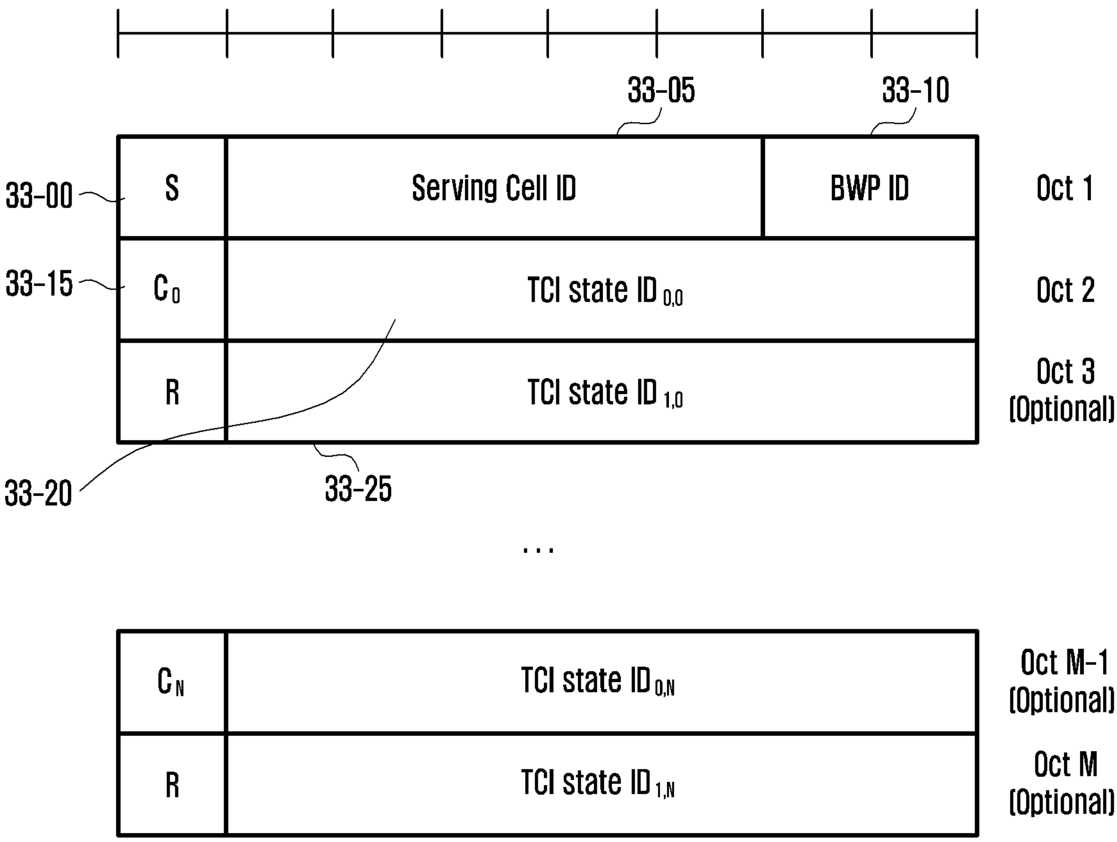
33-05
33-10
33-00
S
Serving Cell ID
BWP ID
Oct 1
33-15
C0
TCI state ID 0,0
Oct 2
R
TCI state ID 1,0
Oct 3 (Optional)
33-20
33-25
...
CN
TCI state ID 0,N
Oct M-1 (Optional)
R
TCI state ID 1,N
Oct M (Optional)

FIG. 34

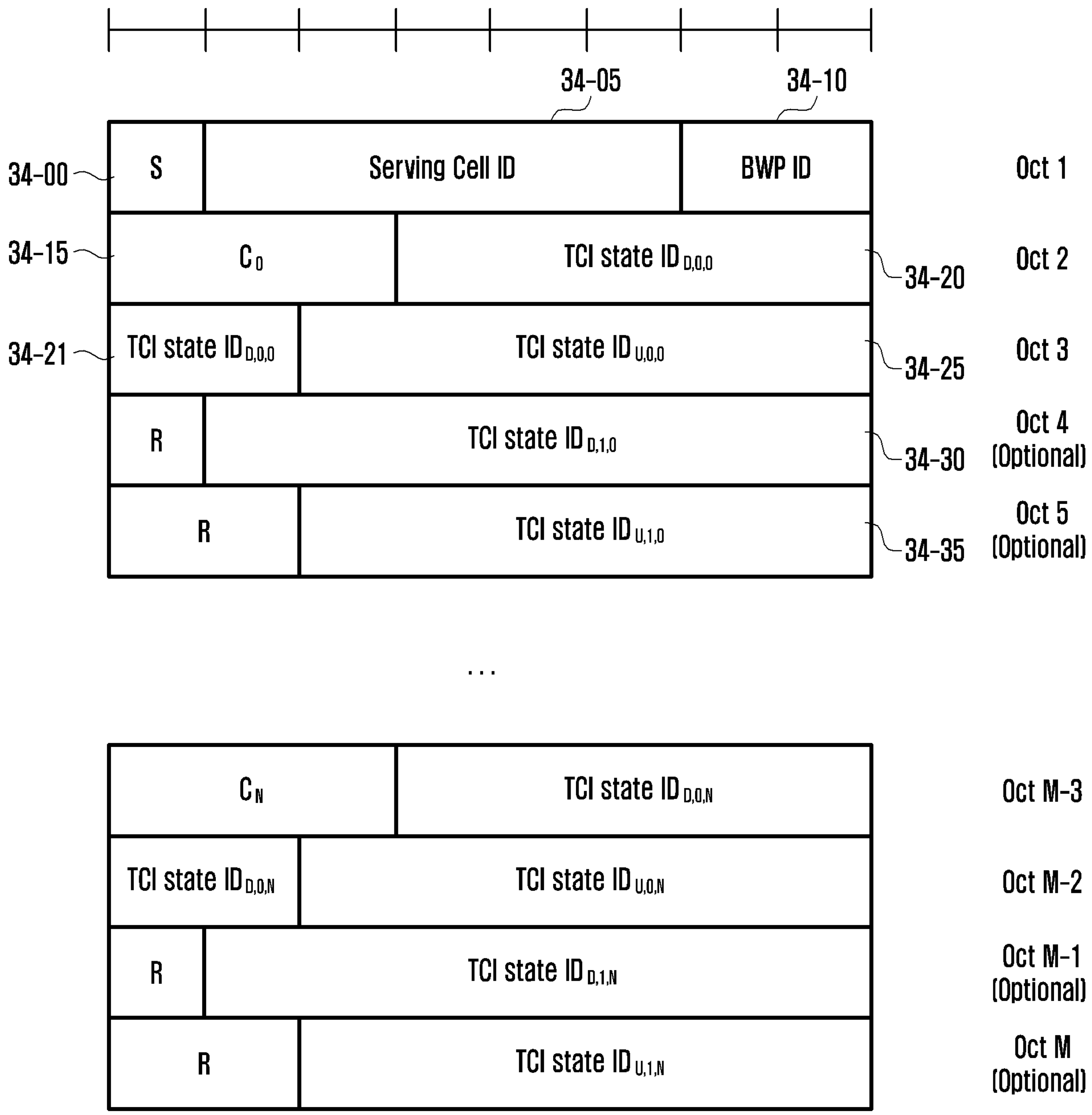
34-05
34-10
34-00
34-15
34-21
34-20
34-25
34-30
34-35
S
Serving Cell ID
BWP ID
Oct 1
C0
TCI state ID D,0,0
Oct 2
TCI state ID D,0,0
TCI state ID U,0,0
Oct 3
R
TCI state ID D,1,0
Oct 4 (Optional)
R
TCI state ID U,1,0
Oct 5 (Optional)
...
CN
TCI state ID D,0,N
Oct M-3
TCI state ID D,0,N
TCI state ID U,0,N
Oct M-2
R
TCI state ID D,1,N
Oct M-1 (Optional)
R
TCI state ID U,1,N
Oct M (Optional)

FIG. 35

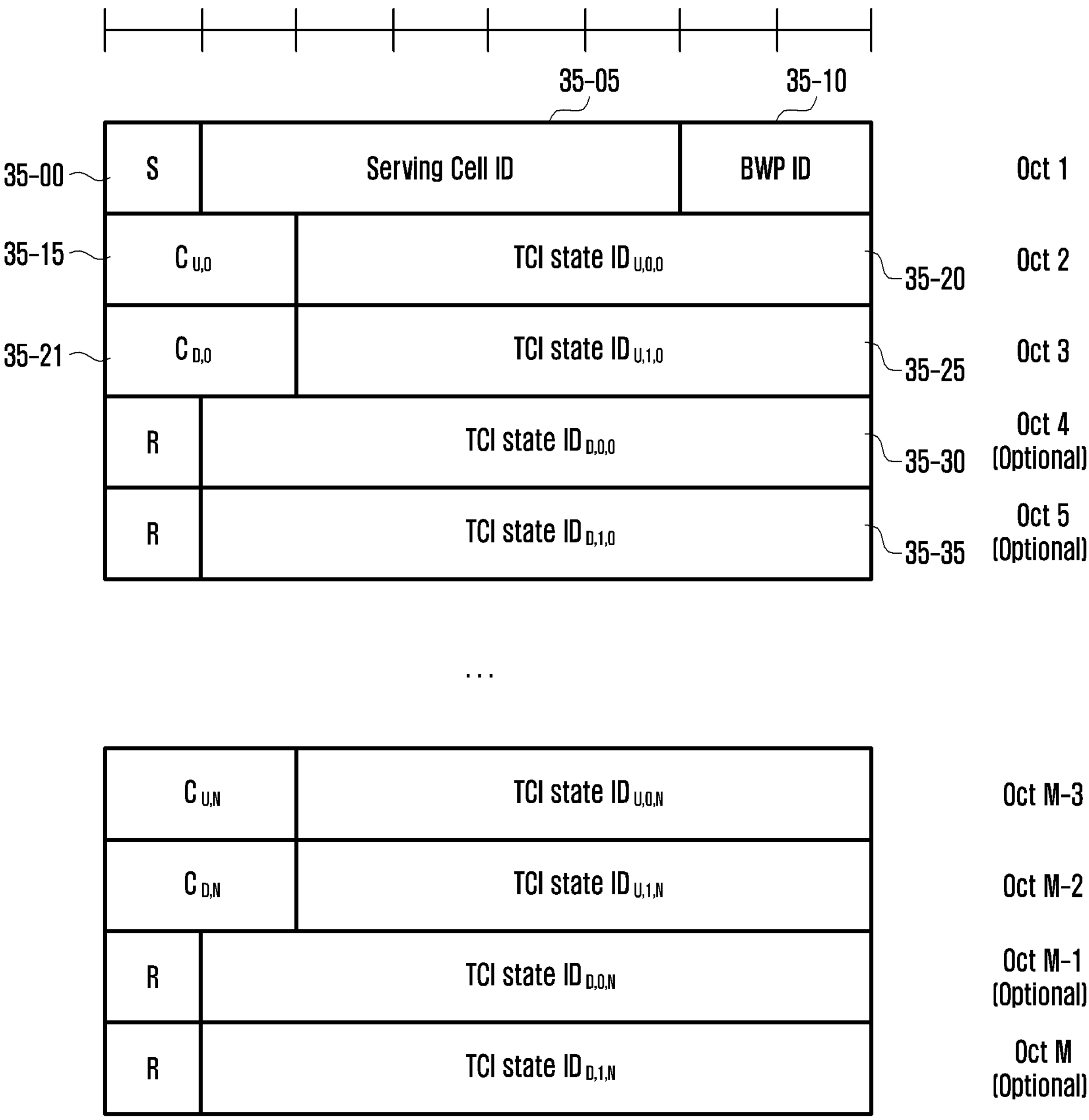
35-05
35-10
35-00
S
Serving Cell ID
BWP ID
Oct 1
35-15
C U,0
TCI state ID U,0,0
35-20
Oct 2
35-21
C D,0
TCI state ID U,1,0
35-25
Oct 3
R
TCI state ID D,0,0
35-30
Oct 4 (Optional)
R
TCI state ID D,1,0
35-35
Oct 5 (Optional)
...
C U,N
TCI state ID U,0,N
Oct M-3
C D,N
TCI state ID U,1,N
Oct M-2
R
TCI state ID D,0,N
Oct M-1 (Optional)
R
TCI state ID D,1,N
Oct M (Optional)

FIG. 36

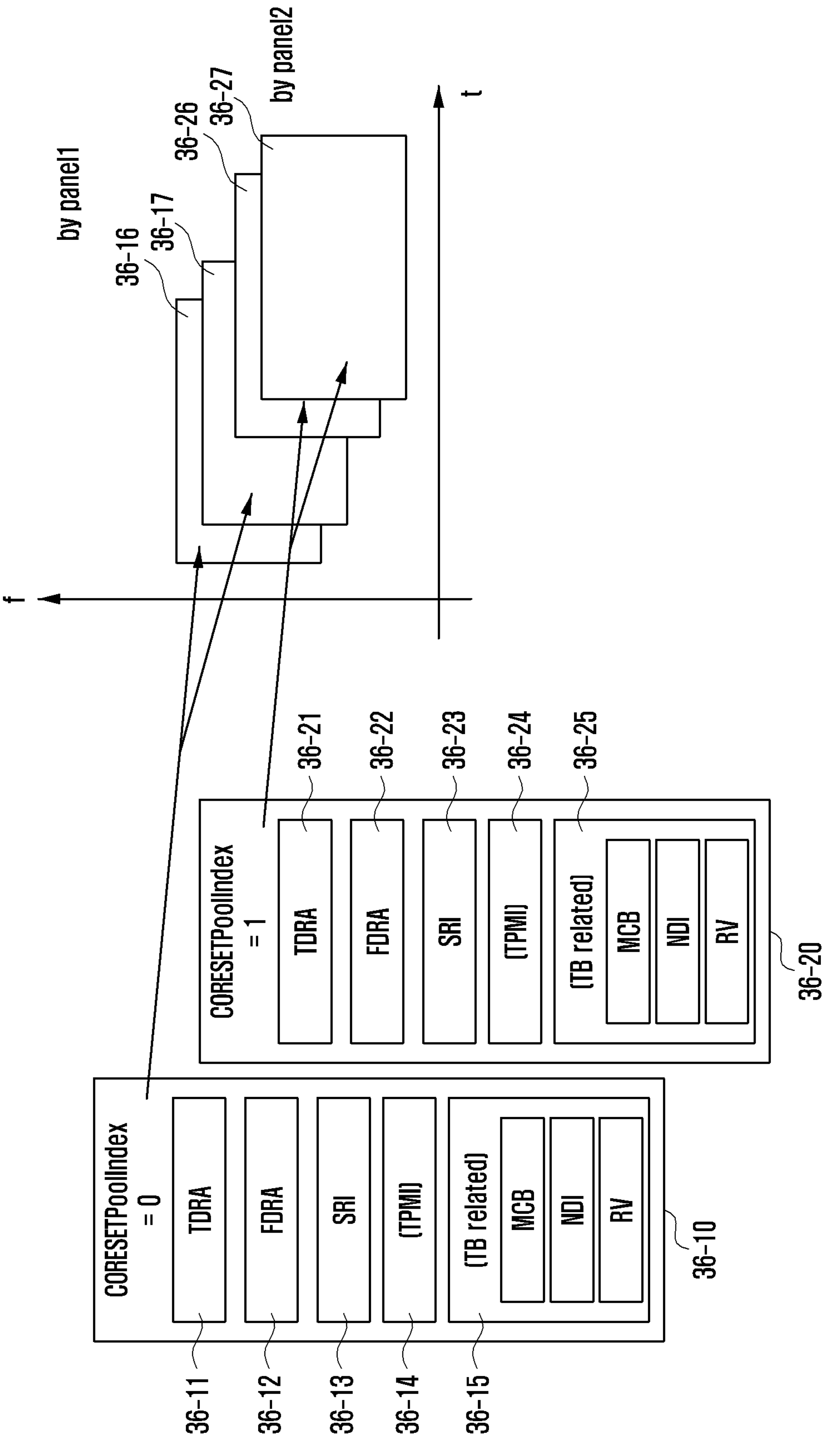

by panel1
by panel2
36-16
36-17
36-26
36-27
f
t
CORESETPoolIndex = 0
TDRA
FDRA
SRI
(TPMI)
(TB related)
MCB
NDI
RV
36-10
36-11
36-12
36-13
36-14
36-15
CORESETPoolIndex = 1
TDRA
FDRA
SRI
(TPMI)
(TB related)
MCB
NDI
RV
36-20
36-21
36-22
36-23
36-24
36-25

FIG. 37

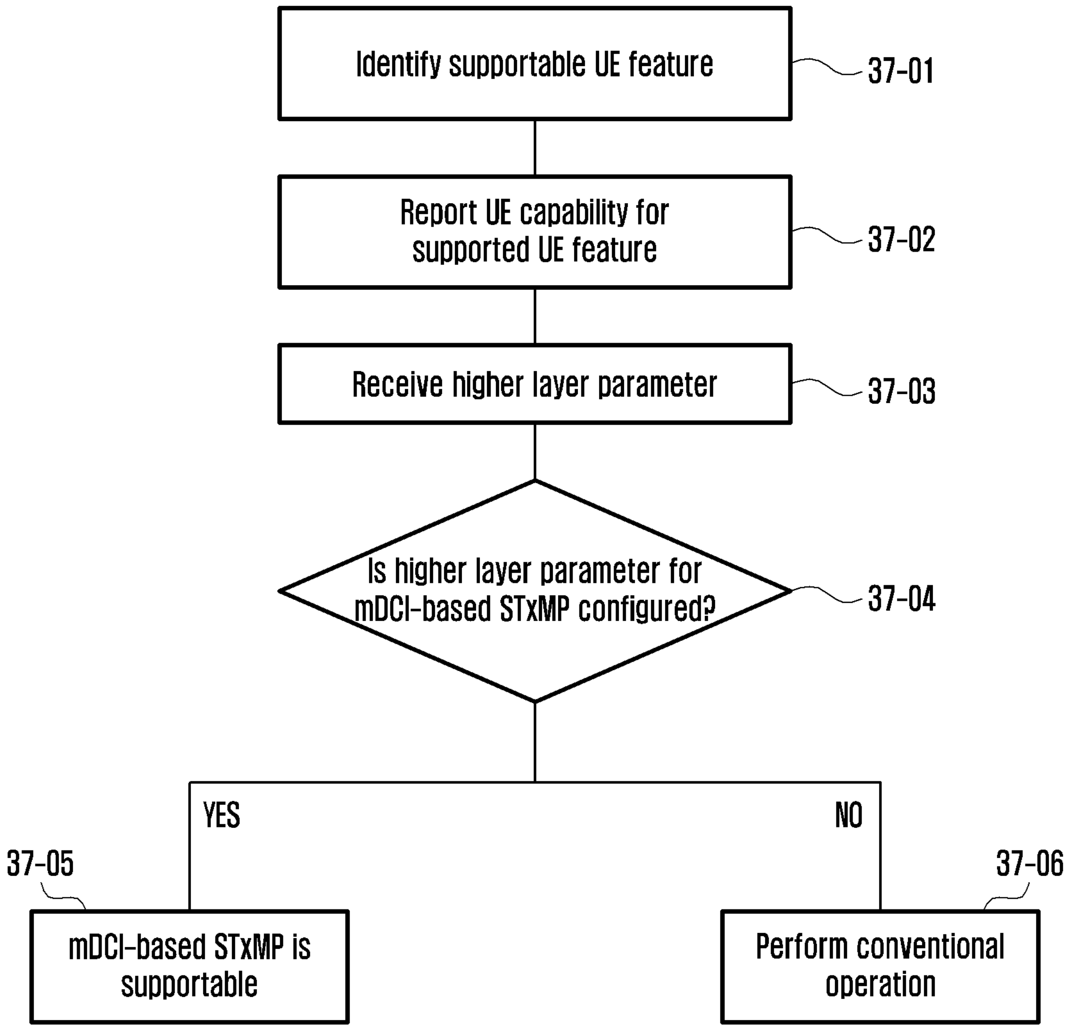
Identify supportable UE feature
37-01
Report UE capability for supported UE feature
37-02
Receive higher layer parameter
37-03
Is higher layer parameter for mDCI-based STxMP configured?
37-04
YES
NO
37-05
mDCI-based STxMP is supportable
37-06
Perform conventional operation

FIG. 38

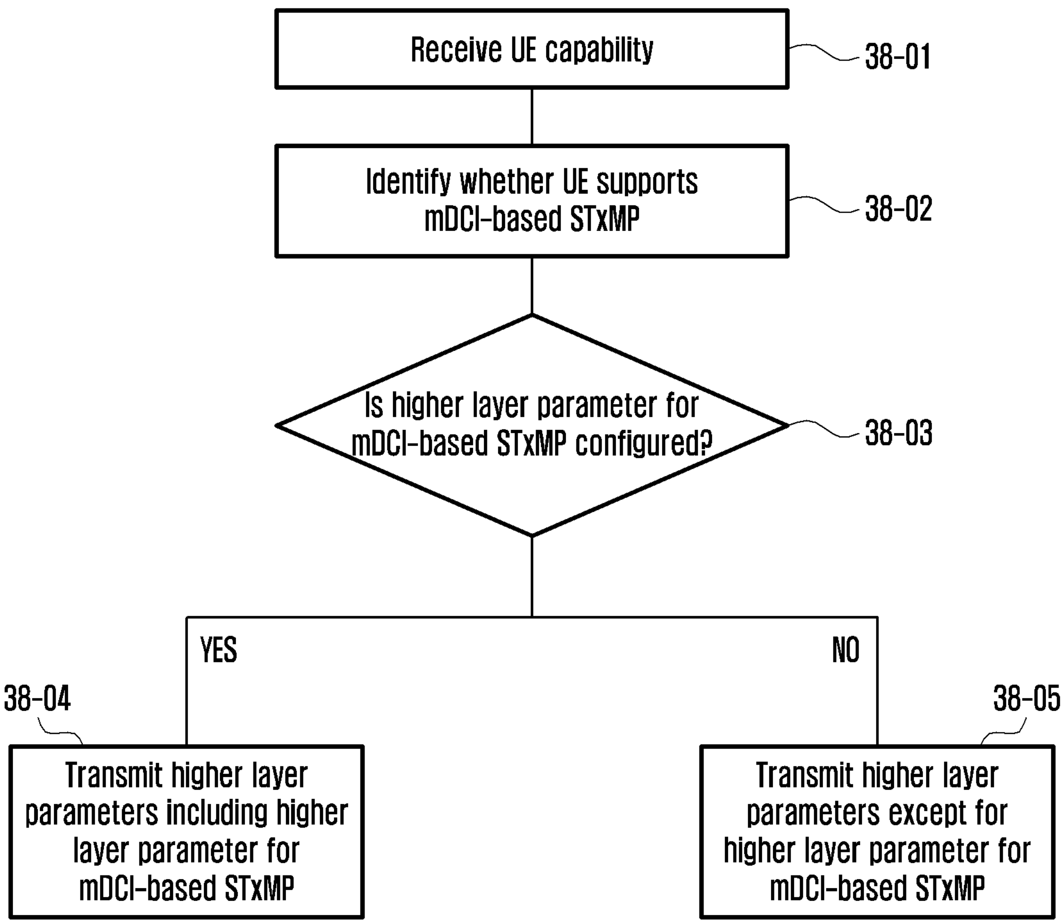
Receive UE capability
38-01
Identify whether UE supports mDCI-based STxMP
38-02
Is higher layer parameter for mDCI-based STxMP configured?
38-03
YES
NO
38-04
Transmit higher layer parameters including higher layer parameter for mDCI-based STxMP
38-05
Transmit higher layer parameters except for higher layer parameter for mDCI-based STxMP

FIG. 39

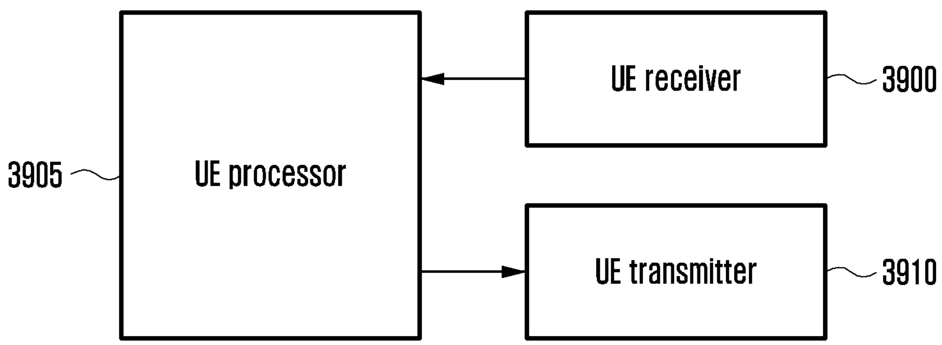

FIG. 40

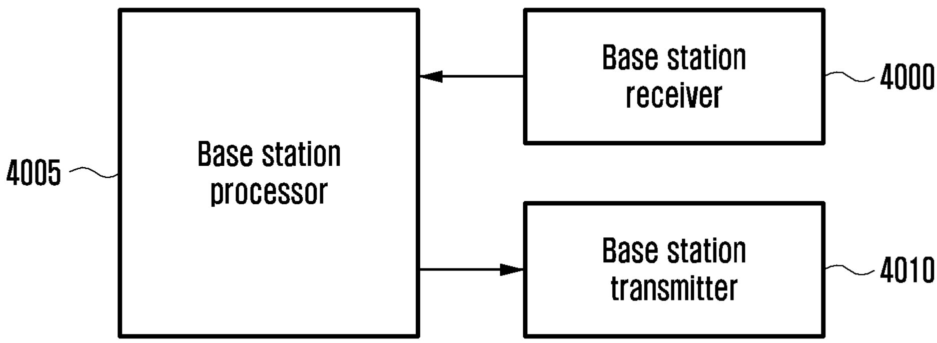
Base station receiver
4000
4005
Base station processor
Base station transmitter
4010

## INTERNATIONAL SEARCH REPORT

International application No. **PCT/KR2023/005473**

**A. CLASSIFICATION OF SUBJECT MATTER**

**H04W 72/12**(2009.01)i; **H04W 72/21**(2023.01)i; **H04W 72/23**(2023.01)i; **H04B 7/0404**(2017.01)i; **H04L 5/00**(2006.01)i; **H04L 1/08**(2006.01)i

According to International Patent Classification (IPC) or to both national classification and IPC

**B. FIELDS SEARCHED**

Minimum documentation searched (classification system followed by classification symbols)

H04W 72/12(2009.01); H04L 1/18(2006.01); H04L 25/02(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: multi DCI(mDCI), multi panel, TRP(transmission and reception point), STxMP(simultaneous transmission with multi-panel), TRP, UE, capability, CORESET pool index, PUSCH, PUCCH, overlap

**C. DOCUMENTS CONSIDERED TO BE RELEVANT**

| Category* | Citation of document, with indication, where appropriate, of the relevant passages | Relevant to claim No. |
|---|---|---|
| Y | WO 2021-020847 A1 (LG ELECTRONICS INC.) 04 February 2021 (2021-02-04) See paragraphs [0499]-[0501]; and figure 13. | 1,5,9,13 |
| A | | 2-4,6-8,10-12,14-15 |
| Y | WO 2021-010705 A1 (LG ELECTRONICS INC.) 21 January 2021 (2021-01-21) See paragraphs [0375]-[0512]; and figure 14. | 1,5,9,13 |
| A | US 2019-0364561 A1 (INTEL CORPORATION) 28 November 2019 (2019-11-28) See paragraphs [0025]-[0053]; and figures 4A-4H. | 1-15 |
| A | MODERATOR (VIVO). Feature lead summary#3 on Enhancements on Multi-TRP inter-cell operation. R1-2202887, 3GPP TSG RAN WG1 #108-e, e-Meeting. 04 March 2022. See section 2. | 1-15 |
| A | INTEL CORPORATION. MIMO Enhancements for Multi-TRP Deployments. R1-2204764, 3GPP TSG RAN WG1 #109-e, e-Meeting. 25 April 2022. See section 2. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/005473**

| Patent document cited in search report | Publication date (day/month/year) | Patent family member(s) | Publication date (day/month/year) |
|---|---|---|---|
| WO 2021-020847 A1 | 04 February 2021 | US 2022-0272674 A1 | 25 August 2022 |
| WO 2021-010705 A1 | 21 January 2021 | None | |
| US 2019-0364561 A1 | 28 November 2019 | US 11160061 B2 | 26 October 2021 |
| | | US 2022-0174662 A1 | 02 June 2022 |

Form PCT/ISA/210 (patent family annex) (July 2022)